(19) Europäisches Patentamt
European Patent Office
Office européen des brevets

(11) **EP 2 621 177 A1**

(12) **EUROPEAN PATENT APPLICATION**
published in accordance with Art. 153(4) EPC

(43) Date of publication:
**31.07.2013 Bulletin 2013/31**

(51) Int Cl.:
*H04N 13/00* *(2006.01)*    *H04N 7/173* *(2011.01)*

(21) Application number: **12826835.6**

(22) Date of filing: **16.08.2012**

(86) International application number:
**PCT/JP2012/070863**

(87) International publication number:
**WO 2013/031549 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2011 JP 2011191141**
**16.09.2011 JP 2011203833**

(71) Applicant: **Sony Corporation**
**Tokyo 108-0075 (JP)**

(72) Inventor: **TSUKAGOSHI, Ikuo**
**Tokyo 108-0075 (JP)**

(74) Representative: **Ealey, Douglas Ralph et al**
**D Young & Co LLP**
**120 Holborn**
**London EC1N 2DY (GB)**

(54) **TRANSMISSION DEVICE, TRANSMISSION METHOD AND RECEPTION DEVICE**

(57) Disparity information is transmitted such that reception processing of a legacy 2D-compatible receiving apparatus can be prevented from being interrupted.

A multiplexed data stream includes a private data stream including superimposition information data and disparity information. Service identification information indicating a separate service is added to each of the superimposition information data and the disparity information in the private data stream. The legacy 2D-compatible receiving apparatus of a receiving side can efficiently acquire only the superimposition information data from the private data stream based on the service identification information. That is, since the legacy 2D-compatible receiving apparatus can skip the disparity information based on the service identification information, the reception processing of the legacy 2D-compatible receiving apparatus can be prevented from being interrupted by the transmission of the disparity information.

## FIG. 11

**Description**

TECHNICAL FIELD

The present technology relates to a transmitting apparatus, a transmitting method, and a receiving apparatus. In particular, the present technology relates to a transmitting apparatus or the like, which transmits superimposition information data and disparity information together with left-eye image data and right-eye image data constituting a stereoscopic image.

BACKGROUND ART

For example, Patent Document 1 has proposed a transmission scheme using television airwaves of stereoscopic image data. In this transmission scheme, stereoscopic image data having left-eye image data and right-eye image data are transmitted to display a stereoscopic image using a binocular disparity.

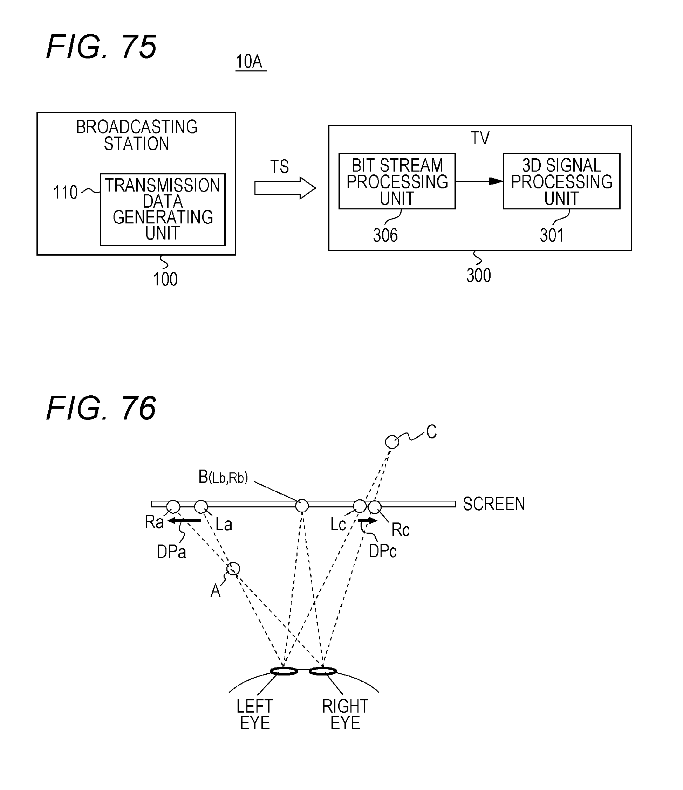

Fig. 76 illustrates the relation between the display positions of left and right images of an object (thing) on a screen and the reproduction position of a stereoscopic image thereof, in a stereoscopic image display using a binocular disparity. For example, as for an object A of which the left image La and the right image Ra are displayed respectively at the right side and the left side on the screen as illustrated, since the left and right lines of sight intersect with each other in front of a screen surface, the reproduction position of a stereoscopic image thereof is in front of the screen surface. DPa denotes a disparity vector of the object A in the horizontal direction.

Also, for example, as for an object B of which the left image Lb and the right image Rb are respectively displayed at the same position on the screen as illustrated, since the left and right lines of sight intersect with each other at the screen surface, the reproduction position of a stereoscopic image thereof is on the screen surface. In addition, for example, as for an object C of which the left image Lc and the right image Rc are displayed respectively at the left side and the right side on the screen as illustrated, since the left and right lines of sight intersect with each other inside the screen surface, the reproduction position of a stereoscopic image thereof is inside the screen surface. DPc denotes a disparity vector of the object C in the horizontal direction.

CITATION LIST

PATENT DOCUMENT

Patent Document 1: Japanese Patent Application Laid-Open No. 2005-6114

SUMMARY OF THE INVENTION

PROBLEMS TO BE SOLVED BY THE INVENTION

As described above, in a stereoscopic image display, a viewer usually perceives the perspective of a stereoscopic image by using a binocular disparity. Also, it is expected that superimposition information superimposed on an image, such as a caption, will be rendered in conjunction with a stereoscopic image display not only as a two-dimensional (2D) spatial depth feel but also as a three-dimensional (3D) depth feel. For example, in the case where an image and a caption are displayed in a superimposed (overlaid) manner but not displayed in front of a thing (object) in an image closest in terms of the perspective, a viewer may feel a perspective discrepancy.

Thus, it is considered that disparity information between a left-eye image and a right-eye image is transmitted together with data of superimposition information and a receiving side provides a disparity between left-eye superimposition information and right-eye superimposition information. In this manner, disparity information is meaningful information in a receiving apparatus capable of displaying a stereoscopic image. On the other hand, the disparity information is unnecessary a legacy 2D-compatible receiving apparatus. In the 2D-compatible receiving apparatus, there is a need to take some kinds of measures to prevent normal reception processing from being interrupted by transmission of the disparity information.

An object of the present technology is to prevent reception processing of a legacy 2D-compatible receiving apparatus from being interrupted by transmission of disparity information. Also, an object of the present technology is to enable a 3D-compatible receiving apparatus to efficiently and accurately acquire the corresponding disparity information together with the superimposition information data.

SOLUTIONS TO PROBLEMS

A concept of the present technology is a transmitting apparatus including:

an image data output unit configured to output left-eye image data and right-eye image data constituting a stereoscopic image;

a superimposition information data output unit configured to output superimposition information data to be superimposed on an image by the left-eye image data and the right-eye image data;

a disparity information output unit configured to output disparity information for providing a disparity by shifting the superimposition information to be superimposed on the image by the left-eye image data and the right-eye image data; and

a data transmitting unit configured to transmit a multiplexed data stream including a video data stream including the image data and a private data stream including the superimposition information data and the disparity information, wherein service identification information indicating a separate service is added to each of the superimposition information data and the disparity information in the private data stream.

In the present technology, the image data output unit outputs the left-eye image data and the right-eye image data constituting the stereoscopic image. The superimposition information data output unit outputs superimposition information data to be superimposed on an image by the left-eye image data and the right-eye image data. Herein, the superimposition information includes a caption, graphics, a text, and the like that are superimposed on the image. The disparity information output unit outputs disparity information for providing a disparity by shifting the superimposition information to be superimposed on the image by the left-eye image data and the right-eye image data.

The data transmitting unit transmits the multiplexed data stream. The multiplexed data stream includes a video data stream including image data, and a private data stream including superimposition information data and disparity information. Herein, service identification information indicating a separate service is added to each of the superimposition information data and the disparity information in the private data stream.

In this manner, in the present technology, the superimposition information data and the disparity information are included in the private data stream, but the service identification information indicating a separate service is added to the superimposition information data and the disparity information. Therefore, a legacy 2D-compatible receiving apparatus of a receiving side can efficiently acquire only the superimposition information data from the private data stream based on the service identification information. That is, since the legacy 2D-compatible receiving apparatus can skip the disparity information based on the service identification information, the reception processing of the legacy 2D-compatible receiving apparatus can be prevented from being interrupted by the transmission of the disparity information.

Also, in the present technology, for example, the first service identification information added to the superimposition information data and the second service identification information added to the disparity information may have a unique relation therebetween, a descriptor corresponding to the private data stream may be inserted into the multiplexed data stream, and the descriptor may describe identification information corresponding to the first service identification information and may not describe identification information corresponding to the second service identification information.

Herein, for example, the superimposition information data may be DVB subtitle data, the descriptor may be a subtitle descriptor, and the identification information corresponding to the first service identification information may be a composition page ID. Also, as an example of the unique relation, for example, a value of the second service identification information may equal to a value of the first service identification information plus a predetermined value (offset value).

The legacy 2D-compatible receiving apparatus can efficiently acquire only the superimposition information data from the private data stream based on the identification information corresponding to the first service identification information described in the descriptor. That is, since the legacy 2D-compatible receiving apparatus has no identification information corresponding to the second service identification information in the descriptor, the legacy 2D-compatible receiving apparatus skips the disparity information included in the private data stream. Accordingly, the reception processing of the legacy 2D-compatible receiving apparatus can be prevented from being interrupted by the transmission of the disparity information. Also, a 3D-compatible receiving apparatus can efficiently and accurately acquire the superimposition information data and the corresponding disparity information from the private data stream based on the identification information corresponding to the first service identification information.

Also, in the present technology, for example, a descriptor corresponding to the private data stream may be inserted into the multiplexed data stream, and the descriptor may describe first identification information corresponding to the first service identification information added to the superimposition information data and describe second identification information corresponding to the second service identification information added to the disparity information, in distinction from the first identification information. Herein, for example, the superimposition information data may be DVB subtitle data, the descriptor may be a subtitle descriptor, the first identification information may be a composition page ID, and the second identification information may be an ancillary page ID. Also, for example, the superimposition information data may be DVB subtitle data, the descriptor may be a subtitle descriptor, and the first identification information and the second identification information may be composition page IDs.

The legacy 2D-compatible receiving apparatus can efficiently acquire only the superimposition information data from the private data stream based on the first identification information corresponding to the first service identification information described in the descriptor. That is, the legacy 2D-compatible receiving apparatus can skip the disparity information included in the private data stream. Accordingly, the reception processing of the legacy 2D-compatible receiving apparatus can be prevented from being interrupted by the transmission of the disparity information. Also, the 3D-compatible receiving apparatus can efficiently and accurately acquire the superimposition information data and the corresponding disparity information from the private data stream based on the first identification information corresponding to the first service identification information and the second identification information corresponding to the second service identification information.

Also, in the present technology, for example, a descriptor corresponding to the private data stream may be inserted into the multiplexed data stream, and the descriptor may describe first type information indicating that information type of the superimposition information data is a first type in association with first service identification information added to the superimposition information data in the private data stream and describes type information indicating that information type of the disparity information is a second type different from the first type, in association with second service identification information added to the disparity information in the private data stream. In this case, since the legacy 2D-compatible receiving apparatus of the receiving side can refer to the type information in addition to the service identification information, the legacy 2D-compatible receiving apparatus can more securely skip the disparity information.

Also, in the present technology, for example, a descriptor corresponding to the private data stream may be inserted into the multiplexed data stream, and the descriptor may describe first language information indicating a predetermined language in association with first service identification information added to the superimposition information data in the private data stream and describe second language information indicating a non-language in association with second service identification information added to the disparity information in the private data stream. For example, the language information representing a non-language may be "zxx" representing a non-language of an ISO language code, or any one of language codes included in a space from "qaa" to "qrz" of the ISO language code. In this case, since the legacy 2D-compatible receiving apparatus of the receiving side can refer to the language information in addition to the service identification information, the legacy 2D-compatible receiving apparatus can more securely skip the disparity information.

Also, in the present technology, for example, the superimposition information data may be DVB (Digital Video Broadcasting) subtitle data, a first page ID may be allocated as the service identification information to a first segment including the superimposition information data in the private data stream, and a second page ID may be allocated as the service identification information to a second segment including the disparity information in the private data stream. In this case, for example, a value of the second page ID may be equal to a value of the first page ID plus a predetermined value. Accordingly, on the page ID, the first segment including the superimposition information data can be associated with the second segment including the disparity information.

Also, in the present technology, for example, a subtitle descriptor corresponding to the private data stream may be inserted into the multiplexed data stream, and the subtitle descriptor may describe first subtitle type information indicating a first type in association with the first page ID and describe second subtitle type information indicating a second type different from the first type in association with the second page ID.

Also, in the present technology, for example, a subtitle descriptor corresponding to the private data stream may be inserted into the multiplexed data stream, and the subtitle descriptor may describe first language information indicating a predetermined language in association with the first page ID and describe second language information indicating a non-language in association with the second page ID.

Also, in the present technology, for example, the multiplexed data stream may include a plurality of private data stream including disparity information and superimposition information data corresponding to a single language service.

Also, in the present technology, for example, the multiplexed data stream may include a private data stream including disparity information and superimposition information data corresponding respectively to a plurality of language services. In this case, the disparity information corresponding to the plurality of language services may be shared. For example, the superimposition information data may be DVB subtitle data, and the disparity information corresponding to the plurality of language services may be operated as an ancillary page. Accordingly, the stream bandwidth can be effectively used.

Another concept of the present technology is a receiving apparatus including:

a data receiving unit configured to receive a multiplexed data stream including a video data stream including left-eye image data and right-eye image data constituting a stereoscopic image, and a private data stream including superimposition information data to be superimposed on an image by the left-eye image data and the right-eye image data and disparity information for providing a disparity by shifting the superimposition information to be superimposed on the image by the left-eye image data and the right-eye image data;

a first decoding unit configured to extract the video data stream from the multiplexed data stream and decode the video data stream extracted; and

a second decoding unit configured to extract the private data stream from the multiplexed data stream and decode the private data stream extracted,

wherein service identification information indicating a separate service is added to each of the superimposition information data and the disparity information in the private data stream, and

the second decoding unit acquires the superimposition information data or the superimposition information data and the disparity information from the private data stream based on the service identification information.

In the present technology, the data receiving unit receives the multiplexed data stream including the video data stream and the private data stream. The video data stream includes the left-eye image data and the right-eye image data constituting the stereoscopic image. Also, the private data stream includes the disparity information for providing a disparity by shifting the superimposition information to be superimposed on the image by the left-eye image data and the right-eye image data.

The first decoding unit extracts the video data stream from the multiplexed data stream and decodes the video data stream extracted. Also, the second decoding unit extracts the private data stream from the multiplexed data stream and decodes the private data stream extracted. Herein, service identification information indicating a separate service is added to each of the superimposition information data and the disparity information in the private data stream. The second decoding unit acquires the superimposition information data or the superimposition information data and the disparity information from the private data stream based on the service identification information.

In this manner, in the present technology, the superimposition information data and the disparity information are included in the private data stream, but the service identification information indicating a separate service is added to the superimposition information data and the disparity information. Therefore, a legacy 2D-compatible receiving apparatus of a receiving side can efficiently acquire only the superimposition information data from the private data stream based on the service identification information. That is, since the legacy 2D-compatible receiving apparatus can skip the disparity information based on the service identification information, the reception processing of the legacy 2D-compatible receiving apparatus can be prevented from being interrupted by the transmission of the disparity information. Also, a 3D-compatible receiving apparatus of the receiving side can efficiently acquire both the superimposition information data and the disparity information from the private data stream based on the service identification information.

Also, in the present technology, for example, a descriptor corresponding to the private data stream may be inserted into the multiplexed data stream, the descriptor may describe first type information indicating that information type of the superimposition information data is a first type in association with first service identification information added to the superimposition information data in the private data stream and describe type information indicating that information type of the disparity information is a second type different from the first type, in association with second service identification information added to the disparity information in the private data stream, and the second decoding unit may acquire the superimposition information data or the superimposition information data and the disparity information from the private data stream based on the type information in addition to the service identification information. In this case, since the legacy 2D-compatible receiving apparatus of the receiving side can refer to the type information in addition to the service identification information, the legacy 2D-compatible receiving apparatus can more securely skip the disparity information.

Also, in the present technology, for example, a descriptor corresponding to the private data stream may be inserted into the multiplexed data stream, the descriptor may describe first language information indicating a predetermined language in association with first service identification information added to the superimposition information data in the private data stream and describe second language information indicating a non-language in association with second service identification information added to the disparity information in the private data stream, and the second decoding unit may acquire the superimposition information data or the superimposition information data and the disparity information from the private data stream based on the language information in addition to the service identification information. In this case, since the legacy 2D-compatible receiving apparatus of the receiving side can refer to the language information in addition to the service identification information, the legacy 2D-compatible receiving apparatus can more securely skip the disparity information.

Also, another concept of the present technology is a receiving apparatus including:

a data receiving unit configured to receive a multiplexed data stream including a video data stream including left-eye image data and right-eye image data constituting a stereoscopic image, and a private data stream including superimposition information data to be superimposed on an image by the left-eye image data and the right-eye image data and disparity information for providing a disparity by shifting the superimposition information to be superimposed on the image by the left-eye image data and the right-eye image data;

a first decoding unit configured to extract the video data stream from the multiplexed data stream and decode the video data stream extracted; and

a second decoding unit configured to extract the private data stream from the multiplexed data stream and decode the private data stream extracted,

wherein service identification information indicating a separate service is added to each of the superimposition information data and the disparity information in the private data stream,

the first service identification information added to the superimposition information data and the second service identification information added to the disparity information have a unique relation therebetween,

a descriptor corresponding to the private data stream is inserted into the multiplexed data stream,

the descriptor describes identification information corresponding to the first service identification information and does not describe identification information corresponding to the second service identification information, and

the second decoding unit acquires the superimposition information data and the disparity information from the private data stream based on the unique relation and the identification information corresponding to the first service identification information described in the descriptor.

In the present technology, the data receiving unit receives the multiplexed data stream including the video data stream and the private data stream. The video data stream includes the left-eye image data and the right-eye image data constituting the stereoscopic image. Also, the private data stream includes the disparity information for providing a disparity by shifting the superimposition information to be superimposed on the image by the left-eye image data and the right-eye image data.

The first decoding unit extracts the video data stream from the multiplexed data stream and decodes the video data stream extracted. Also, the second decoding unit extracts the private data stream from the multiplexed data stream and decodes the private data stream extracted.

Herein, service identification information indicating a separate service is added to each of the superimposition information data and the disparity information in the private data stream. In this case, the first service identification information added to the superimposition information data and the second service identification information added to the disparity information have a unique relation therebetween. Also, as an example of the unique relation, for example, a value of the second service identification information is equal to a value of the first service identification information plus a predetermined value (offset value).

Also, a descriptor corresponding to the private data stream is inserted into the multiplexed data stream. The descriptor describes identification information corresponding to the first service identification information, but does not describe identification information corresponding to the second service identification information. In this manner, since a legacy 2D-compatible receiving apparatus has no identification information corresponding to the second service identification information, the legacy 2D-compatible receiving apparatus is expected to skip the disparity information included in the private data stream.

The second decoding unit acquires the superimposition information data and the disparity information from the private data stream based on the unique relation and the identification information corresponding to the first service identification information described in the descriptor. In this case, since the first service identification information is recognized directly from the identification information described in the descriptor and also the identification information described in the descriptor is processed according to the unique relation (addition of an offset value or the like), the second service identification information can be recognized. Accordingly, the acquisition of the disparity information together with the superimposition information data can be performed efficiently and accurately.

EFFECTS OF THE INVENTION

According to the present technology, reception processing of the legacy 2D-compatible receiving apparatus can be prevented from being interrupted by transmission of the disparity information.

BRIEF DESCRIPTION OF DRAWINGS

Fig. 1 is a block diagram illustrating an example of a configuration of an image transmitting/receiving system according to an embodiment.

Fig. 2 is a block diagram illustrating an example of a configuration of a transmission data generating unit in a broadcasting station.

Fig. 3 is a diagram illustrating image data of a 1920x1080 pixel format.

Fig. 4 is a diagram for describing a Top & Bottom scheme, a Side By Side scheme, and a Frame Sequential scheme that are stereoscopic image data (3D image data) transmitting schemes.

Fig. 5 is a diagram for describing an example of detecting a disparity vector of a right-eye image with respect to a left-eye image.

Fig. 6 is a diagram for describing the obtainment of a disparity vector by a block matching scheme.

Fig. 7 is a diagram illustrating an example of an image in the case where a value of a disparity vector of each pixel is used as a luminance value of each pixel.

Fig. 8 is a diagram illustrating an example of a disparity vector of each block.

Fig. 9 is a diagram for describing downsizing processing performed by a disparity information creating unit of the transmission data generating unit.

Fig. 10 is a diagram illustrating an example of a region defined on an image in subtitle data and a subregion defined in the region.

Fig. 11 is a diagram illustrating an example of a configuration of a subtitle data stream including a DSS segment, which is included in a transport stream TS.

Fig. 12 a diagram illustrating an example of a configuration of the transport stream TS.

Fig. 13 is a diagram illustrating a structure of a PCS (page_composition_segment) constituting subtitle data.

Fig. 14 is a diagram illustrating the correspondence relation between each value of segment_type and a segment type.

Fig. 15 is a diagram for describing information (Component_type = 0x15, 0x25) representing a 3D subtitle format.

Fig. 16 is a diagram for describing a subtitle descriptor (Subtitling_descriptor) and the like inserted into the transport stream TS.

Fig. 17 is a diagram for describing a subtitle descriptor (Subtitling_descriptor) and the like inserted into the transport stream TS.

Fig. 18 is a diagram illustrating the extraction of an ISO language code (ISO 639-2 Code) list.

Fig. 19 is a diagram illustrating an example of a stream configuration of the subtitle data stream.

Fig. 20 is a diagram illustrating an example of a syntax of the subtitle descriptor (Subtitling_descriptor).

Fig. 21 is a diagram illustrating an example of updating disparity information by using an interval period and the case where the interval period is fixed and is equal to an update period.

Fig. 22 is a diagram illustrating an example of updating disparity information by using an interval period and an example of updating disparity information in the case where the interval period is set to be short.

Fig. 23 is a diagram illustrating an example of a stream configuration of the subtitle data stream including the DSS segment.

Fig. 24 is a diagram illustrating an example of updating disparity information in the case of sequentially transmitting DSS segments.

Fig. 25 is a diagram illustrating an example of updating disparity information, in which an update frame interval is expressed in a multiple of an interval duration (ID) as a unit period.

Fig. 26 is a diagram illustrating an example of displaying subtitles, in which two regions as caption display regions are included in a page area (Area for Page_default).

Fig. 27 is a diagram illustrating an example of the disparity information curve of each region and page in the case where disparity information in units of a region and disparity information in units of a page including all regions are included in a DSS segment, as disparity information that is sequentially updated in a caption display period.

Fig. 28 is a diagram illustrating a transmission structure of disparity information of each page and region.

Fig. 29 is a diagram (1/3) illustrating an example of a syntax of the DSS.

Fig. 30 is a diagram (2/3) illustrating an example of a syntax of the DSS.

Fig. 31 is a diagram (3/3) illustrating an example of a syntax of the DSS.

Fig. 32 is a diagram (1/4) illustrating the main data definition contents (semantics) of the DSS.

Fig. 33 is a diagram (2/4) illustrating the main data definition contents (semantics) of the DSS.

Fig. 34 is a diagram (3/4) illustrating the main data definition contents (semantics) of the DSS.

Fig. 35 is a diagram (4/4) illustrating the main data definition contents (semantics) of the DSS.

Fig. 36 is a diagram illustrating the concept of broadcast reception in the case where a set-top box and a television receiver are 3D-compatible devices.

Fig. 37 is a diagram schematically illustrating extraction processing of only a 2D stream in the set-top box (2D-compatible device).

Fig. 38 is a diagram illustrating the summarization of the concept of broadcast reception in the case where a receiver is a legacy 2D-compatible device (2D receiver) and in the case where a receiver is a 3D-compatible device (3D receiver) (for SBS).

Fig. 39 is a diagram illustrating the summarization of the concept of broadcast reception in the case where a receiver is a legacy 2D-compatible device (2D receiver) and in the case where a receiver is a 3D-compatible device (3D receiver) (for MVC).

FIG. 40 is a diagram for describing 3D service determination processing in a 3D-compatible receiving apparatus.

Fig. 41 is a diagram illustrating an example of displaying a caption (graphics information) on an image, and the perspective of a background, a near-view object, and the caption.

Fig. 42 is a diagram illustrating an example of displaying a caption on an image, and a left-eye caption LGI and a right-eye caption RGI for displaying the caption.

Fig. 43 is a block diagram illustrating an example of a configuration of a set-top box included in the image transmitting/ receiving system.

Fig. 44 is a block diagram illustrating an example (3D-compatible) of a configuration of a bit stream processing unit included in the set-top box.

Fig. 45 is a block diagram illustrating another example (2D-compatible) of a configuration of a bit stream processing unit included in the set-top box.

Fig. 46 is a block diagram illustrating an example of a configuration of a television receiver included in the image transmitting/receiving system.

Fig. 47 is a diagram illustrating an example of a configuration of a subtitle data stream including a DSS segment, which is included in a transport stream TS, in the case where there is a two-language service.

Fig. 48 is a diagram illustrating an example of a configuration of the transport stream TS in the case where there is a two-language service.

Fig. 49 is a diagram for describing a subtitle descriptor (Subtitling_descriptor) and the like inserted into the transport stream TS.

Fig. 50 is a diagram illustrating an example of a stream configuration of a subtitle data stream (PID1) according to the first language service and an example of a stream configuration of a subtitle data stream (PID2) according to the second language service.

Fig. 51 is a diagram illustrating another example of a configuration of a subtitle data stream including a DSS segment, which is included in a transport stream TS, in the case where there is a two-language service.

Fig. 52 is a diagram illustrating an example of a configuration of the transport stream TS in the case where the DSS segment is shared between the language services.

Fig. 53 is a diagram for describing a subtitle descriptor (Subtitling_descriptor) and the like inserted into the transport stream TS.

Fig. 54 is a diagram illustrating an example of a configuration of a subtitle data stream including a DSS segment, which is included in a transport stream TS, in the case where respective segments according to a two-language service are present in one subtitle data stream.

Fig. 55 is a diagram illustrating an example of a configuration of a transport stream TS in the case where respective segments according to a two-language service are present in one subtitle data stream.

Fig. 56 is a diagram for describing a subtitle descriptor (Subtitling_descriptor) and the like inserted into the transport stream TS.

Fig. 57 is a diagram illustrating an example of a configuration of a subtitle data stream including a DSS segment, which is included in a transport stream TS, in the case where respective segments according to a two-language service are present in one subtitle data stream.

Fig. 58 is a diagram illustrating an example of a configuration of a transport stream TS in the case where respective segments according to a two-language service are present in one subtitle data stream.

Fig. 59 is a diagram for describing a subtitle descriptor (Subtitling_descriptor) and the like inserted into the transport stream TS.

Fig. 60 is a diagram illustrating an example of a configuration of a subtitle data stream included in a transport stream TS in the case where a 3D_EX portion including a 3D extension segment is present in a PES payload.

Fig. 61 is a diagram illustrating an example of a configuration of a transport stream TS including a subtitle data stream in which a 3D_EX portion including a 3D extension segment is present in a PES payload.

Fig. 62 is a diagram illustrating an example of a stream configuration of the subtitle data stream.

Fig. 63 is a diagram illustrating another example of a configuration of a subtitle data stream included in a transport stream TS.

Fig. 64 is a diagram illustrating an example of a configuration of the transport stream TS.

Fig. 65 is a diagram illustrating an example of a configuration of a subtitle data included in a transport stream TS in the case where there are two language services.

Fig. 66 is a diagram illustrating an example of a configuration of the transport stream TS.

Fig. 67 is a diagram illustrating another example of a configuration of a subtitle data stream included in a transport stream TS.

Fig. 68 is a diagram illustrating an example of a configuration of the transport stream TS.

Fig. 69 is a diagram illustrating an additional example of a configuration of a subtitle data stream included in a transport stream TS.

Fig. 70 is a diagram illustrating an example of a configuration of the transport stream TS.

Fig. 71 is a diagram illustrating an example of a configuration of a subtitle data stream included in a transport stream TS in the case where a 3D extension segment is shared.

Fig. 72 is a diagram illustrating an example of a configuration of the transport stream TS.

Fig. 73 is a block diagram illustrating another example of a configuration of a set-top box included in the image transmitting/receiving system.

Fig. 74 is a block diagram illustrating another example of a configuration of a television receiver included in the image transmitting/receiving system.

Fig. 75 is a block diagram illustrating another example of a configuration of the image transmitting/receiving system.

Fig. 76 is a diagram for describing the relation between the display positions of left and right images of an object on a screen and the reproduction position of a stereoscopic image thereof, in a stereoscopic image display using a binocular disparity.

MODE FOR CARRYING OUT THE INVENTION

Hereinafter, modes for implementing the invention (hereinafter, referred to as "embodiment") will be described. In addition, the description will be made in the following order.

1. Embodiments
2. Modifications

<1. Embodiments>

[Example of Configuration of Image Transmitting/Receiving System]

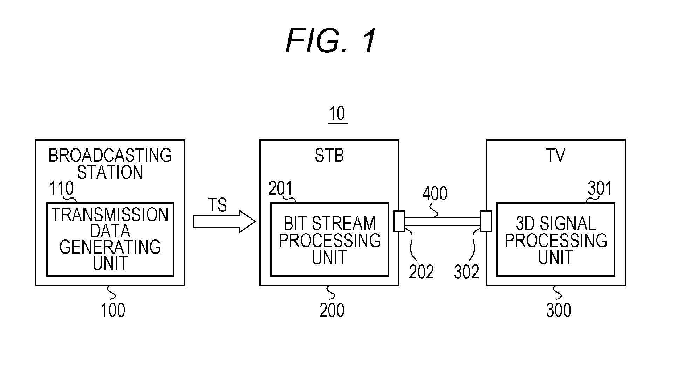

Fig. 1 illustrates an example of a configuration of an image transmitting/receiving system 10 according to an embodiment. The image transmitting/receiving system 10 includes a broadcasting station 100, a set-top box (STB) 200, and a television receiver (TV) 300.

The set-top box 200 and the television receiver 300 are connected by a digital interface of HDMI (High Definition Multimedia Interface). The set-top box 200 and the television receiver 300 are connected by using an HDMI cable 400. The set-top box 200 is provided with an HDMI terminal 202. The television receiver 300 is provided with an HDMI terminal 302. One end of the HDMI cable 400 is connected to the HDMI terminal 202 of the set-top box 200, and the other end of the HDMI cable 400 is connected to the HDMI terminal 302 of the television receiver 300.

[Description of Broadcasting Station]

The broadcasting station 100 transmits a transport stream TS as a multiplexed data stream on a broadcast wave. The broadcasting station 100 includes a transmission data generating unit 110 that generates a transport stream TS. The transport stream TS includes image data, audio data, superimposition information data, disparity information, or the like. Herein, the image data (hereinafter referred to as "stereoscopic image data" appropriately) includes left-eye image data and right-eye image data constituting a stereoscopic image. The stereoscopic image data has a predetermined transmission format. In general, the superimposition information is a caption, graphics information, text information, or the like. However, in the embodiment, the superimposition information is a subtitle (caption).

[Example of Configuration of Transmission Data Generating Unit]

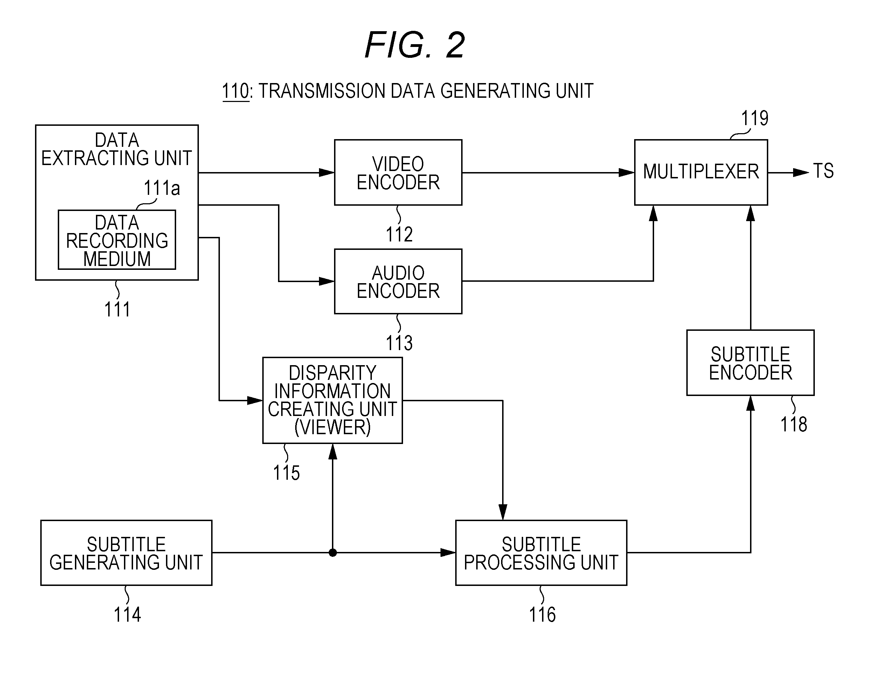

Fig. 2 illustrates an example of a configuration of the transmission data generating unit 110 in the broadcasting station 100. The transmission data generating unit 110 transmits disparity information (disparity vector) in a data structure that can easily cooperate with a DVB (Digital Video Broadcasting) scheme that is one of the existing broadcast standards. The transmission data generating unit 110 includes a data extracting unit 111, a video encoder 112, and an audio encoder 113. Also, the transmission data generating unit 110 includes a subtitle generating unit 114, a disparity information creating unit 115, a subtitle processing unit 116, a subtitle encoder 118, and a multiplexer 119.

The data extracting unit 111 is, for example, detachably mounted with a data recording medium 111a. The data recording medium 111a stores the audio data and the disparity information in association with the stereoscopic image data including the left-eye image data and the right-eye image data. The data extracting unit 111 extracts the stereoscopic image data, the audio data, the disparity information, or the like from the data recording medium 111a and outputs the same. Examples of the data recording medium 111a include a disk-type recording medium and a semiconductor memory.

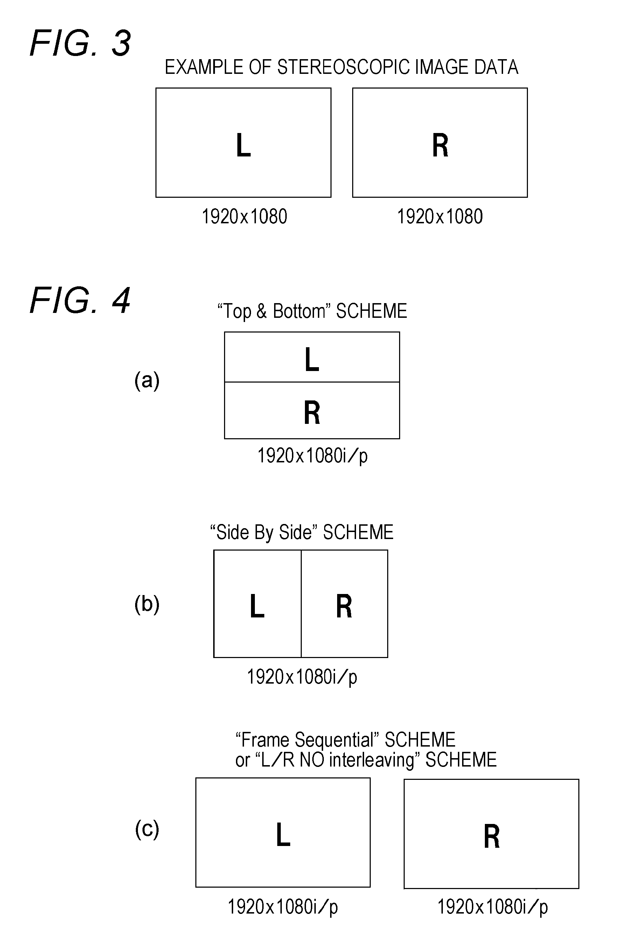

The stereoscopic image data recorded in the data recording medium 111a is stereoscopic image data of a predetermined transmission scheme. An example of the transmission scheme for transmitting the stereoscopic image

**EP 2 621 177 A1**

data (3D image data) will be described. Herein, although the following first to third transmission schemes will be described as an example, any other transmission schemes may be used to transmit the stereoscopic image data (3D image data). Also, herein, the case where the left-eye (L) image data and the right-eye (R) image data are image data with a predetermined resolution, for example, a 1920x1080 pixel format as illustrated in Fig. 3 will be described as an example.

The first transmission scheme is a Top & Bottom scheme, and is a scheme that transmits each line data of the left-eye image data in the first half of the vertical direction and transmits each line data of the right-eye image data in the second half of the vertical direction as illustrated in Fig. 4(a). In this case, since the lines of the left-eye image data and the right-eye image data are reduced by 1/2, the vertical resolution is reduced by 1/2 with respect to the original signal.

The second transmission scheme is a Side By Side scheme, and is a scheme that transmits pixel data of the left-eye image data in the first half of the horizontal direction and transmits pixel data of the right-eye image data in the second half of the horizontal direction as illustrated in Fig. 4(b). In this case, the horizontal-direction pixel data of each of the left-eye image data and the right-eye image data is reduced by 1/2. The horizontal resolution is reduced by 1/2 with respect to the original signal.

The third transmission scheme is a Frame Sequential scheme or an L/R No Interleaving scheme, and is a scheme that transmits the left-eye image data and the right-eye image data by being sequentially switched for the respective frames as illustrated in Fig. 4(c). In addition, this scheme also includes a Full Frame scheme or a Service Compatible scheme for the conventional 2D format.

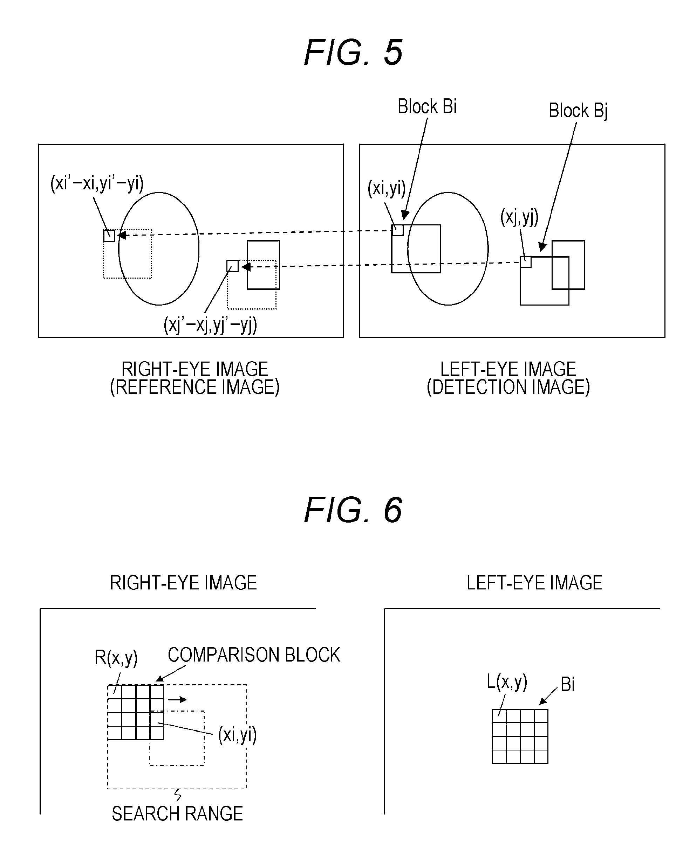

Also, the disparity information recorded in the data recording medium 111a is, for example, a disparity vector of each pixel constituting an image. An example of the detection of the disparity vector will be described. Herein, an example of detecting the disparity vector of the right-eye image with respect to the left-eye image will be described. As illustrated in Fig. 5, the left-eye image is used as a detection image, and the right-eye image is used as a reference image. In this example, disparity vectors at the positions (xi, yi) and (xj, yj) are detected.

The case of detecting the disparity vector at the position (xi, yi) will be described as an example. In this case, in the left-eye image, for example, a 4x4, 8x8, or 16x16 pixel block (disparity detection block) Bi is set with the upper left pixel at the position (xi, yi). In the right-eye image, a pixel block matched with the pixel block Bi is searched for.

In this case, in the right-eye image, a search range around the position (xi, yi) is set. Using each pixel within the search range as a sequential attention pixel, a comparison block like the above-described pixel block Bi, for example, a 4x4, 8x8, or 16x16 comparison block is sequentially set.

Between the pixel block Bi and the sequentially-set comparison blocks, the sum of absolute difference values for the respective corresponding pixels is obtained. Herein, as illustrated in Fig. 6, when the pixel value of the pixel block Bi is $L(x, y)$ and the pixel value of the comparison block is $R(x, y)$, the sum of absolute difference values between the pixel block Bi and the comparison blocks is expressed as $\Sigma |L(x, y) - R(x, y)|$.

When an n number of pixels are included in the search range set in the right-eye image, an n number of sums S1 to Sn are finally obtained and the minimum sum Smin among them is selected. The position (xi', yi') of the upper left pixel is obtained from the comparison block for which the minimum sum Smin is obtained. Accordingly, the disparity vector at the position (xi, yi) is detected as (xi' - xi, yi' - yi). Although not described in detail, for example, a 4x4, 8x8, or 16x16 pixel block Bj with the upper left pixel at the position (xj, yj) is set in the left-eye image, and the disparity vector at the position (xj, yj) is detected through the same process.

Returning to Fig. 2, the video encoder 112 performs encoding, such as MPEG4-AVC, MPEG2, or VC-1, on the stereoscopic image data extracted by the data extracting unit 111, to generate a video data stream (video elementary stream). The audio encoder 113 performs encoding, such as AC3 or AAC, on the audio data extracted by the data extracting unit 111, to generate an audio data stream (audio elementary stream).

The subtitle generating unit 114 generates subtitle data as caption data of a DVB (Digital Video Broadcasting) scheme. The subtitle data is subtitle data for a two-dimensional image. The subtitle generating unit 114 constitutes a superimposition information data output unit.

The disparity information creating unit 115 performs downsizing processing on the disparity vector (horizontal-direction disparity vector) of a plurality of pixels or each pixel extracted by the data extracting unit 111, to generate disparity information of each layer as described below. In addition, the disparity information need not be necessarily generated by the disparity information creating unit 115, and may also be supplied separately from the outside.

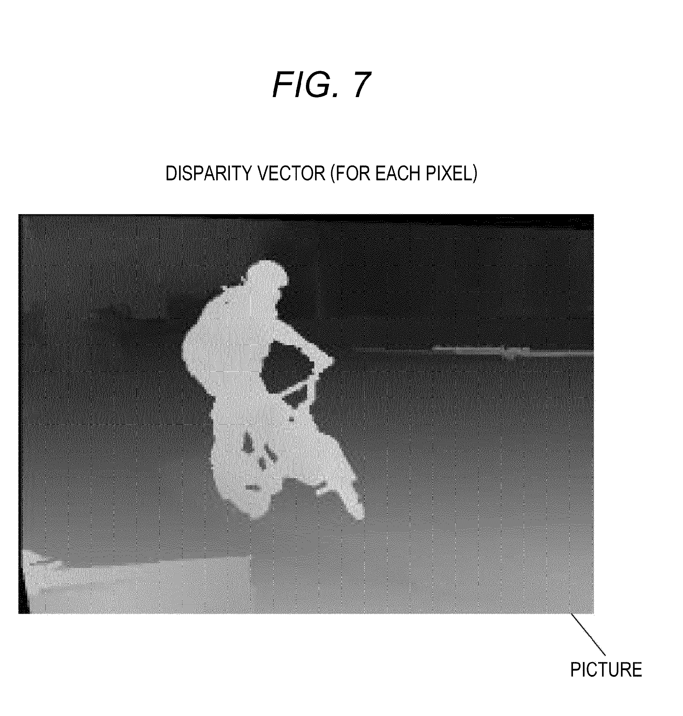

Fig. 7 illustrates an example of depth-direction relative data that is provided as a luminance value of each pixel. Herein, the depth-direction relative data can be treated as a disparity vector of each pixel through a predetermined conversion. In this example, a luminance value of a person portion is set to be high. This means that a disparity vector value of the person portion is large, and thus means that the person portion is perceived as being protrusive in the stereoscopic image display. Also, in this example, a luminance value of a background portion is set to be low. This means that a disparity vector value of the background portion is small, and thus means that the background portion is perceived as being sunken in the stereoscopic image display.

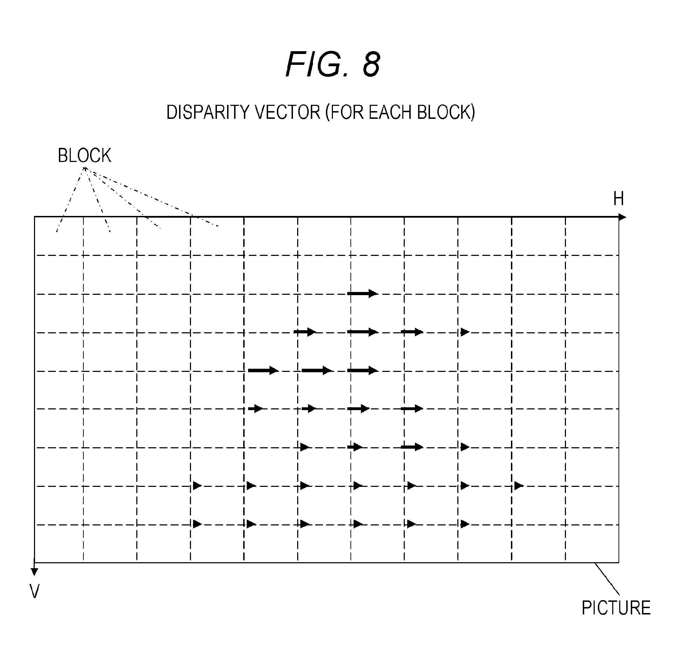

Fig. 8 illustrates an example of a disparity vector of each block. A block corresponds to the upper layer of a pixel located at the lowermost layer. The block is constructed by dividing an image (picture) region into a predetermined size in the horizontal direction and the vertical direction. The disparity vector of each block is obtained, for example, by selecting a disparity vector with the largest value from the disparity vectors of all pixels present in the block. In this example, the disparity vector of each block is represented by an arrow, and the length of the arrow corresponds to the magnitude of the disparity vector.

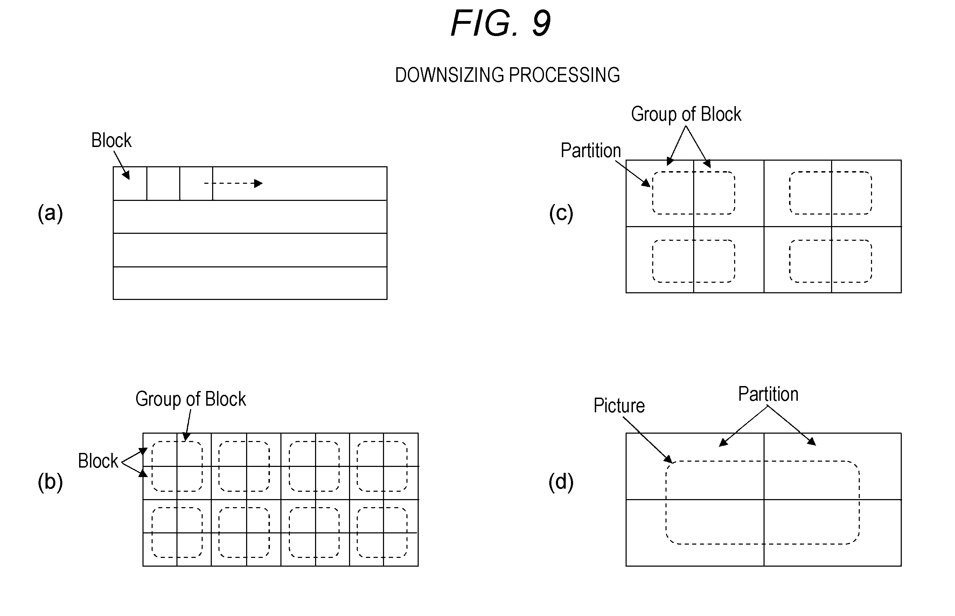

Fig. 9 illustrates an example of the downsizing processing performed by the disparity information creating unit 115. First, as illustrated in Fig. 9(a), the disparity information creating unit 115 obtains a signed disparity vector of each block by using the disparity vector of each pixel. As described above, the block corresponds to the upper layer of a pixel located at the lowermost layer, and is constructed by dividing an image (picture) region into a predetermined size in the horizontal direction and the vertical direction. The disparity vector of each block is obtained, for example, by selecting a disparity vector with the smallest value or a negative disparity vector with the largest absolute value from the disparity vectors of all pixels present in the block.

Next, as illustrated in Fig. 9(b), the disparity information creating unit 115 obtains a disparity vector of each group (Group Of Block) by using the disparity vector of each block. The group corresponds to the upper layer of the block, and is obtained by grouping a plurality of adjacent blocks together. In the example of Fig. 9(b), each group includes four blocks bound by a broken-line box. The disparity vector of each group is obtained, for example, by selecting a disparity vector with the smallest value or a negative disparity vector with the largest absolute value from the disparity vectors of all blocks in the group.

Next, as illustrated in Fig. 9(c), the disparity information creating unit 115 obtains a disparity vector of each partition by using the disparity vector of each group. The partition corresponds to the upper layer of the group, and is obtained by grouping a plurality of adjacent groups together. In the example of Fig. 9(c), each partition includes two groups bound by a broken-line box. The disparity vector of each partition is obtained, for example, by selecting a disparity vector with the smallest value or a negative disparity vector with the largest absolute value from the disparity vectors of all groups in the partition.

Next, as illustrated in Fig. 9(d), the disparity information creating unit 115 obtains a disparity vector of the entire picture (entire image) located at the uppermost layer by using the disparity vector of each partition. In the example of Fig. 9(d), the entire picture includes four partitions bound by a broken-line box. The disparity vector of the entire picture is obtained, for example, by selecting a disparity vector with the smallest value or a negative disparity vector with the largest absolute value from the disparity vectors of all partitions included in the entire picture.

In this way, the disparity information creating unit 115 can obtain the disparity vector of each region of each layer such as the block, the group, the partition, and the entire picture by performing the downsizing processing on the disparity vector of each pixel located at the lowermost layer. Also, in the example of the downsizing processing illustrated in Fig. 9, in addition to the layer of the pixel, the disparity vectors of four layers of the block, the group, the partition, and the entire picture are finally obtained. However, the number of layers, the method of dividing the region of each layer, and the number of regions are not limited thereto.

Returning to Fig. 2, the subtitle processing unit 116 can define a subregion in a region based on the subtitle data generated by the subtitle generating unit 114. Also, the subtitle processing unit 116 sets disparity information for shifting the display position of the superimposition information in the left-eye image and the right-eye image based on the disparity information created by the disparity information creating unit 115. The disparity information can be set for each subregion, region or page.

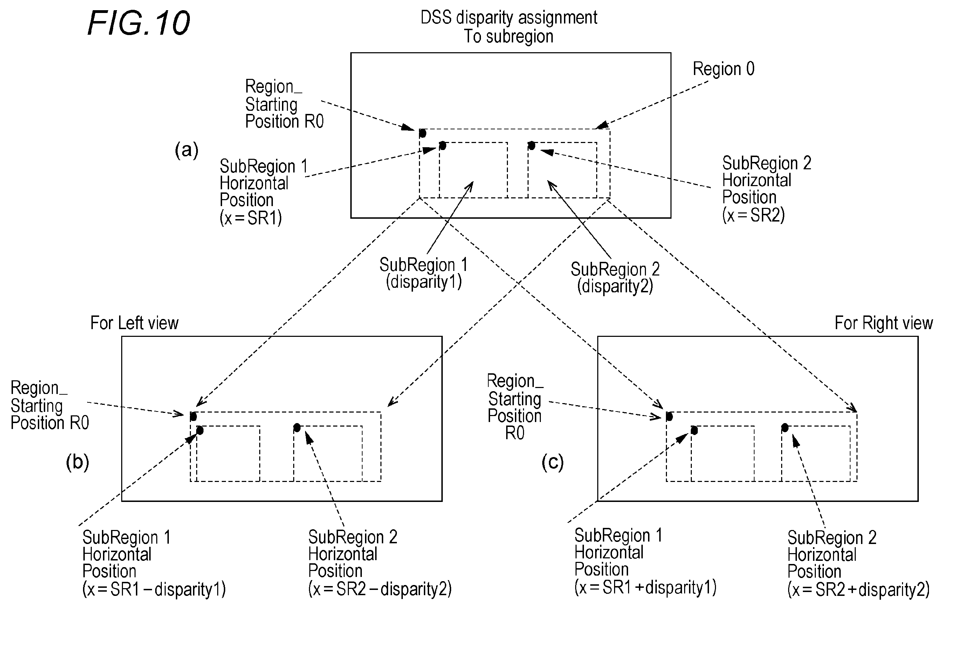

Fig. 10(a) illustrates an example of a region defined on an image in the subtitle data and a subregion defined in the region. In this example, two subregions of SubRegion 1 and SubRegion 2 are defined in Region 0 with Region_ Starting Position of R0. The horizontal position x of the SubRegion 1 is SR1, and the horizontal position x of the SubRegion 2 is SR2. In this example, disparity information Disparity 1 is set for subregion SubRegion 1, and disparity information Disparity 2 is set for subregion SubRegion 2.

Fig. 10(b) illustrates an example of the shift adjustment in the subregion in the left-eye image by the disparity information. Disparity information Disparity 1 is set for a subregion SubRegion 1. Therefore, as for the subregion Sub-Region 1, a shift adjustment is performed such that the horizontal position x is SR1 - disparity 1. Also, disparity information Disparity 2 is set for a subregion SubRegion 2. Therefore, as for the subregion SubRegion 2, a shift adjustment is performed such that the horizontal position x is SR2 - disparity 2.

Fig. 10(c) illustrates an example of the shift adjustment in the subregion in the right-eye image by the disparity information. Disparity information Disparity 1 is set for a subregion SubRegion 1. Therefore, as for the subregion Sub-Region 1, a shift adjustment is performed such that the horizontal position x is SR1 + disparity 1 as opposed to the above-described left-eye image. Also, disparity information Disparity 2 is set for a subregion SubRegion 2. Therefore, as for the subregion SubRegion 2, a shift adjustment is performed such that the horizontal position x is SR2 + disparity 2 as opposed to the above-described left-eye image.

The subtitle processing unit 116 outputs display control information such as the disparity information and the region information of the above-described subregion, together with the subtitle data generated by the subtitle generating unit 114. Also, the disparity information may also be set in units of a region or a page, in addition to being set in units of a subregion as described above.

The subtitle data includes segments such as DDS, PCS, RCS, CDS, ODS, and EDS. The DDS (display definition segment) specifies a display size for an HDTV. The PCS (page composition segment) specifies a region position in a page. The RCS (region composition segment) specifies a size of a region or an encoding mode of an object, and also specifies a starting position of the object.

The CDS (CLUT definition segment) specifies a CLUT content. The ODS (object data segment) includes encoded pixel data. The EDS (end of display set segment) indicates the end of the subtitle data starting from the segment of DDS. In this embodiment, the segment of DSS (Disparity Signaling Segment) is further defined. Display control information such as the above-described disparity information is inserted into the DSS segment.

Returning to Fig. 2, the subtitle encoder 118 generates a subtitle data stream (private data stream) including the segments of DDS, PCS, RCS, CDS, ODS, DSS, and EDS. The multiplexer 119 multiplexes the respective data streams from the video encoder 112, the audio encoder 113, and the subtitle encoder 118 to generate a transport stream TS as a multiplexed data stream. The transport stream TS includes a video data stream, an audio data stream, and a subtitle data stream as PES (Packetized Elementary Stream) streams.

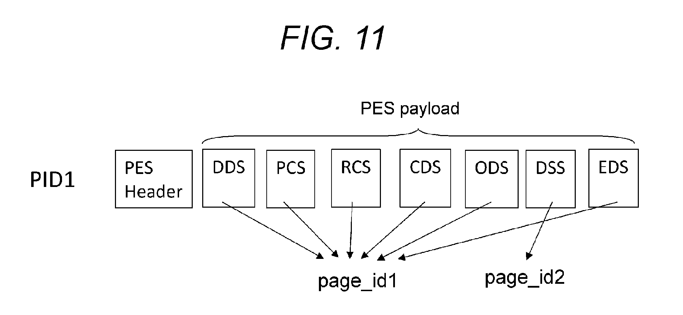

Fig. 11 illustrates an example of a configuration of a subtitle data stream included in the transport stream TS. A PES header is disposed at the beginning, followed by a PES payload including the respective segments of DDS, PCS, RCS, CDS, ODS, DSS, and EDS. Herein, a page ID (= page_id1) allocated to the respective segments of DDS, PCS, RCS, CDS, ODS, and EDS is different from a page ID (= page_id2) allocated to the segment of DSS.

Herein, the respective segments of DDS, PCS, RCS, CDS, ODS, and EDS constitute a first segment including superimposition information data (subtitle data). Also, the DSS segment constitutes a second segment including disparity information. The page ID constitutes service identification information. Since the page ID allocated to the first segment and the page ID allocated to the second segment are set to be different from each other, the first segment and the second segment are indicated as being separate services and thus can be identified.

In this embodiment, a value of the page ID (= page_id2) allocated to the second segment is equal to a value of the page ID (= page_id1) allocated to the first segment plus a predetermined value. Accordingly, the respective segments of DDS, PCS, RCS, CDS, ODS, and EDS being the first segments and the DSS segment being the second segment are associated with each other on the page IDs.

An operation of the transmission data generating unit 110 illustrated in Fig. 2 will be described briefly. The stereoscopic image data extracted from the data extracting unit 111 is supplied to the video encoder 112. In the video encoder 112, encoding such as MPEG4-AVC, MPEG2, or VC-1 is performed on the stereoscopic image data, and a video data stream (video elementary stream) including the encoded video data is generated. The video data stream is supplied to the multiplexer 119.

The audio data extracted from the data extracting unit 111 is supplied to the audio encoder 113. In the audio encoder 113, encoding such as MPEG-2 Audio AAC or MPEG-4 AAC is performed on the audio data, and an audio data stream including the encoded audio data is generated. The audio data stream is supplied to the multiplexer 119.

In the subtitle generating unit 114, subtitle data being DVB caption data (for a 2D image) is generated. The subtitle data is supplied to the disparity information creating unit 115 and the subtitle processing unit 116.

The disparity vector for each pixel extracted from the data extracting unit 111 is supplied to the disparity information creating unit 115. In the disparity information creating unit 115, downsizing processing is performed on the disparity vector for each pixel or the disparity vector for a plurality of pixels, and disparity information of each layer is generated. The disparity information is supplied to the subtitle processing unit 116.

In the subtitle processing unit 116, for example, a subregion in a region is defined based on the subtitle data generated by the subtitle generating unit 114. Also, in the subtitle processing unit 116, disparity information for shifting the display position of the superimposition information in the left-eye image and the right-eye image is set based on the disparity information created by the disparity information creating unit 115. In this case, the disparity information is set for each subregion, region or page.

The display control information and the subtitle data output from the subtitle processing unit 116 are supplied to the subtitle encoder 118. The display control information includes the region information of a subregion, the disparity information, and the like. In the subtitle encoder 118, a subtitle data stream is generated. That is, a subtitle data stream including the respective segments of DDS, PCS, RCS, CDS, ODS, DSS, and EDS is generated. As described above, the segment of DSS is the segment including the display control information.

As described above, the respective data streams from the video encoder 112, the audio encoder 113, and the subtitle encoder 118 are supplied to the multiplexer 119. In the multiplexer 119, the respective data streams are packetized and multiplexed into a PES packet, and a transport stream TS is generated as a multiplexed data stream. The transport stream TS includes a video data stream, an audio data stream, and a subtitle data stream (private data stream) as PES streams.

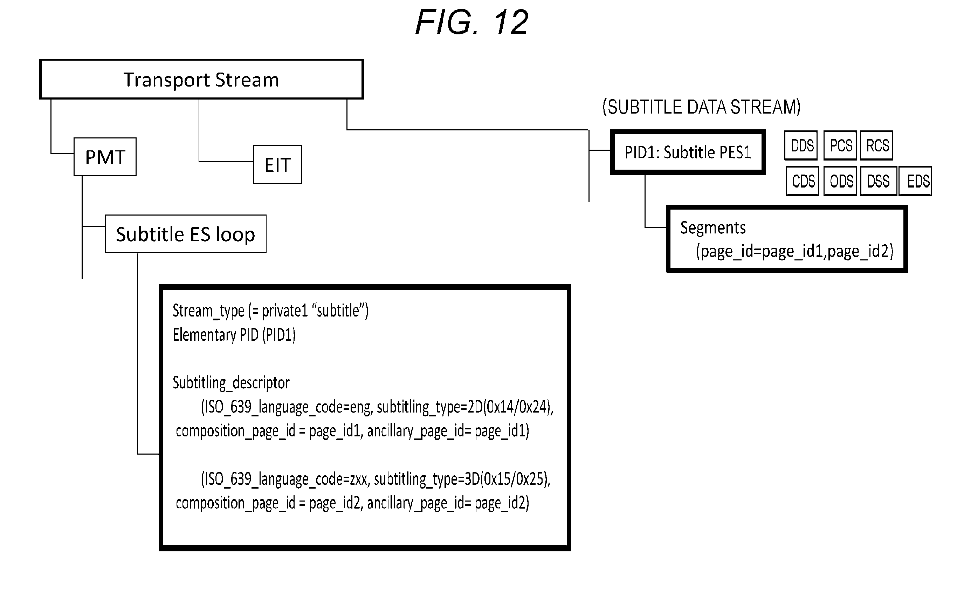

Fig. 12 illustrates an example of a configuration of the transport stream TS. The transport stream TS includes a PES packet that is obtained by packetizing each elementary stream. In addition, in Fig. 12, the illustration of video and audio-related portions is omitted for simplicity of illustration.

In this configuration example, a PES packet "Subtitle PES1" of the subtitle data stream (private data stream) is included. The respective segments of DDS, PCS, RCS, CDS, ODS, DSS, and EDS are included in the subtitle data stream. The respective segments of DDS, PCS, RCS, CDS, ODS, and EDS being the first segments are allocated a page ID "page_id1" and the DSS segment being the second segment is allocated a page ID "page_id2", so that the segments can be identified.

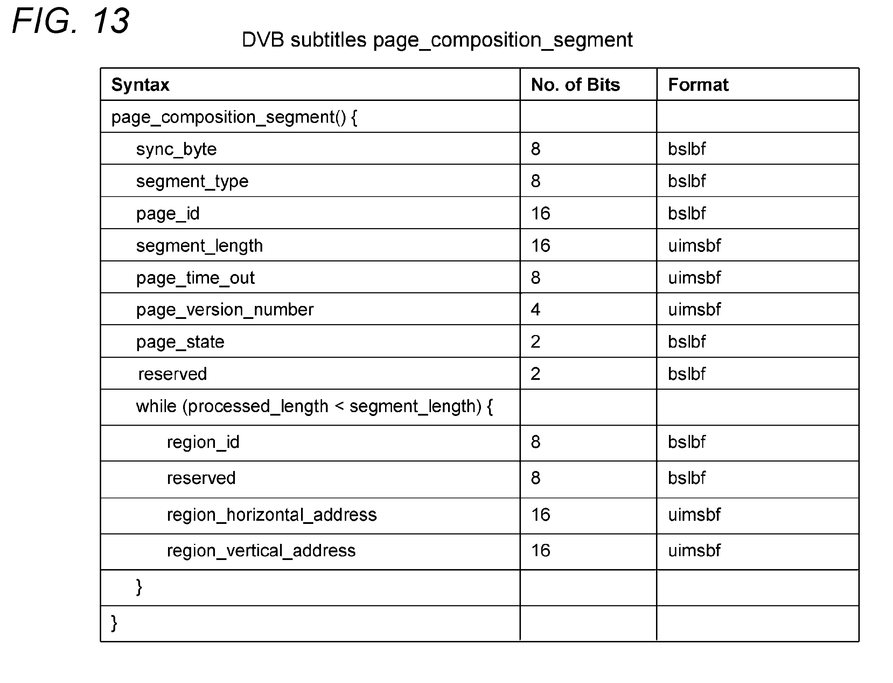

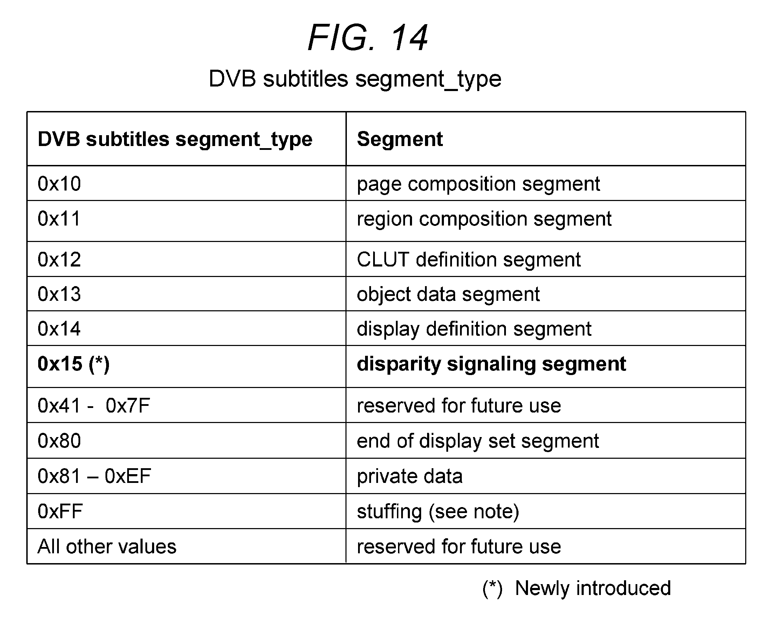

Fig. 13 illustrates a structure of PCS (page_composition_segment). The segment type of the PCS is 0x10 as illustrated in Fig. 14. In Fig. 13, "region_horizontal_address" and "rregion_vertical_address" indicate the starting position of a region. Also, with respect to the other segments such as DDS, RCS, and ODS, the illustration of structures thereof will be omitted. As illustrated in Fig. 14, the segment type of DDS is 0x14, the segment type of RCS is 0x11, the segment type of CDS is 0x12, the segment type of ODS is 0x13, and the segment type of EDS is 0x80. In addition, as illustrated in Fig. 14, the segment type of the DSS is 0x15. A detailed structure of the segment of DSS will be described below.

Returning to Fig. 12, the transport stream TS includes a PMT (Program Map Table) as PSI (Program Specific Information). The PSI is information describing to which program each elementary stream included in the transport stream belongs. Also, the transport stream includes an EIT (Event Information Table) as SI (Serviced Information) for performing management on each event. The EIT describes metadata for each program.

The PMT includes a subtitle elementary loop having information related to the subtitle data stream. Information such as a packet identifier (PID) of the subtitle data stream is disposed in the subtitle elementary loop. In addition, a descriptor describing the information related to the subtitle data stream is also disposed in the subtitle elementary loop.

A subtitle descriptor (Subtitling_Descriptor) is present as the descriptor. The subtitle descriptor describes an ISO language code (ISO_639_language_code), a subtitling type (subtitling_type), and a composition page ID (composition_page_id) in association with the respective segments of DDS, PCS, RCS, CDS, ODS, and EDS as the first segments. The value (page_id1) of the page ID allocated to the respective segments of DDS, PCS, RCS, CDS, ODS, and EDS is equal to the value (page_id1) of the composition page ID.

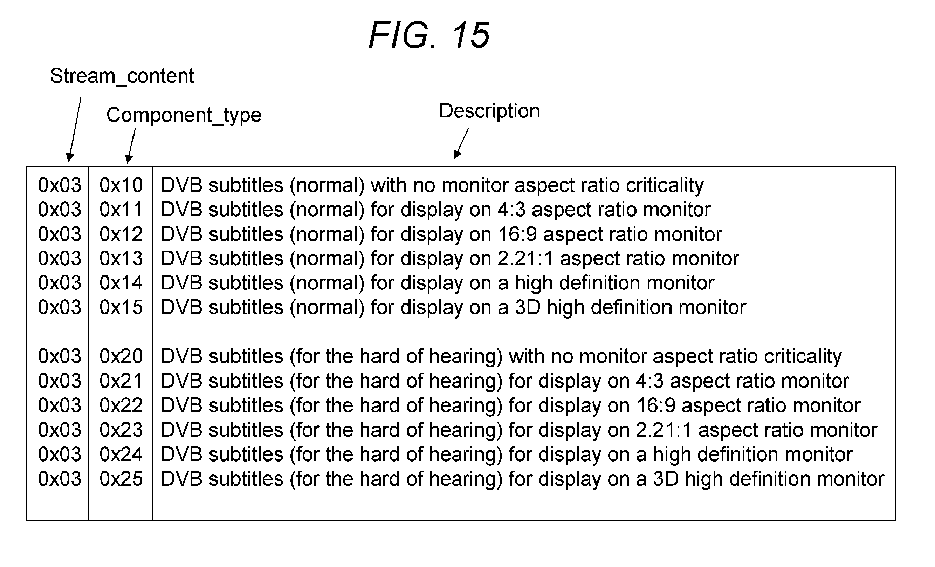

Also, the subtitling type (subtitling_type) corresponding to the first segment is a value representing a 2D subtitle, for example, "0x14" or "0x24" (see "component_type" in Fig. 15). In addition, an ISO language code corresponding to the first segment is set to represent the language of a subtitle (caption). In the illustrated example, the ISO language code is set to "eng" representing English.

The subtitle descriptor describes an ISO language code (ISO_639_language_code), a subtitling type (subtitling_type), and a composition page ID (composition_page_id) in association with the DSS segment as the second segment. The value (page_id2) of the page ID allocated to the DSS segment is equal to the value (page_id2) of the composition page ID.

Also, the subtitling type (subtitling_type) corresponding to the second segment is a value representing a 3D subtitle, for example, "0x15" or "0x25" (see "component_type" in Fig. 15). In addition, an ISO language code corresponding to the second segment is set to, for example, "zxx" representing a non-language.

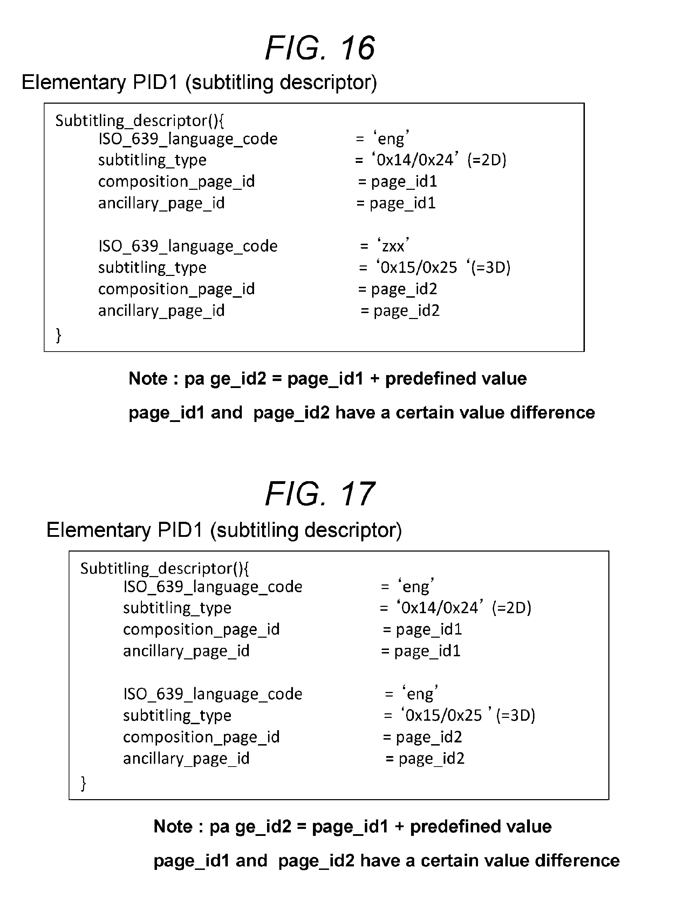

Fig. 16 illustrates the extraction of the subtitle descriptor (Subtitling_descriptor) and the like illustrated in Fig. 12. Also, it has been described above that the ISO language code corresponding to the second segment is set to, for example, "zxx" representing a non-language. However, like the ISO language code corresponding to the first segment, as illustrated in Fig. 17, it can be considered that the ISO language code corresponding to the second segment is set to represent the language of a subtitle (caption).

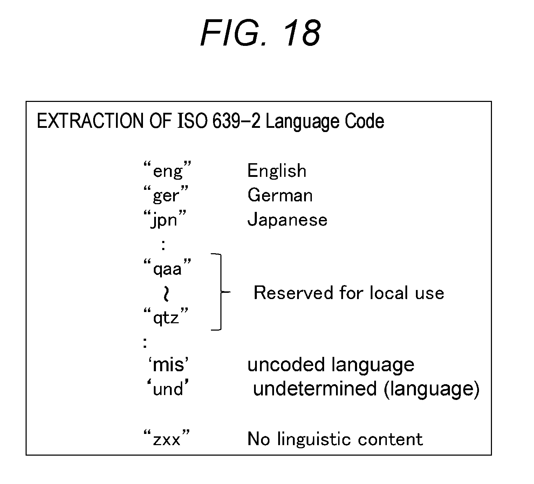

Also, it can be considered that any one of language codes included in a space from "qaa" to "qrz" of the ISO language code, or a language code "mis" or "und" is used as the ISO language code representing a non-language. Also, for reference, Fig. 18 illustrates the extraction of an ISO language code (ISO 639-2 Code) list.

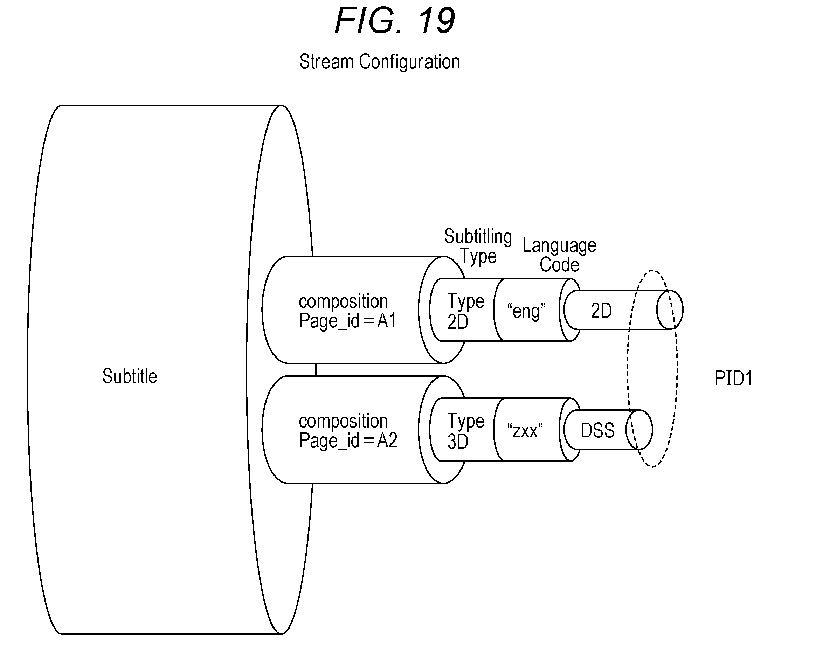

Fig. 19 illustrates an example of a stream configuration of the subtitle data stream. This example is a language service example of English "eng". The composition page ID (composition_page_id) described in the subtitle descriptor in association with the respective segments of DDS, PCS, RCS, CDS, ODS, and EDS as the first segments (represented as "2D") is set to "A1". Therefore, it can be seen that the value of the page ID allocated to the respective segments of DDS, PCS, RCS, CDS, ODS, and EDS is "A1".

Also, the subtitling type (subtitling_type) described in the subtitle descriptor in association with the composition page ID = page ID = A1 is set to a value representing a 2D subtitle. In addition, the ISO language code described in the subtitle descriptor in association with the composition page ID = page ID = A1 is set to "eng" representing English.

Also, the composition page ID (composition_page_id) described in the subtitle descriptor in association with the DSS segment as the second segment is set to "A2". Therefore, it can be seen that the value of the page ID allocated to the DSS segment is "A2".

Also, the subtitling type (subtitling_type) described in the subtitle descriptor in association with the composition page ID = page ID = A2 is set to a value representing a 3D subtitle. In addition, the ISO language code described in the subtitle descriptor in association with the composition page ID = page ID = A2 is set to "zxx" representing a non-language.

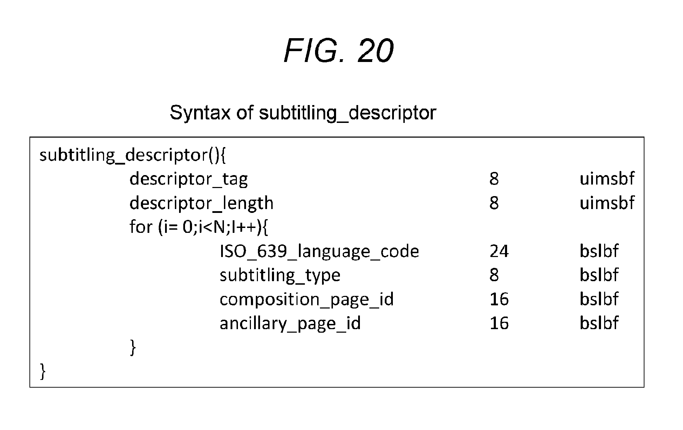

Fig. 20 illustrates an example of a syntax of the subtitle descriptor (Subtitling_descriptor). An 8-bit field of "descriptor_tag" indicates that the descriptor is a subtitle descriptor. An 8-bit field of "descriptor_length" represents the entire byte size following the field.

A 24-bit field of " ISO_639_language_code " represents an ISO language code. A code representing the language of a subtitle (caption) is set in association with the first segment, and a code representing a non-language or the language of a subtitle (caption) is set in association with the second segment. An 8-bit field of "subtitling_type" represents subtitle type information. The subtitling type (subtitling_type) corresponding to the first segment is set to "2D", and the subtitling type (subtitling_type) corresponding to the second segment is set to "3D". A 16-bit field of "composition_page_id" represents the composition page ID. The composition page ID corresponding to the first segment is set to the value equal to the page ID allocated thereto, and the composition page ID corresponding to the second segment is set to the value equal to the page ID allocated thereto.

[Update of Disparity Information]

As described above, the disparity information is transmitted by the DSS segment included in the subtitle data stream. The update of the disparity information will be described.

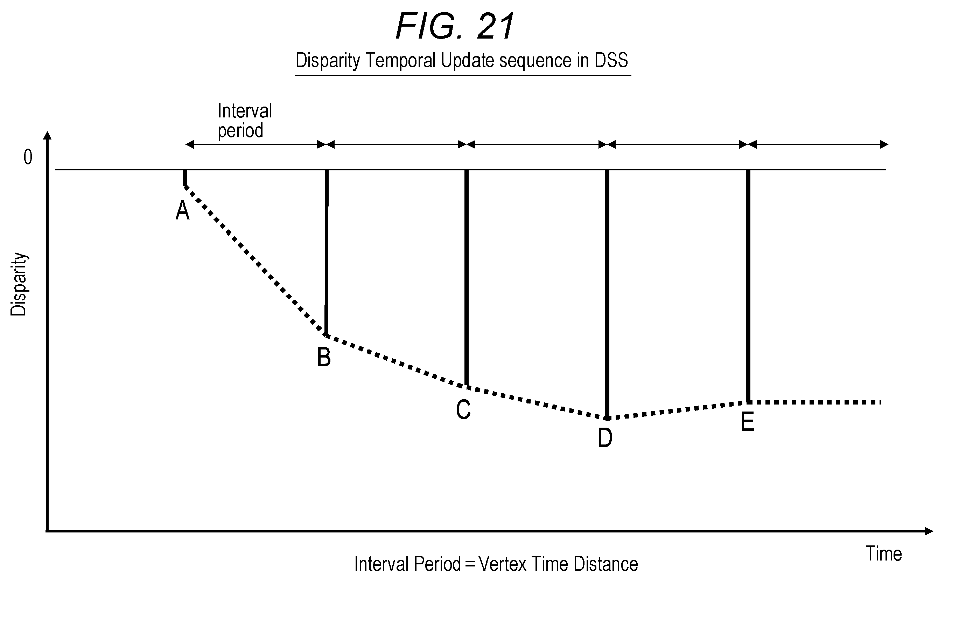

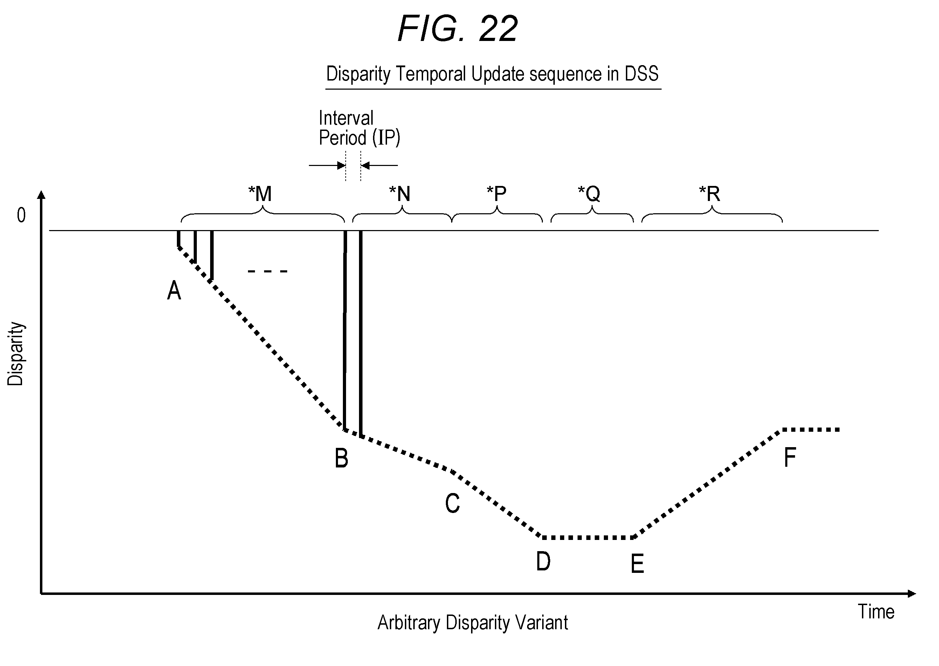

Figs. 21 and 22 illustrate examples of the disparity information update using an interval period. Fig. 21 illustrates the case where an interval period is fixed and is equal to an update period. That is, each of the update periods of A-B, B-C, C-D, ... includes one interval period.

Fig. 22 corresponds to a general case, and illustrates an example of the disparity information update in the case where an interval period is set to be a short period (may be, for example, a frame period). In this case, the numbers of interval periods in the respective update periods are M, N, P, Q, and R. Also, in Figs. 21 and 22, "A" represents a starting frame (starting point) of a caption display period, and "B" to "F" represent subsequent update frames (update points).

When the disparity information sequentially updated in the caption display period is transmitted to the receiving side (set-top box 200 or the like), the receiving side can generate and use disparity information of an arbitrary frame interval, for example, a 1-frame interval, by performing interpolation processing on the disparity information for each update period.

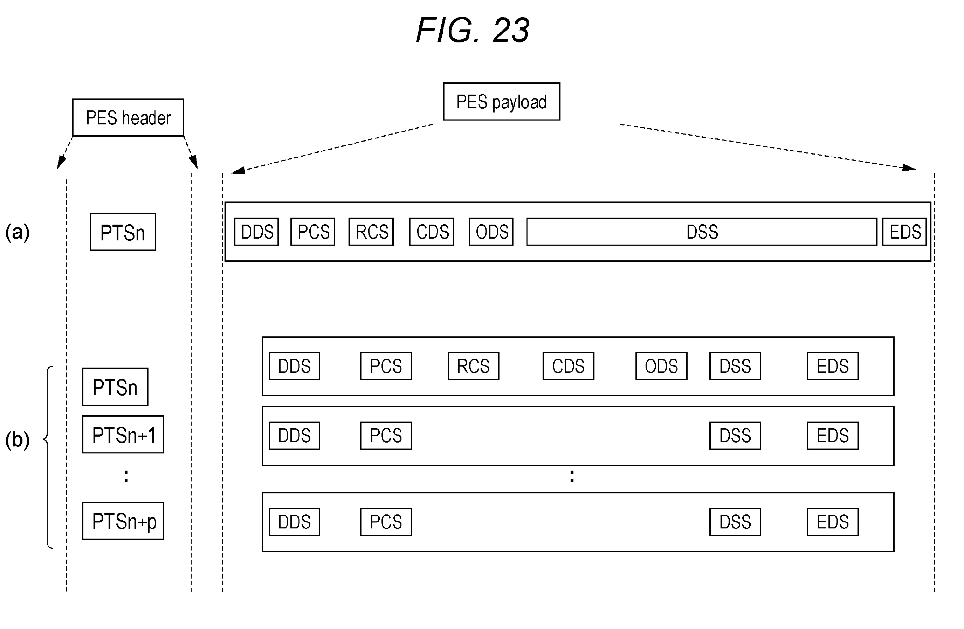

Fig. 23 illustrates an example of a configuration of the subtitle data stream. Fig. 23(a) illustrates an example in which only one DSS segment is inserted. A PES header includes time information (PTS). Also, respective segments of DDS, PCS, RCS, CDS, ODS, DSS, and EDS are included as PES payload data. These are transmitted together before the start of a caption display period. One DSS segment includes a plurality of pieces of disparity information sequentially updated in the caption display period.

Also, a plurality of pieces of disparity information sequentially updated in the caption display period may be divided into a plurality of packets, and the plurality of pieces of disparity information may be transmitted to the receiving side (set-top box 200 or the like). In this case, a DSS segment is inserted into the subtitle data stream at each update timing.

Fig. 23(b) illustrates an example of the configuration of the subtitle data stream in this case. In this case, first, time information PTSn is included in a PES header, and respective segments of DDS, PCS, RCS, CDS, ODS, DSS, and EDS are transmitted as PES payload data. Thereafter, at each update timing, time information PTSn, PTSn+1, ... is included in a PES header, and respective segments of DDS, PCS, DSS, and EDS are transmitted as PES payload data.

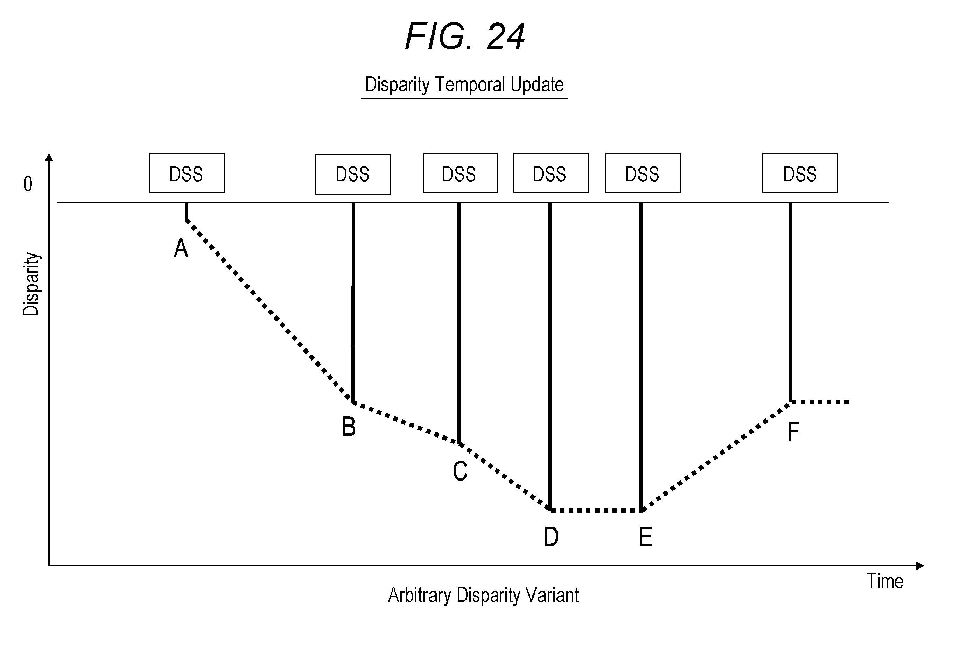

Fig. 24 illustrates an example of the disparity information update in the case where the DSS segments are sequentially transmitted as illustrated in Fig. 23(b) described above. Also, in Fig. 24, "A" represents a starting frame (starting point) of a caption display period, and "B" to "F" represent subsequent update frames (update points).

Also in the case where the disparity information sequentially updated in the caption display period is transmitted to the receiving side (set-top box 200 or the like) by sequentially transmitting the DSS segments, the receiving side can also perform the above-described processing. That is, also in this case, the receiving side can generate and use disparity information of an arbitrary frame interval, for example, a 1-frame interval, by performing interpolation processing on the disparity information for each update period.

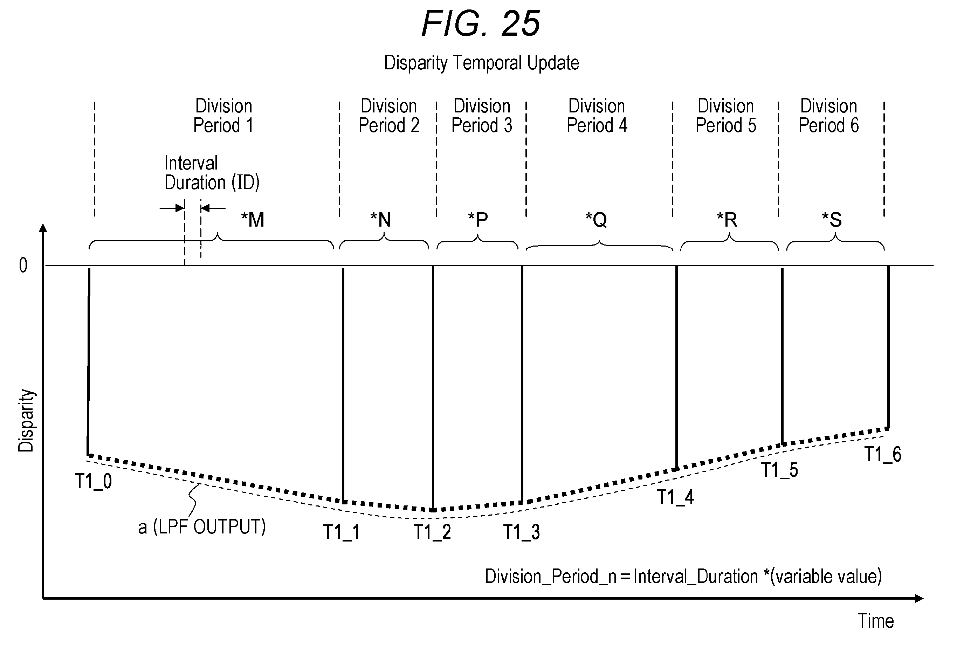

Fig. 25 illustrates an example of the disparity information update described above with reference to Fig. 22. An update frame interval is expressed in a multiple of an interval duration (ID) as a unit period. For example, an update frame interval Division Period 1 is expressed as "ID*M", an update frame interval Division Period 2 is expressed as "ID*N", and the subsequent update frame intervals are expressed likewise. In the example of the disparity information update illustrated in Fig. 25, the update frame interval is not fixed, and the update frame interval is set according to a disparity information curve.

Also, in the example of the disparity information update, in the receiving side, a starting frame (starting time) T1_0 of the caption display period is provided as a PTS (Presentation Time Stamp) that is inserted into the header of a PES stream including the disparity information. In the receiving side, each update time of the disparity information is obtained based on information about an interval duration (information about a unit period), which is information about each update frame interval, and information about the number of interval durations.

In this case, from the starting frame (starting time) T1_0 0 of the caption display period, the respective update times are sequentially obtained based on the following equation (1). In Equation (1), interval_count denotes the number of interval periods, and are values corresponding to M, N, P, Q, R, and S in Fig. 25. Also, in Equation (1), "interval_time" is a value corresponding to the interval duration ID in Fig. 25.

$$Tm\ n = Tm\ (n - 1) + (interval\ time*interval\ count)\ ...(1)$$

For example, in the update example illustrated in Fig. 25, each update time is obtained based on Equation (1) in the following manner. That is, the update time T1_1 is obtained as T1_1 = T1_0 + (ID*M) by using the starting time T1_0, the interval duration ID, and the number M. Also, the update time T1_2 is obtained as T1_2 = T1_1 + (ID*N) by using the update time T1_1, the interval duration ID, and the number N. Each of the subsequent update times is obtained in the same manner.

In the update example illustrated in Fig. 25, in the receiving side, interpolation processing is performed on the disparity information sequentially updated in the caption display period, and the disparity information of an arbitrary frame interval in the caption display period, for example, a 1-frame interval is generated and used. For example, as the above interpolation processing, by performing not linear interpolation processing but interpolation processing accompanied with low-pass filter (LPF) processing in the time direction (frame direction), a change in the disparity information of a predetermined frame interval in the time direction (frame direction) after the interpolation processing becomes smooth. A broken line a of Fig. 25 represents an example of an LPF output.

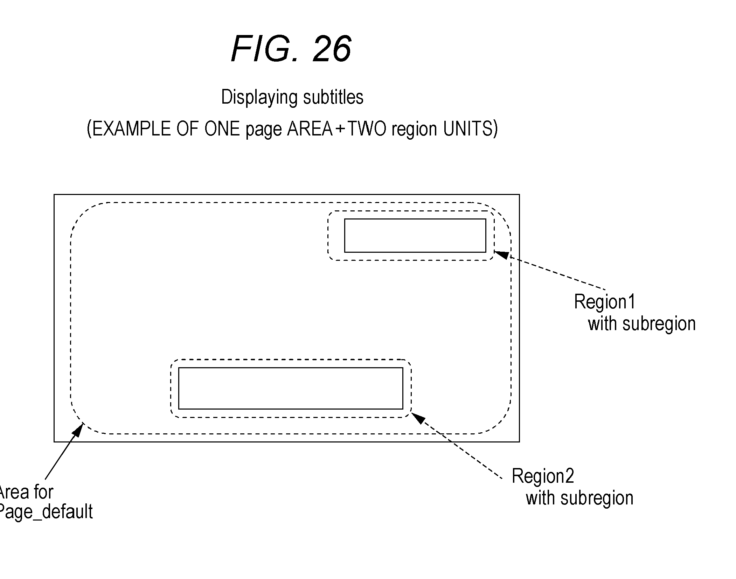

Fig. 26 illustrates an example of the display of a subtitle as a caption. In the display example, a page region (Area for Page_default) includes two regions (Region1 and Region2) as a caption display region. The region includes one or more subregions. Herein, it is assumed that the region includes one subregion, and the region and the subregion are the same.

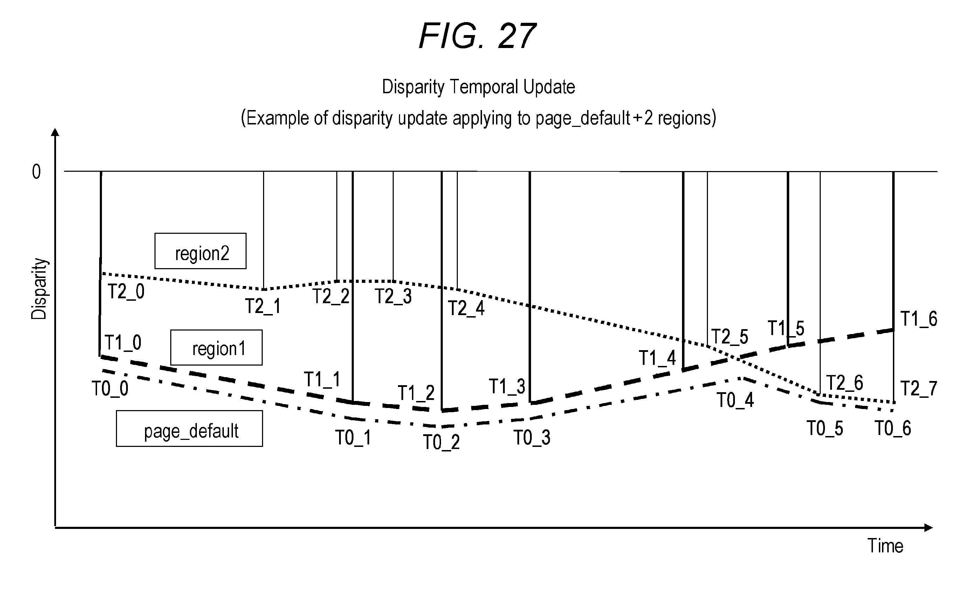

Fig. 27 illustrates an example of the disparity information curve of each region and page in the case where disparity information in units of a region and disparity information in units of a page are included in a DSS segment, as disparity information that is sequentially updated in the caption display period. Herein, the disparity information curve of the page takes the minimum value of the disparity information curve of two regions.

About the Region1, there are seven pieces of disparity information that are a starting time T1_0 and subsequent update times T1_1, T1_2, T1_3, ..., T1_6. Also, about the Region2, there are eight pieces of disparity information that are a starting time T2_0 and subsequent update times T2_1, T2_2, T2_3, ..., T2_7. In addition, about the page (Page_default), there are seven pieces of disparity information that are a starting time T0_0 0 and subsequent update times T0_1, T0_2, T0_3, ..., T0_6.

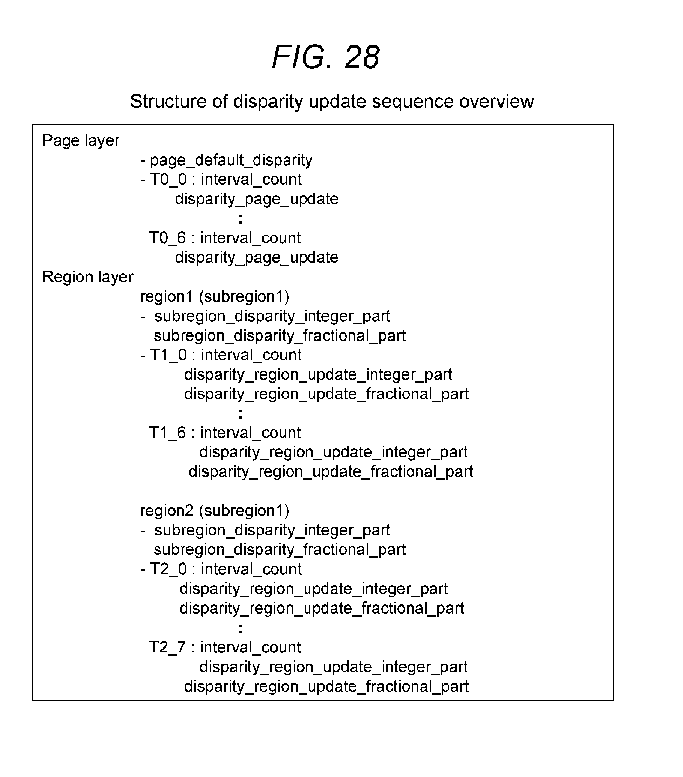

Fig. 28 illustrates a transmission structure of the disparity information of each page and region illustrated in Fig. 27. First, a page layer will be described. A fixed value "page_default_disparity" of the disparity information is disposed in the page layer. As for the disparity information sequentially updated in the caption display period, "interval_count" representing the number of interval periods corresponding to a starting time and subsequent update times, and "disparity_page_update" representing the disparity information are sequentially disposed. Also, the "interval_count" at the starting time is set to "0".

Next, a region layer will be described. As for the Region1 (Subregion1), "subregion_disparity_integer_part" and "subregion_disparity_fractional_part" being the fixed values of the disparity information are disposed. Herein, "subregion_disparity_integer_part" represents an integer part of the disparity information, and "subregion_disparity_fractional_part" represents a fractional part of the disparity information.

As for the disparity information sequentially updated in the caption display period, "interval_count" representing the number of interval periods corresponding to a starting time and subsequent update times, and "disparity_region_update_integer_part" and "disparity_region_update_fractional_part" representing the disparity information are sequentially disposed. Herein, "disparity_region_update_integer_part" represents an integer part of the disparity information, and "disparity_region_update_fractional_part" represents a fractional part of the disparity information. Also, the "interval_count" at the starting time is set to "0".

Like the above-described Region1, as for the Region2 (Subregion2), "subregion_disparity_integer_part" and "subregion_disparity_fractional_part" being the fixed values of the disparity information are disposed. As for the disparity information sequentially updated in the caption display period, "interval_count" representing the number of interval periods corresponding to a starting time and subsequent update times, and "disparity_region_update_integer_part" and "disparity_region_update_fractional_part" representing the disparity information are sequentially disposed.

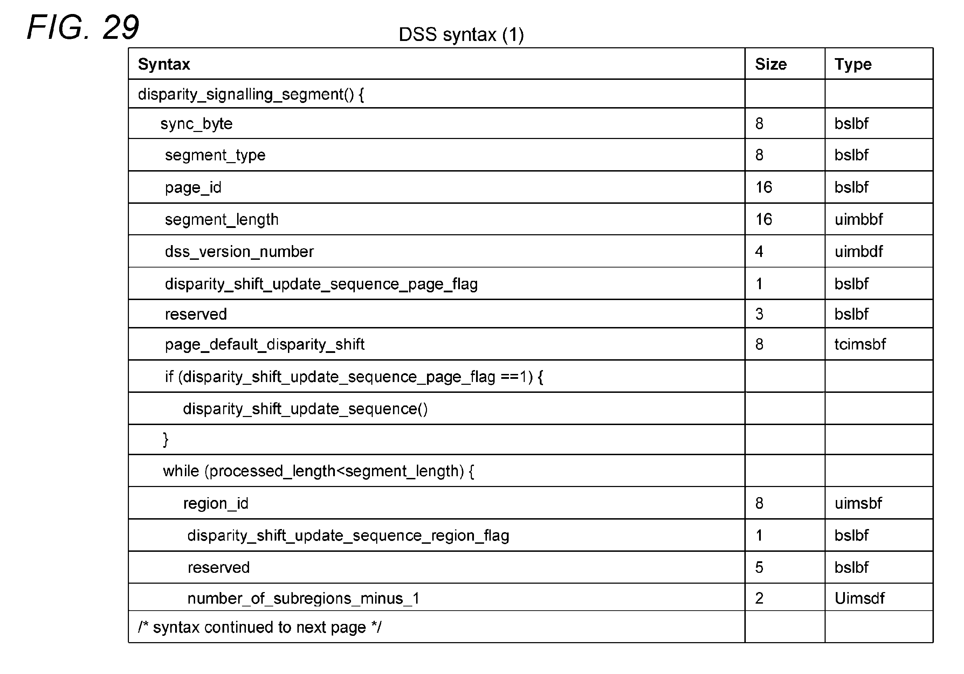

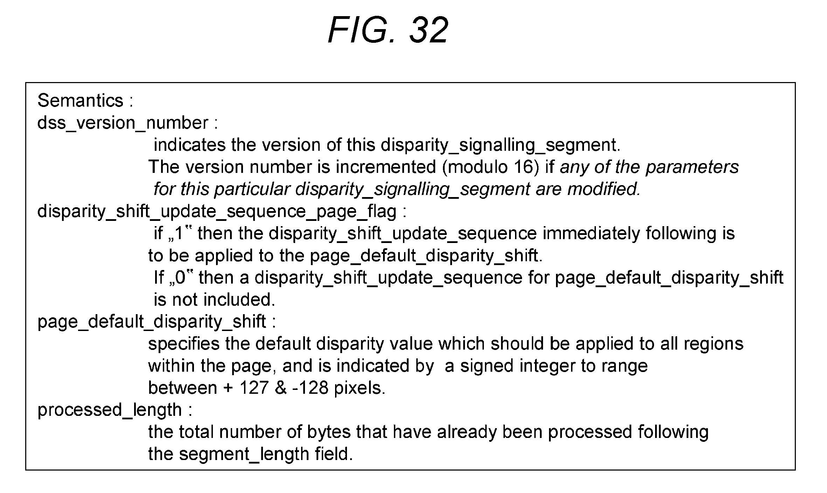

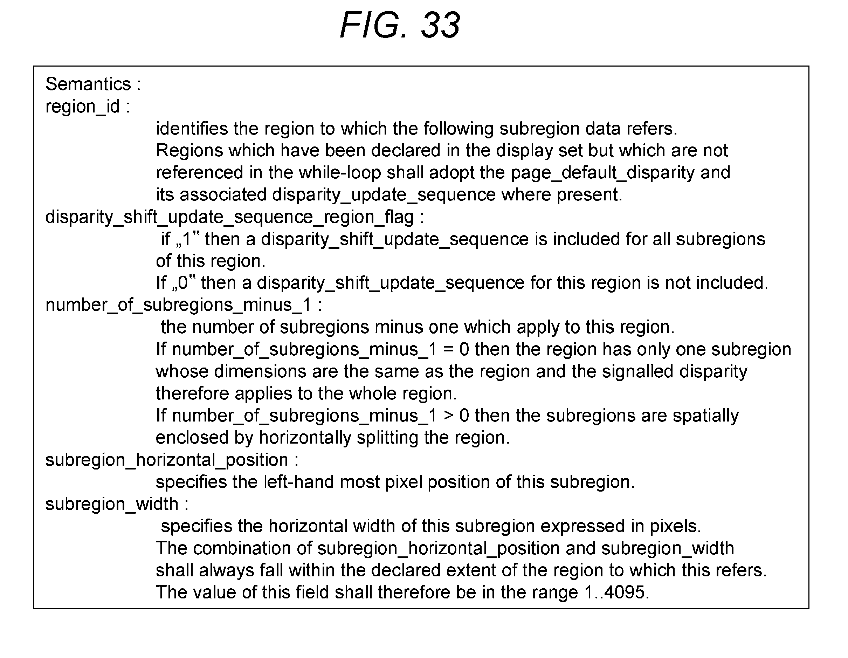

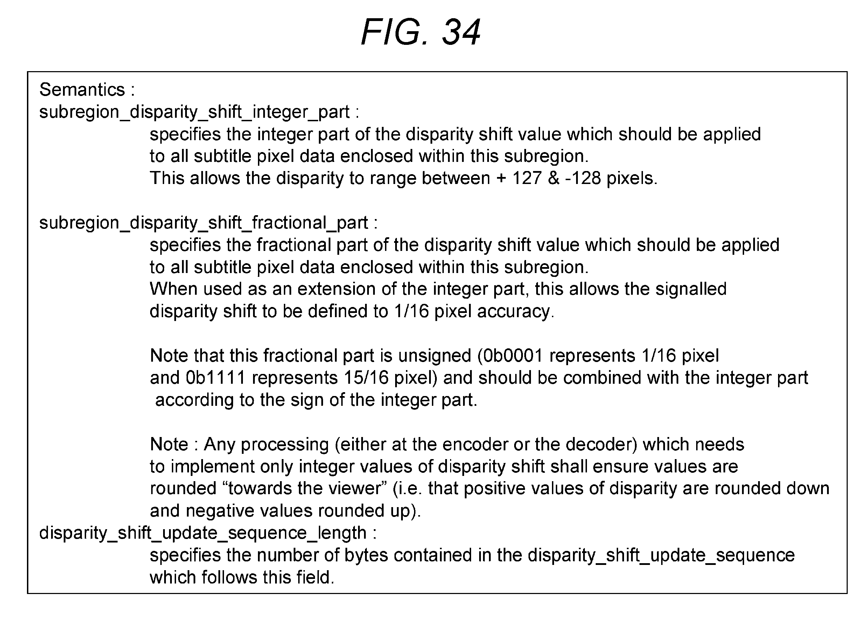

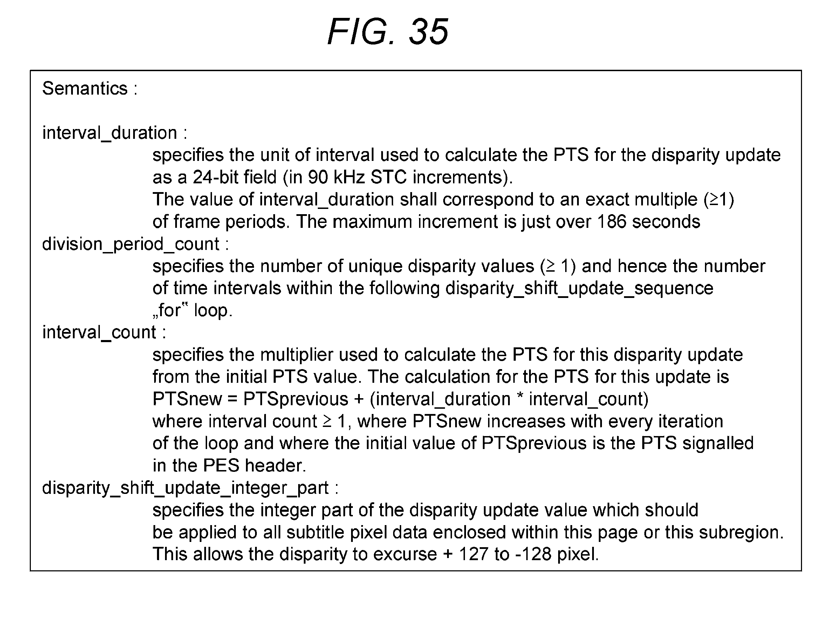

Figs. 29 to 31 illustrate examples of the syntax of a DSS (Disparity_Signaling_Segment). Figs. 32 to 35 illustrate the main data definition contents (semantics) of a DSS. This syntax includes respective pieces of information of "sync_byte", "segment_type", "page_id", "segment_length", and "dss_version_number". The "segment_type" is 8-bit data representing a segment type, and herein is a value representing the DSS. The "segment_length" is 8-bit data representing the number of subsequent bytes.

A 1-bit flag of "disparity_shift_update_sequence_page_flag" indicates whether disparity information sequentially updated in the caption display period is present as disparity information in units of a page. "1" represents presence, and "0" represents absence. An 8-bit field of "page_default_disparity_shift" represents fixed disparity information in units of a page, that is, disparity information that is commonly used in the caption display period. When the flag of "disparity_page_update_sequence_flag" described above is "1", the reading of "disparity_shift_update_sequence()" is performed.

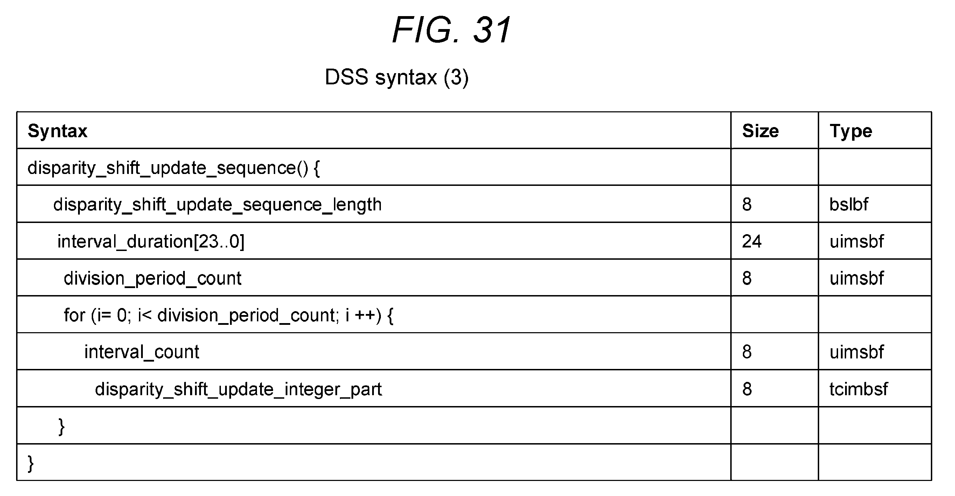

Fig. 31 illustrates an example of the syntax of "disparity shift update sequence()". The "disparity_page_update_sequence_length" is 8-bit data representing the number of subsequent bytes. A 24-bit field of "interval_duration[23..0]" specifies an interval duration (see Fig. 25) as a unit period in units of 90 KHz. That is, the "interval_ duration[23..0]" represents a 24-bit value of the interval duration measured with a 90 KHz clock.

The reason for being the 24-bit length with respect to the 33-bit length of the PTS inserted into a header portion of the PES is as follows. That is, a time exceeding 24 hours can be represented by the 33-bit length, but it is an unnecessary length as the interval duration in the caption display period. Also, by the 24-bit representation, the data size can be reduced and compact transmission can be performed. Also, 24 bits is 8x3 bits, and byte alignment is facilitated.

An 8-bit field of "division_period_count" represents the number of division periods that are influenced by the disparity information. For example, in the case of the update example illustrated in Fig. 25, the number of division periods is "7" corresponding to the starting time T1_0 0 and the subsequent update times T1_1 to T1_6. A "for" loop below is repeated the number of times represented by the 8-bit field of "division_period_count".

An 8-bit field of "interval_count" represents the number of interval periods. For example, in the case of the update example illustrated in Fig. 25, it correspond to M, N, P, Q, R, and S. An 8-bit field of "disparity_shift_update_integer_part" represents the disparity information. The "interval_count" is "0" corresponding to the disparity information at the starting time (the initial value of the disparity information). That is, when the "interval_count" is "0", the "disparity_page_update" represents the disparity information at the starting time (the initial value of the disparity information).

A "while" loop of Fig. 29 is repeated when the data length processed up to that time (processed_length) does not reach the segment data length (segment_length). In the "while" loop, the disparity information in units of a region or a subregion in the region is disposed. Herein, the region includes one or more subregions, and the region and the subregion may be the same.

Information of "region_id" is included in the "while" loop. A 1-bit flag of "disparity_shift_update_sequence_region_flag" is flag information indicating whether there is "disparity_shift_update_sequence()" for all the subregions in the region. A 2-bit field of "number_of_subregions_minus_1" represents the value equal to the number of subregions in the region minus 1. When number_of_subregions_minus_1 = 0, the region includes one subregion that has the same dimension as the region.

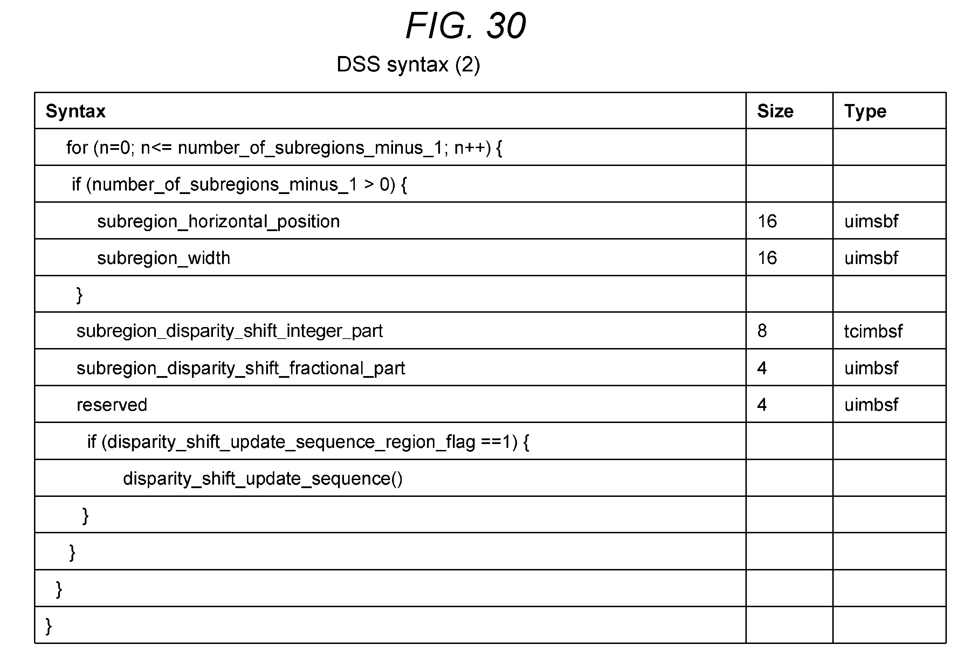

When number_of_subregions_minus_1 > 0, the region includes a plurality of subregions divided in the horizontal direction. In the "for" loop of Fig. 30, information of "subregion_horizontal_position" and "subregion_width" corresponding to the number of subregions is included. A 16-bit field of "subregion_horizontal_position" represents the pixel position of the left of the subregion. The "subregion_width" represents the horizontal width of the subregion with the number of pixels.

An 8-bit field of "subregion_disparity_shift_integer_part" represents fixed disparity information in units of a region (in units of a subregion), that is, an integer part of the disparity information that is commonly used in the caption display period. A 4-bit field of "subregion_disparity_shift_fractional_part" represents fixed disparity information in units of a region (in units of a subregion), that is, a fractional part of the disparity information that is commonly used in the caption display period. When the flag of "disparity_shift_update_sequence_region_flag" described above is "1", the reading of "disparity_shift_update_sequence()" (see Fig. 31) is performed.

[Concept of Broadcast Reception]

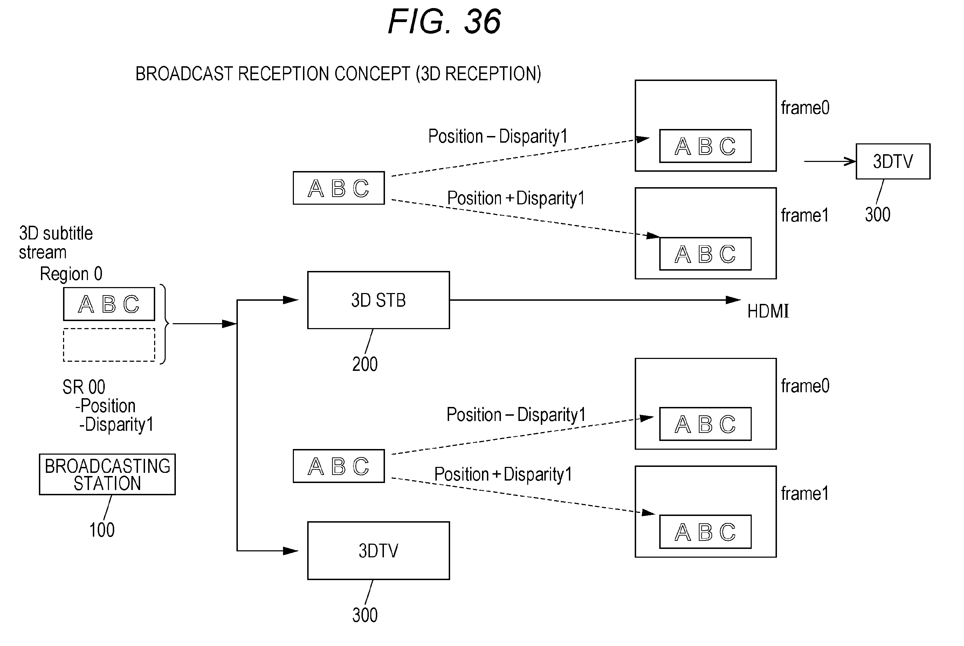

Fig. 36 illustrates the concept of broadcast reception in the case where a set-top box 200 and a television receiver 300 are 3D-compatible devices. In this case, in the broadcasting station 100, a subregion SR 00 is defined in a region Region 0, and the disparity information Disparity 1 is set. Herein, it is assumed that the region Region 0 and the subregion SR 00 are the same region. Together with the stereoscopic image data, the subtitle data and the display control information (disparity information Disparity 1 and region information Position of the subregion) are transmitted from the broadcasting station 100.

First, a description will be given of the case of reception by the set-top box 200 that is a 3D-compatible device. In this case, the set-top box 200 reads the respective segment data constituting the subtitle data from the subtitle data stream, reads the DSS segment data including the display control information such as the disparity information, and uses the read data. In this case, the set-top box 200 can identify the respective segments and the DSS segment constituting the subtitle data by the page IDs allocated to the respective segments.

Also, in this case, based on the language information and the subtitle type information described in the subtitle descriptor in association with the page IDs (see Fig. 12), the set-top box 200 can recognize the language of a subtitle (caption) and can recognize that the DSS segment is a segment including display control information such as disparity information.

That is, the subtitle type information "subtitling_type" associated with the composition page ID having the same value as the page ID allocated to each segment constituting the subtitle data is set to "2D". On the other hand, the subtitle type information "subtitling_type" associated with the composition page ID having the same value as the page ID allocated to the DSS segment is set to "3D".

Also, the language information (ISO language code) associated with the composition page ID having the same value as the page ID allocated to each segment constituting the subtitle data is set to represent the language of a subtitle (caption). On the other hand, the language information (ISO language code) associated with the composition page ID having the same value as the page ID allocated to the DSS segment is set to represent a non-language.

The set-top box 200 is a 3D-compatible device. The set-top box 200 determines a segment to be read, based on the subtitle type information and the language information in the following manner. That is, the set-top box 200 determines each segment, which corresponds to the subtitle type "2D" and has language information (ISO language code) constituting the subtitle data representing a predetermined language, as a segment to be read. Also, the set-top box 200 determines the DSS segment, which corresponds to the subtitle type "3D" and has language information (ISO language code) representing a non-language, as a segment to be read.

The set-top box 200 generates region display data for displaying a subtitle, based on the subtitle data. The set-top box 200 obtains output stereoscopic image data by superimposing the region display data on a left-eye image frame (frame0) portion and a right-eye image frame (frame1) portion constituting the stereoscopic image data.

Herein, the set-top box 200 shifts the positions of the respective superimposed display data based on the disparity information. Also, the set-top box 200 changes the superimposition position, the size, and the like appropriately according to a transmission format of the stereoscopic image data (Side By Side scheme, Top & Bottom scheme, Frame Sequential scheme, or a format scheme in which each view has a full-screen size).

The set-top box 200 transmits the output stereoscopic image data obtained as described above, to the 3D-compatible television receiver 300 through, for example, an HDMI digital interface. The television receiver 300 performs 3D signal processing on the stereoscopic image data received from the set-top box 200, to generate left-eye image data and right-eye image data on which the subtitle is superimposed. The television receiver 300 displays a binocular disparity image (left-eye image and right-eye image) on a display panel such as an LCD to allow a user to recognize a stereoscopic image.

Next, a description will be given of the case of reception by the television receiver 300 that is a 3D-compatible device. In this case, the television receiver 300 reads the respective segment data constituting the subtitle data from the subtitle data stream, reads the DSS segment data including the display control information such as the disparity information, and uses the read data.

In this case, like the above-described set-top box 200, the television receiver 300 can identify the respective segments and the DSS segment constituting the subtitle data by the page IDs allocated to the respective segments. Also, like the above-described set-top box 200, based on the language information and the subtitle type information described in the subtitle descriptor in association with the page IDs, the television receiver 300 can recognize the language of a subtitle (caption) and can recognize that the DSS segment is a segment including display control information such as disparity information.

The television receiver 300 generates region display data for displaying a subtitle, based on the subtitle data. The television receiver 300 superimposes the region display data on the left-eye image data and the right-eye image data obtained by performing processing according to a transmission format on the stereoscopic image data, to generate left-eye image data and right-eye image data on which the subtitle is superimposed. The television receiver 300 displays a binocular disparity image (left-eye image and right-eye image) on a display panel such as an LCD to allow a user to recognize a stereoscopic image.

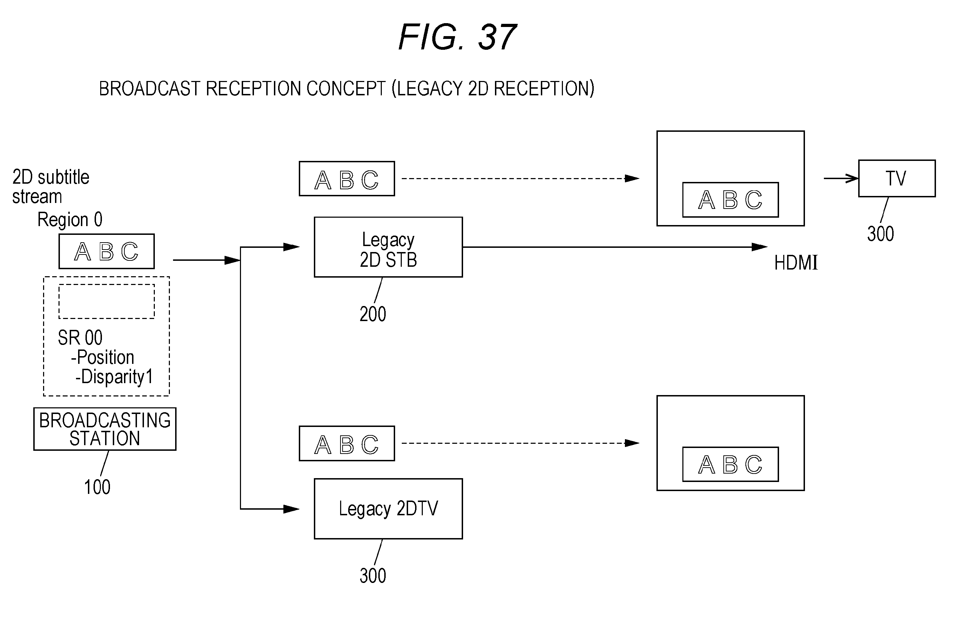

Fig. 37 illustrates the concept of broadcast reception in the case where the set-top box 200 and the television receiver 300 are legacy 2D-compatible devices. In this case, as in the case of Fig. 36, together with the stereoscopic image data, the subtitle data and the display control information (disparity information "Disparity 1" and region information "Position" of the subregion) are transmitted from the broadcasting station 100.

First, a description will be given of the case of reception by the set-top box 200 that is a legacy 2D-compatible device. In this case, the set-top box 200 reads only the respective segment data constituting the subtitle data from the subtitle data stream, and uses the read data. In this case, the set-top box 200 can identify the respective segments and the DSS segment constituting the subtitle data by the page IDs allocated to the respective segments.

The set-top box 200 reads only the respective segment data constituting the subtitle data based on the page IDs, and skips data of the DSS segment. In this case, the set-top box 200 can more securely skip the DSS segment data by referring to the language information and the subtitle type information described in the subtitle descriptor (see Fig. 12). Since the set-top box 200 does not read the DSS segment data, the reception processing can be prevented from being interrupted by the reading.

As described above, the subtitle type information "subtitling_type" associated with the composition page ID having the same value as the page ID allocated to the DSS segment is set to "3D". Also, the language information (ISO language code) associated with the composition page ID having the same value as the page ID allocated to the DSS segment is set to represent, for example, a non-language.

The set-top box 200 is a legacy 2D-compatible device. Therefore, the set-top box 200 cannot understand the meaning of the subtitle type information "3D". Also, when the language information (ISO language code) is set to a non-language, the set-top box 200 cannot understand the meaning thereof, or understands that it is data irrelevant to the language selected by the user or selected automatically by the device. Thus, the set-top box 200 reads only the data of each segment, which corresponds to the subtitle type "2D" and has language information (ISO language code) constituting the subtitle data representing a predetermined language, and skips the DSS segment data.

The set-top box 200 generates region display data for displaying a subtitle, based on the subtitle data. The set-top box 200 obtains output 2D image data by superimposing the region display data on the 2D image data that has been obtained by performing the processing according to the transmission format on the stereoscopic image data.

The set-top box 200 transmits the output 2D image data obtained as described above, to the television receiver 300 through, for example, an HDMI digital interface. The television receiver 300 displays a 2D image according to the 2D image data received from the set-top box 200.

Next, a description will be given of the case of reception by the television receiver 300 that is a 2D-compatible device. In this case, the television receiver 300 reads only the respective segment data constituting the subtitle data from the subtitle data stream, and uses the read data. In this case, like the above-described set-top box 200, the television receiver 300 reads only the respective segment data constituting the subtitle data based on the page IDs, and skips the DSS segment data.

In this case, like the above-described set-top box 200, the television receiver 300 can more securely skip the DSS segment data by referring to the language information and the subtitle type information described in the subtitle descriptor (see Fig. 12). Since the set-top box 200 does not read the DSS segment data, the reception processing can be prevented from being interrupted by the reading.

The television receiver 300 generates region display data for displaying a subtitle, based on the subtitle data. The television receiver 300 obtains 2D image data by superimposing the region display data on the 2D image data that has been obtained by performing the processing according to the transmission format on the stereoscopic image data. The television receiver 300 displays a 2D image according to the 2D image data.

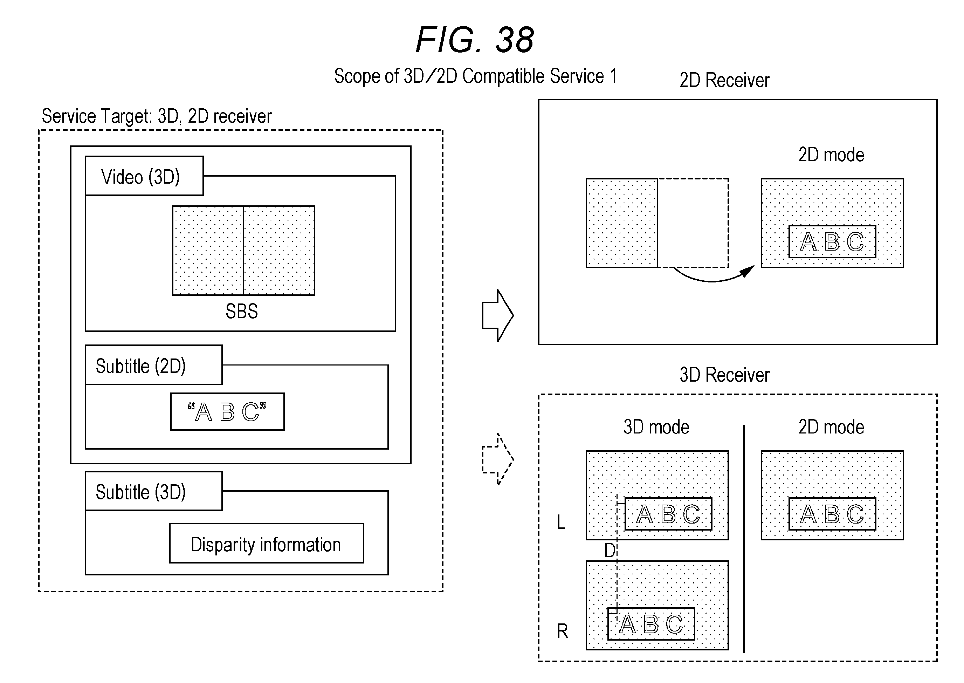

Fig. 38 illustrates the concept of broadcast reception in the case where the above-described receiver (set-top box 200, television receiver 300) is a legacy 2D-compatible device (2D receiver) and in the case where the receiver is a 3D-compatible device (3D receiver). Also, in this drawing, a stereoscopic image data (3D image data) transmission scheme is a Side By Side scheme.

Also, in the case of the 3D-compatible device (3D receiver), a 3D mode or a 2D mode can be selected. When the 3D mode is selected by the user, the case is the same as described with reference to Fig. 36. When the 2D mode is selected by the user, the case is the same as the case of the 2D-compatible device (2D receiver) described with reference to Fig. 37.

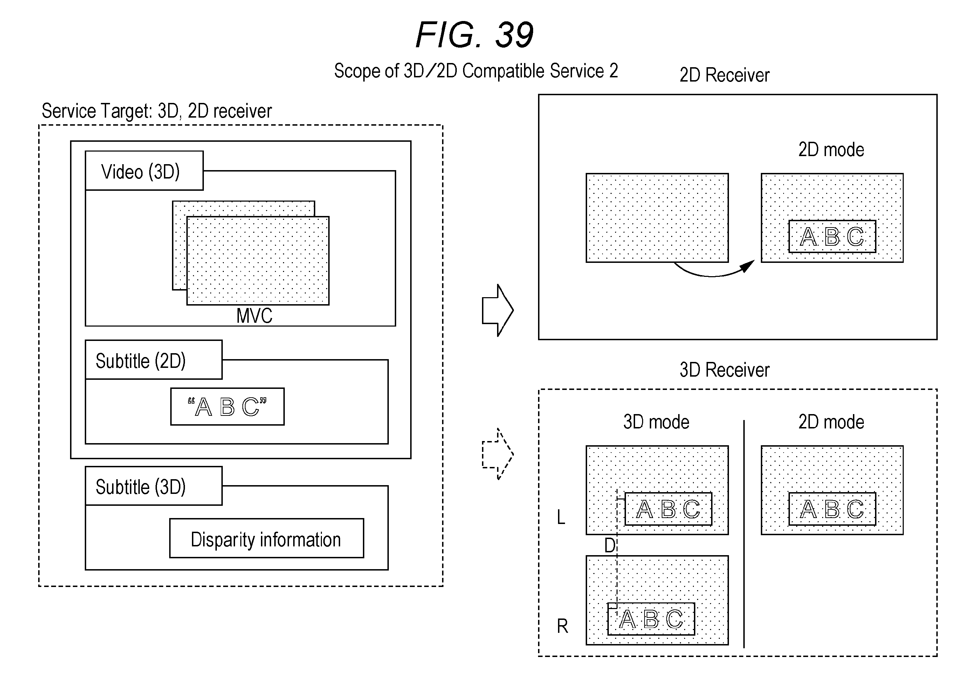

Fig. 39 illustrates the other concept of broadcast reception in the case where the above-described receiver (set-top box 200, television receiver 300) is a legacy 2D-compatible device (2D receiver) and in the case where the receiver is a 3D-compatible device (3D receiver). Also, in an example of the drawing, stereoscopic image data (3D image data) is transmitted by a H.264/MVC (Multi-view Video Coding) scheme. In this case, for example, left-eye image data is transmitted as image data of a base view, and right-eye image data is transmitted as image data of a non-base view. Although not described in detail, the operations of the legacy 2D-compatible device (2D receiver) and the 3D-compatible device (3D receiver) in this case are the same as those illustrated in the example of Fig. 38.

In the transmission data generating unit 110 illustrated in Fig. 2, the subtitle data stream included in the output transport stream TS includes the DSS segment including the disparity information or the like, in addition to the respective segments constituting the subtitle data for 2D display (see Fig. 11). In this case, the value of the page IDs allocated to the respective segments constituting the subtitle data for 2D display is set to be different from the value of the page ID allocated to the DSS segment, so that the segments can be identified.

Therefore, in the legacy 2D-compatible receiving apparatus of the receiving side, the reception processing can be performed by reading only the respective segments constituting the subtitle data from the subtitle data stream. That is, in the 2D-compatible receiving apparatus, since the DSS segment data need not be read from the subtitle data stream, the reception processing can be prevented from being interrupted by the reading.

Also, in the transmission data generating unit 110 illustrated in Fig. 2, the subtitle descriptor inserted into the output transport stream TS describes the language information and the subtitle type information in association with the page IDs allocated to the respective segments. Therefore, since the legacy 2D-compatible receiving apparatus of the receiving side can more securely skip the DSS segment data by referring to the subtitle type information and the language information.

Also, in the transmission data generating unit 110 illustrated in Fig. 2, since the DSS segment including the disparity information sequentially updated in the subtitle display period can be transmitted, the display positions of the left-eye subtitle and the right-eye subtitle can be dynamically controlled. Accordingly, in the receiving side, the disparity provided between the left-eye subtitle and the right-eye subtitle can be dynamically changed in conjunction with a change in the image content.

Also, in the transmission data generating unit 110 illustrated in Fig. 2, the disparity information of the frame for each update frame interval included in the DSS segment obtained by the subtitle encoder 118 is not an offset value from the previous disparity information, but is the disparity information itself. Therefore, in the receiving side, even when an error occurs in the interpolation process, the recovery from the error can be performed within a predetermined delay time.

[Description of Set-top Box]

Returning to Fig. 1, the set-top box 200 receives a transport stream TS that is transmitted on a broadcast wave from the broadcasting station 100. The transport stream TS includes audio data and stereoscopic image data including left-eye image data and right-eye image data. Also, the transport stream TS further includes subtitle data (including display control information) for a stereoscopic image for displaying a subtitle (caption).

That is, the transport stream TS includes a video data stream, an audio data stream, and a subtitle data stream (private data stream) as PES streams. As illustrated in Fig. 11 described above, the subtitle data stream includes the respective segments of DDS, PCS, RCS, CDS, ODS, and EDS constituting the subtitle data, and further includes the DSS segment including the disparity information or the like. The page ID (= page_id1) allocated to the respective segments of DDS, PCS, RCS, CDS, ODS, and EDS is different from the page ID (= page_id2) allocated to the DSS segment.

Also, the subtitle descriptor is inserted into the transport stream TS in association with the subtitle data stream (see Fig. 12). The subtitle descriptor describes the language information and the subtitle type information in association with the respective page IDs described above.

That is, the subtitle type information "subtitling_type" associated with the composition page ID having the same value as the page ID allocated to each segment constituting the subtitle data is set to "2D". On the other hand, the subtitle type information "subtitling_type" associated with the composition page ID having the same value as the page ID allocated to the DSS segment is set to "3D".

Also, the language information (ISO language code) associated with the composition page ID having the same value as the page ID allocated to each segment constituting the subtitle data is set to represent the language of a subtitle (caption). On the other hand, the language information (ISO language code) associated with the composition page ID having the same value as the page ID allocated to the DSS segment is set to represent a non-language.

The set-top box 200 includes a bit stream processing unit 201. When the set-top box 200 is a 3D-compatible device (3D STB), the bit stream processing unit 201 acquires stereoscopic image data, audio data, and subtitle data (including display control information) from the transport stream TS. In this case, the bit stream processing unit 201 acquires the respective segment data constituting the subtitle data from the subtitle data stream, and reads the DSS segment data including the display control information such as the disparity information.

The bit stream processing unit 201 uses the stereoscopic image data and the subtitle data (including the display control information) to generate output stereoscopic image data in which the subtitle is superimposed on a left-eye image frame (frame0) portion and a right-eye image frame (frame1) portion (see Fig. 36). In this case, a disparity can be provided between a subtitle superimposed on a left-eye image (a left-eye subtitle) and a subtitle superimposed on a right-eye image (a right-eye subtitle).

For example, as described above, the display control information added to the subtitle data for a stereoscopic image received from the broadcasting station 100 includes disparity information, and a disparity can be provided between a left-eye subtitle and a right-eye subtitle based on the disparity information. In this manner, since the disparity is provided between the left-eye subtitle and the right-eye subtitle, the user can recognize a subtitle (caption) in front of an image.

When the service is determined to be a 3D service, the set-top box 200 acquires the respective segment data constituting the subtitle data from the subtitle data stream, and acquires the DSS segment data including the display control information such as the disparity information. By using the subtitle (caption) data and the disparity information, the set-top box 200 performs processing of attaching a subtitle (caption) to a background image (superimposition processing) as described above. Also when the disparity information cannot be acquired, the bit stream processing unit 201 performs processing of attaching a subtitle (caption) to a background image (superimposition processing) according to the logic of the receiver.

The set-top box 200 determines that the service is a 3D service, for example, in the following cases (1) to (3).

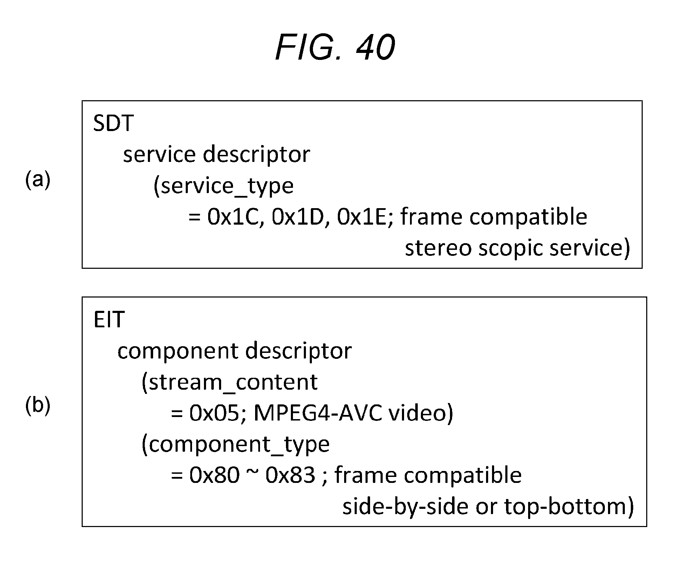

(1) For SDT, in the case where the "service_type" of a service descriptor is 3D (0x1C, 0x1D, 0x1E=frame compatible) (see Fig. 40(a)).

(2) For SDT or EIT, in the case where the "stream_content" of a component descriptor is MPEG4-AVC video(0x05), and the "component_type" represents a 3D format of 0x80~0x83 (see Fig. 40(b)).

(3) In the case where both of the above-described (1) and (2) are satisfied.

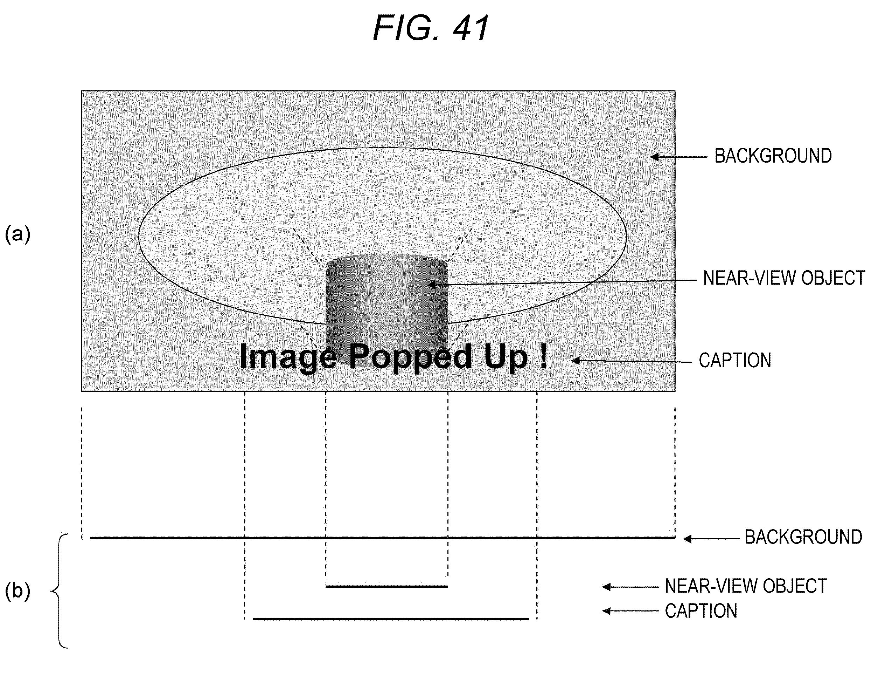

Fig. 41(a) illustrates an example of the display of a subtitle (caption) on an image. In the display example, a caption is superimposed on an image including a background and a near-view object. Fig. 41(b) illustrates that the perspective of a background, a near-view object and a caption is expressed and the caption is recognized at the frontmost position.

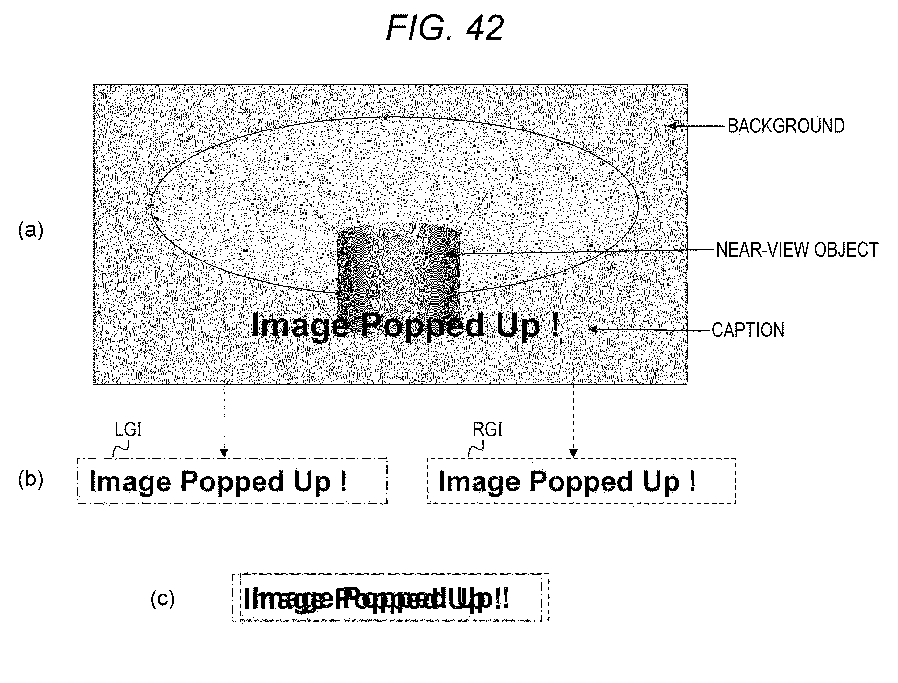

Fig. 42(a) illustrates an example of the display of a subtitle (caption) on an image as in Fig. 41(a). Fig. 42(b) illustrates a left-eye caption LGI superimposed on a left-eye image and a right-eye caption RGI superimposed on a right-eye image. Fig. 42(c) illustrates that a disparity is provided between the left-eye caption LGI and the right-eye caption RGI so that the caption is recognized at the frontmost position.

Also, when the set-top box 200 is a legacy 2D-compatible device (2D STB), the bit stream processing unit 201 acquires stereoscopic image data, audio data, and subtitle data (bit map pattern data that does not include display control information) from the transport stream TS. The bit stream processing unit 201 uses the stereoscopic image data and the subtitle data to generate 2D image data on which the subtitle (caption) is superimposed (see Fig. 37).

In this case, the bit stream processing unit 201 acquires only the respective segment data constituting the subtitle data from the subtitle data stream. That is, in this case, since the DSS segment is not read from the subtitle data stream, the reception processing can be prevented from being interrupted by the reading. In this case, the bit stream processing unit 201 reads only the respective segment data constituting the subtitle data based on the page IDs, and skips the DSS segment data.

Also, in this case, the bit stream processing unit 201 can more securely skip the DSS segment data by referring to the language information and the subtitle type information described in the subtitle descriptor as described above. Since the bit stream processing unit 201 does not read the DSS segment data, the reception processing can be prevented from being interrupted by the reading.

[Example of Configuration of Set-top Box]

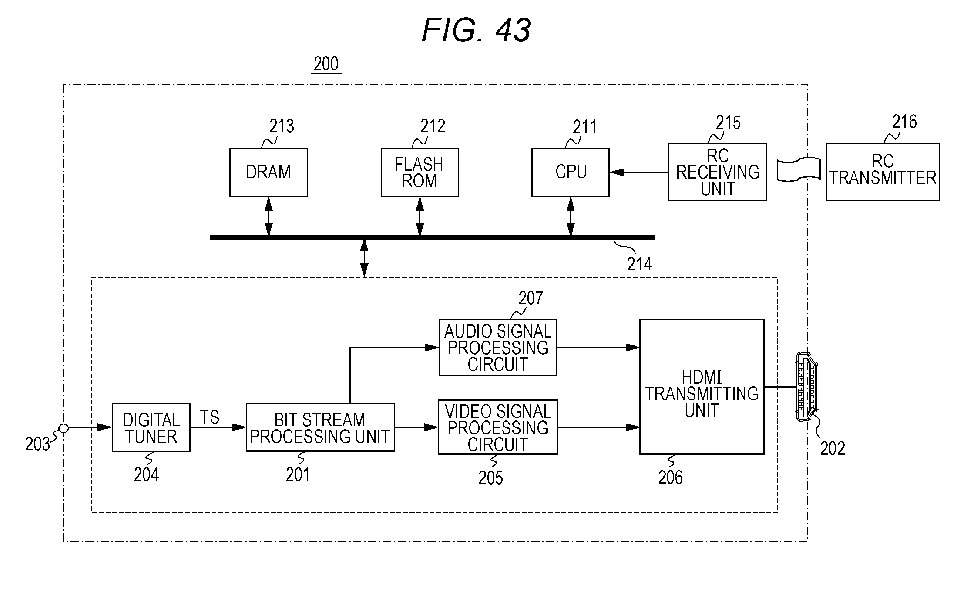

An example of the configuration of the set-top box 200 will be described. Fig. 43 illustrates an example of the configuration of the set-top box 200. The set-top box 200 includes a bit stream processing unit 201, an HDMI terminal 202, an antenna terminal 203, a digital tuner 204, a video signal processing circuit 205, an HDMI transmitting unit 206, and an audio signal processing circuit 207. Also, the set-top box 200 includes a CPU 211, a flash ROM 212, a DRAM 213, an internal bus 214, a remote control receiving unit (RC receiving unit) 215, and a remote control transmitter (RC transmitter) 216.

The antenna terminal 203 is a terminal that is configured to input a television broadcast signal received through a reception antenna (not illustrated). The digital tuner 204 processes the television broadcast signal input to the antenna terminal 203, and outputs a transport stream TS (bit stream data) corresponding to a channel selected by a user.

Based on the transport stream TS, the bit stream processing unit 201 outputs audio data and output stereoscopic image data on which a subtitle is superimposed. When the set-top box 200 is a 3D-compatible device (3D STB), the bit stream processing unit 201 acquires stereoscopic image data, audio data, and subtitle data (including display control information) from the transport stream TS.

The bit stream processing unit 201 generates output stereoscopic image data by superimposing the subtitle on a left-eye image frame (frame0) portion and a right-eye image frame (frame1) portion constituting the stereoscopic image data (see Fig. 36). Herein, based on the disparity information, a disparity is provided between a subtitle superimposed on the left-eye image (left-eye subtitle) and a subtitle superimposed on the right-eye image (right-eye subtitle).

That is, the bit stream processing unit 201 generates region display data for displaying a subtitle, based on the subtitle data. The bit stream processing unit 201 obtains output stereoscopic image data by superimposing the region display data on a left-eye image frame (frame0) portion and a right-eye image frame (frame1) portion constituting the stereoscopic image data. Herein, the bit stream processing unit 201 shifts the positions of the respective superimposed display data based on the disparity information.

Also, when the set-top box 200 is a 2D-compatible device (2D STB), the bit stream processing unit 201 acquires stereoscopic image data, audio data, and subtitle data (not including display control information). The bit stream processing unit 201 uses the stereoscopic image data and the subtitle data to generate 2D image data on which the subtitle is superimposed (see Fig. 37).

That is, the bit stream processing unit 201 generates region display data for displaying a subtitle, based on the subtitle data. The bit stream processing unit 201 obtains output 2D image data by superimposing the region display data on the 2D image data that has been obtained by performing the processing according to the transmission format on the stereoscopic image data.

The video signal processing circuit 205 performs image quality adjustment processing on the image data, which has been obtained by the bit stream processing unit 201, as necessary, and supplies the processed image data to the HDMI transmitting unit 206. The audio signal processing circuit 207 performs sound quality adjustment processing on the audio data, which has been output from the bit stream processing unit 201, as necessary, and supplies the processed audio data to the HDMI transmitting unit 206.

The HDMI transmitting unit 206 transmits, for example, uncompressed image data and audio data to the HDMI terminal 202 by HDMI-based communication. In this case, being transmitted on an HDMI TMDS channel, the image data and audio data are packed and output from the HDMI transmitting unit 206 to the HDMI terminal 202.

The CPU 211 controls an operation of each unit of the set-top box 200. The flash ROM 212 stores control software and data. The DRAM 213 constitutes a work area of the CPU 211. The CPU 211 deploys the software or data read from the flash ROM 212 on the DRAM 213 and activates the software to control each unit of the set-top box 200.

The RC receiving unit 215 receives a remote control signal (remote control code) transmitted from the RC transmitter 216, and supplies the received remote control signal to the CPU 211. The CPU 211 controls each unit of the set-top box 200 based on the remote control code. The CPU 211, the flash ROM 212, and the DRAM 213 are connected to the internal bus 214.

An operation of the set-top box 200 will be described briefly. The television broadcast signal input to the antenna terminal 203 is supplied to the digital tuner 204. The digital tuner 204 processes the television broadcast signal and outputs a transport stream TS (bit stream data) corresponding to a channel selected by the user.

The transport stream TS (bit stream data) output from the digital tuner 204 is supplied to the bit stream processing unit 201. The bit stream processing unit 201 generates output image data to be output to the television receiver 300 as follows.

When the set-top box 200 is a 3D-compatible device (3D STB), stereoscopic image data, audio data, and subtitle data (including display control information) are acquired from the transport stream TS. The bit stream processing unit 201 generates output stereoscopic image data by superimposing the subtitle on a left-eye image frame (frame0) portion and a right-eye image frame (frame1) portion constituting the stereoscopic image data. Herein, based on the disparity information, a disparity is provided between a left-eye subtitle superimposed on a left-eye image and a right-eye subtitle superimposed on a right-eye image.

Also, when the set-top box 200 is a 2D-compatible device (2D STB), stereoscopic image data, audio data, and subtitle data (not including display control information) are acquired. The bit stream processing unit 201 uses the stereoscopic image data and the subtitle data to generate 2D image data on which the subtitle is superimposed.

The output image data obtained by the bit stream processing unit 201 is supplied to the video signal processing circuit 205. The video signal processing circuit 205 performs image quality adjustment processing on the output image data as necessary. The processed image data output from the video signal processing circuit 205 is supplied to the HDMI transmitting unit 206.

Also, the audio data obtained by the bit stream processing unit 201 is supplied to the audio signal processing circuit 207. The audio signal processing circuit 207 performs sound quality adjustment processing on the audio data as necessary. The processed audio data output from the audio signal processing circuit 207 is supplied to the HDMI transmitting unit 206. The image data and the audio data supplied to the HDMI transmitting unit 206 are transmitted through an HDMI TMDS channel from the HDMI terminal 202 to the HDMI cable 400.

[Example of Configuration of Bit Stream Processing Unit]

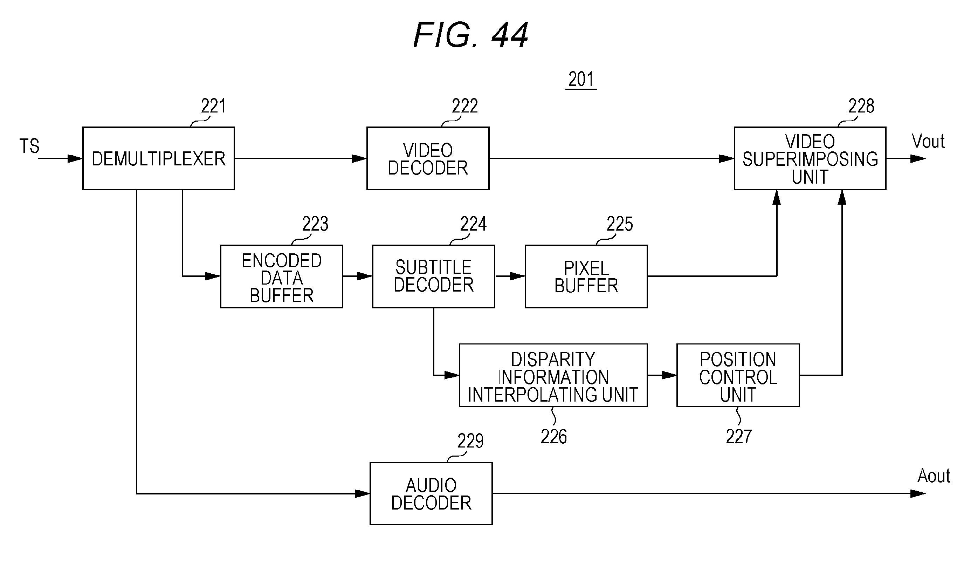

Fig. 44 illustrates an example of the configuration of the bit stream processing unit 201 in the case where the set-top box 200 is a 3D-compatible device (3D STB). The bit stream processing unit 201 has a configuration corresponding to the transmission data generating unit 110 illustrated in Fig. 2 described above. The bit stream processing unit 201 includes a demultiplexer 221, a video decoder 222, and an audio decoder 229.

Also, the bit stream processing unit 201 includes an encoded data buffer 223, a subtitle decoder 224, a pixel buffer 225, a disparity information interpolating unit 226, a position control unit 227, and a video superimposing unit 228. Herein, the encoded data buffer 223 constitutes a decoding buffer.

The demultiplexer 221 extracts a video data stream packet and an audio data stream packet from the transport stream TS, and provides the extracted packets to the respective decoders for decoding. In addition, the demultiplexer 221 extracts the subtitle data stream and temporarily stores the extracted subtitle data stream in the encoded data buffer 223.

The video decoder 222 performs opposite processing to the video encoder 112 of the transmission data generating unit 110 described above. That is, the video decoder 222 reconstructs a video data stream from the video packet extracted by the demultiplexer 221, performs encoding processing, and obtains stereoscopic image data including left-eye image data and right-eye image data. Examples of the transmission format of the stereoscopic image data include a Side By Side scheme, a Top & Bottom scheme, a Frame Sequential scheme, and a video transmission format scheme in which each view occupies a full-screen size.

The subtitle decoder 224 performs opposite processing to the subtitle encoder 125 of the transmission data generating unit 110 described above. That is, the subtitle decoder 224 reconstructs a stream from the packet of the subtitle data stream stored in the encoded data buffer 223, and performs decoding processing to acquire the following segment data. That is, the subtitle decoder 224 acquires the respective segment data constituting the subtitle data from the subtitle data stream, and acquires the DSS segment data including the display control information such as the disparity information.

Based on the respective segment data and the subregion region information constituting the subtitle data, the subtitle decoder 224 generates region display data (bit map data) for displaying the subtitle. Herein, a transparent color is allocated to a region that is located in the region and is not surrounded by subregions. The pixel buffer 225 temporarily stores the display data.

The video superimposing unit 228 obtains output stereoscopic image data Vout. In this case, the video superimposing unit 228 superimposes the display data stored in the pixel buffer 225, on a left-eye image frame (frame0) portion and a right-eye image frame (frame1) portion of the stereoscopic image data obtained by the video decoder 222. In this case, the video superimposing unit 228 changes the superimposition position, the size, and the like appropriately according to a transmission scheme of the stereoscopic image data (such as a Side By Side scheme, a Top & Bottom scheme, a Frame Sequential scheme, or an MVC scheme). The video superimposing unit 228 outputs the output stereoscopic image data Vout to the outside of the bit stream processing unit 201.

The disparity information interpolating unit 226 provides the disparity information obtained by the subtitle decoder 224 to the position control unit 227. As necessary, the disparity information interpolating unit 226 performs interpolation processing on the disparity information to be provided to the position control unit 227. The position control unit 227 shifts the position of the display data superimposed on each frame, based on the disparity information (see Fig. 36). In this case, based on the disparity information, the position control unit 227 provides a disparity by shifting the display data (caption pattern data) superimposed on the left-eye image frame (frame0) portion and the right-eye image frame (frame1) portion to be in opposite directions.

Also, the display control information includes disparity information that is commonly used in the caption display period. Also, the display control information may include disparity information that is sequentially updated in the caption display period. As described above, the disparity information sequentially updated in the caption display period includes disparity information of the initial frame of the caption display period and disparity information of a frame for each of the subsequent update frame intervals.

As for the disparity information commonly used in the caption display period, the position control unit 227 uses the disparity information without change. On the other hand, as for the disparity information sequentially updated in the caption display period, the position control unit 227 uses the disparity information interpolated by the disparity information interpolating unit 226 as necessary. For example, the disparity information interpolating unit 226 generates disparity information of an arbitrary frame interval in the caption display period, for example, disparity information of a 1-frame interval.

As the interpolation processing, the disparity information interpolating unit 226 performs not linear interpolation processing but interpolation processing accompanied with low-pass filter (LPF) processing in the time direction (frame direction), for example. Accordingly, a change in the disparity information of a predetermined frame interval in the time direction (frame direction) after the interpolation processing becomes smooth.

Also, the audio decoder 229 performs opposite processing to the audio encoder 113 of the transmission data generating unit 110 described above. That is, the audio decoder 229 reconstructs an audio elementary stream from the audio packet extracted by the demultiplexer 221, performs encoding processing, and obtains output audio data Aout. The audio decoder 229 outputs the output audio data Aout to the outside of the bit stream processing unit 201.

An operation of the bit stream processing unit 201 illustrated in Fig. 44 will be described briefly. The transport stream TS output from the digital tuner 204 (see Fig. 43) is supplied to the demultiplexer 221. The demultiplexer 221 extracts a video data stream packet and an audio data stream packet from the transport stream TS, and supplies the extracted packets to the respective decoders. In addition, the demultiplexer 221 extracts the subtitle data stream packet from the transport stream TS and temporarily stores the extracted subtitle data stream packet in the encoded data buffer 223.

The video decoder 222 reconstructs a video data stream from the video data packet extracted by the demultiplexer 221, performs decoding processing, and obtains stereoscopic image data including left-eye image data and right-eye image data. The stereoscopic image data is supplied to the video superimposing unit 228.

The subtitle decoder 224 reads the subtitle data packet from the encoded data buffer 223 and decodes the same. Based on the respective segment data and the subregion region information constituting the subtitle data, the subtitle decoder 224 generates region display data (bit map data) for displaying the subtitle. The display data is temporarily stored in the pixel buffer 225.

The video superimposing unit 228 superimposes the display data stored in the pixel buffer 225, on the left-eye image frame (frame0) portion and the right-eye image frame (frame1) portion of the stereoscopic image data obtained by the video decoder 222. In this case, the superimposition position, the size, and the like are changed appropriately according to a transmission scheme of the stereoscopic image data (such as a Side By Side scheme, a Top & Bottom scheme, a Frame Sequential scheme, or an MVC scheme). The output stereoscopic image data Vout obtained by the video superimposing unit 228 is output to the outside of the bit stream processing unit 201.

Also, the disparity information obtained by the subtitle decoder 224 is provided through the disparity information interpolating unit 226 to the position control unit 227. The disparity information interpolating unit 226 performs interpolation processing as necessary. For example, as for the disparity information at several-frame intervals sequentially updated in the caption display period, interpolation processing is performed by the disparity information interpolating unit 226 as necessary, to generate disparity information of an arbitrary frame interval, for example, a 1-frame interval.

Based on the disparity information, the position control unit 227 shifts the display data (caption pattern data) superimposed on the left-eye image frame (frame0) portion and the right-eye image frame (frame1) portion by the video superimposing unit 228, such that they are in opposite directions. Accordingly, a disparity is provided between a left-eye subtitle displayed on the left-eye image and a right-eye subtitle displayed on the right-eye image. Accordingly, the 3D display of a subtitle (caption) is implemented according to the contents of a stereoscopic image.

Also, the audio decoder 229 reconstructs an audio elementary stream from the audio packet extracted by the demultiplexer 221, performs decoding processing, and obtains audio data Aout corresponding to the above stereoscopic image data Vout for display. The audio data Aout is output to the outside of the bit stream processing unit 201.

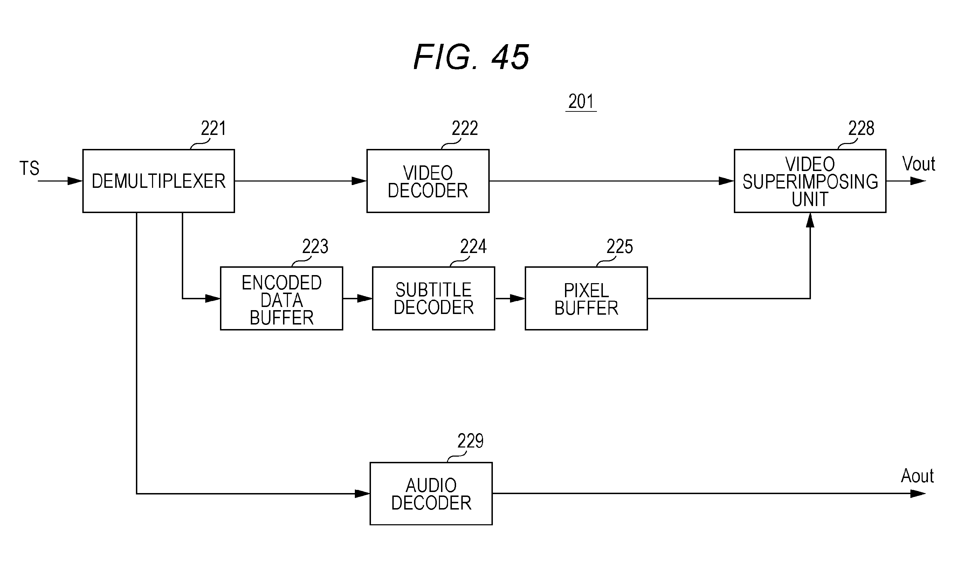

Fig. 45 illustrates an example of the configuration of the bit stream processing unit 201 in the case where the set-top box 200 is a 2D-compatible device (2D STB). In Fig. 45, the units corresponding to those of Fig. 44 are denoted by like reference numerals, and a detailed description thereof will be omitted. Hereinafter, for the convenience of description, the bit stream processing unit 201 illustrated in Fig. 44 will be referred to as the 3D-compatible bit stream processing unit 201, and the bit stream processing unit 201 illustrated in Fig. 44 will be referred to as the 2D-compatible bit stream processing unit 201.

In the 3D-compatible bit stream processing unit 201 illustrated in Fig. 44, the video decoder 222 reconstructs a video data stream from the video packet extracted by the demultiplexer 221, performs decoding processing, and obtains stereoscopic image data including left-eye image data and right-eye image data. On the other hand, in the 2D-compatible bit stream processing unit 201 illustrated in Fig. 45, the video decoder 222 acquires stereoscopic image data, cuts out left-eye image data or right-eye image data, and performs scaling processing as necessary, to obtain 2D image data.

Also, in the 3D-compatible bit stream processing unit 201 illustrated in Fig. 44, the subtitle decoder 224 reads the subtitle data packet from the encoded data buffer 223 and decodes the same. In this case, the subtitle decoder 224 reads both the respective segments and the DSS segment constituting the subtitle data.

On the other hand, in the 2D-compatible bit stream processing unit 201 illustrated in Fig. 45, the subtitle decoder 224 reads only the respective segment data constituting the subtitle data included in a subtitle data stream. In this case, the DSS segment data is skipped by referring to the page ID allocated to the respective segments and the language information and the subtitle type information described in the subtitle descriptor.

Also, in the 3D-compatible bit stream processing unit 201 illustrated in Fig. 44, the subtitle decoder 224 acquires the respective segment data constituting the subtitle data from the subtitle data stream as described above, and acquires the DSS segment data.

On the other hand, in the 2D-compatible bit stream processing unit 201 illustrated in Fig. 45, the subtitle decoder 224 acquires only the respective segment data constituting the subtitle data from the subtitle data stream. Based on the respective segment data and the subregion region information, the subtitle decoder 224 generates region display data (bit map data) for displaying the subtitle, and temporarily stores the generated data in the pixel buffer 225. In this case, the subtitle decoder 224 does not read the DSS segment data. Therefore, the reception processing can be prevented from being interrupted by the reading.

Also, in the 3D-compatible bit stream processing unit 201 illustrated in Fig. 44, the video superimposing unit 228 obtains output stereoscopic image data Vout and outputs the output stereoscopic image data Vout to the outside of the bit stream processing unit 201. In this case, the video superimposing unit 228 obtains the output stereoscopic image data Vout by superimposing the display data stored in the pixel buffer 225, on the left-eye image frame (frame0) portion and the right-eye image frame (frame1) portion of the stereoscopic image data obtained by the video decoder 222. Based on the disparity information, the position control unit 227 shifts the display data to be in opposite directions, and provides a disparity between the left-eye subtitle displayed on the left-eye image and the right-eye subtitle displayed on the right-eye image.

On the other hand, in the 2D-compatible bit stream processing unit 201 illustrated in Fig. 45, the video superimposing unit 228 obtains output 2D image data Vout by superimposing the display data stored in the pixel buffer 225 on the 2D image data obtained by the video decoder 222. The video superimposing unit 228 outputs the output 2D image data Vout to the outside of the bit stream processing unit 201.

An operation of the 2D bit stream processing unit 201 illustrated in Fig. 45 will be described briefly. Also, since an operation of the audio system is the same as that of the 3D bit stream processing unit 201 illustrated in Fig. 44, a description thereof will be omitted.

The transport stream TS output from the digital tuner 204 (see Fig. 43) is supplied to the demultiplexer 221. The demultiplexer 221 extracts a video data stream packet and an audio data stream packet from the transport stream TS, and supplies the extracted packets to the respective decoders. In addition, the demultiplexer 221 extracts the subtitle data stream packet from the transport stream TS and temporarily stores the extracted subtitle data stream packet in the encoded data buffer 223.

The video decoder 222 reconstructs a video data stream from the video data packet extracted by the demultiplexer 221, performs decoding processing, and obtains stereoscopic image data including left-eye image data and right-eye image data. The video decoder 222 cuts out the left-eye image data or the right-eye image data from the stereoscopic image data, and performs scaling processing as necessary, to obtain 2D image data. The 2D image data is supplied to the video superimposing unit 228.

Also, the subtitle decoder 224 reads the subtitle data stream from the encoded data buffer 223 and decodes the same. In this case, the subtitle decoder 224 reads only the respective segments constituting the subtitle data. In this case, the DSS segment data is skipped by referring to the page ID allocated to the respective segments and the language information and the subtitle type information described in the subtitle descriptor.

Based on the respective segment data constituting the subtitle data, the subtitle decoder 224 generates region display data (bit map data) for displaying the subtitle. The display data is temporarily stored in the pixel buffer 225. The video superimposing unit 228 obtains output 2D image data Vout by superimposing the display data (bit map data) of the subtitle stored in the pixel buffer 225 on the 2D image data obtained by the video decoder 222. The output 2D image data Vout is output to the outside of the bit stream processing unit 201.

In the set-top box 200 illustrated in Fig. 43, the transport stream TS output from the digital tuner 204 includes display control information in addition to stereoscopic image data and subtitle data. The display control information includes display control information such as disparity information and region information of a subregion. Therefore, a disparity can be provided to the display positions of the left-eye subtitle and the right-eye subtitle. Accordingly, in the display of a subtitle (caption), the consistency of a perspective between respective objects in an image can be maintained in an optimal state.

Also, in the set-top box 200 illustrated in Fig. 43, when the display control information acquired by the subtitle decoder 224 of the 3D-compatible bit stream processing unit 201 (see Fig. 44) includes the disparity information sequentially updated in the caption display period, the display positions of the left-eye subtitle and the right-eye subtitle can be dynamically controlled. Accordingly, the disparity provided between the left-eye subtitle and the right-eye subtitle can be dynamically changed in conjunction with a change in the image content.

Also, in the set-top box 200 illustrated in Fig. 43, the disparity information interpolating unit 226 of the 3D bit stream processing unit 201 (see Fig. 44) performs interpolation processing on disparity information of a plurality of frames constituting the disparity information that is sequentially updated in the caption display period (the period of a predetermined number of fames). In this case, even when disparity information is transmitted from the transmitting side at intervals of an update frame, the disparity provided between the left-eye subtitle and the right-eye subtitle can be controlled at fine intervals, for example, every frame.

Also, in the set-top box 200 illustrated in Fig. 43, the interpolation processing in the disparity information interpolating unit 226 of the 3D bit stream processing unit 201 (see Fig. 43) may be accompanied with, for example, low-pass filter processing in the time direction (frame direction). Therefore, even when disparity information is transmitted from the transmitting side at intervals of an update frame, a change in the disparity information in the time direction after the interpolation processing can be made smooth. Accordingly, it is possible to suppress a sense of discomfort that may be caused when a shift of the disparity provided between the left-eye subtitle and the right-eye subtitle becomes discontinuous every frame interval.

Also, in the set-top box 200 illustrated in Fig. 43, the subtitle decoder 224 of the 2D bit stream processing unit 201 (see Fig. 45) reads only the respective segment data constituting the subtitle data from the subtitle data stream based on the page ID allocated to the respective segments, and uses the read data. That is, the subtitle decoder 224 skips the DSS segment data included in the subtitle data stream, by the identification of the page ID. Accordingly, since the 2D bit stream processing unit 201 need not read the DSS segment data from the subtitle data stream, the reception processing can be prevented from being interrupted by the reading.

In this case, the subtitle decoder 224 can also refer to the language information and the subtitle type information described in the subtitle descriptor in association with the respective page IDs allocated to the respective segments. In this case, the subtitle type information corresponding to the DSS segment is set to "2D". Also, in this case, the language information corresponding to the DSS segment is set to represent, for example, a non-language. Accordingly, the 2D bit stream processing unit 201 can more securely skip the DSS segment data.

In addition, although not described above, when the set-top box 200 is a 3D-compatible device, the user may select a 2D display mode or a 3D display mode. In this case, when the 3D display mode is selected, the bit stream processing unit 201 may have the same configuration and operation as the 3D-compatible bit stream processing unit 201 described above (see Fig. 44). On the other hand, when the 2D display mode is selected, the bit stream processing unit 201 may have substantially the same configuration and operation as the 2D-compatible bit stream processing unit 201 described above (see Fig. 45).

[Description of Television Receiver]

Returning to Fig. 1, when being a 3D-compatible device, the television receiver 300 receives stereoscopic image data that is transmitted from the set-top box 200 through the HDMI cable 400. The television receiver 300 includes a 3D signal processing unit 301. The 3D signal processing unit 301 performs processing corresponding to the transmission format (decoding processing) on the stereoscopic image data to generate left-eye image data and right-eye image data.

[Example of Configuration of Television Receiver]

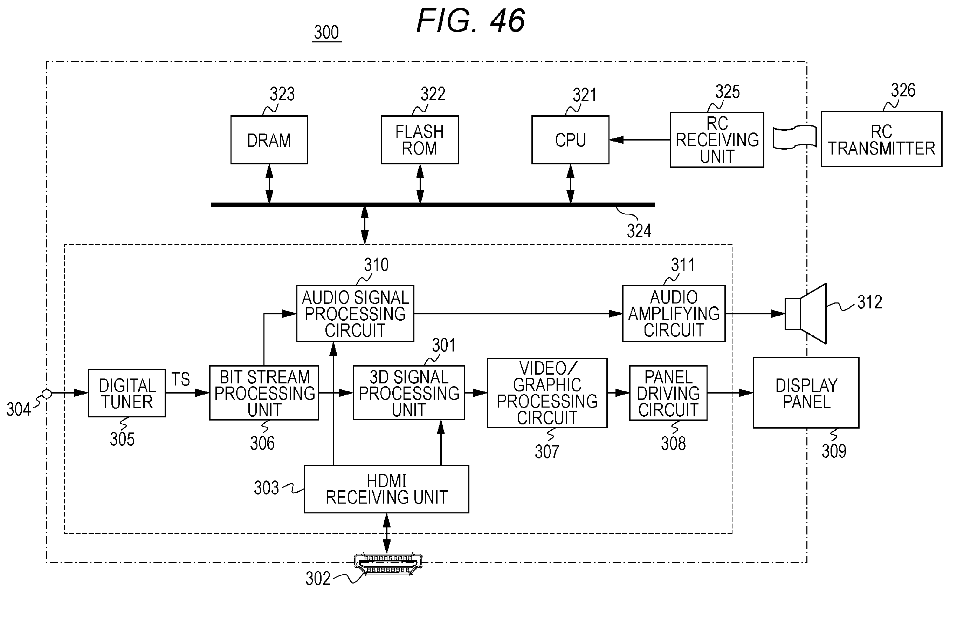

An example of the configuration of a 3D-compatible television receiver 300 will be described. Fig. 46 illustrates an example of the configuration of the television receiver 300. The television receiver 300 includes a 3D signal processing unit 301, an HDMI terminal 302, an HDMI receiving unit 303, an antenna terminal 304, a digital tuner 305, and a bit stream processing unit 306.

Also, the television receiver 300 includes a video/graphic processing circuit 307, a panel driving circuit 308, a display panel 309, an audio signal processing circuit 310, an audio amplifying circuit 311, and a speaker 312. Also, the television receiver 300 includes a CPU 321, a flash ROM 322, a DRAM 323, an internal bus 324, a remote control receiving unit (RC receiving unit) 325, and a remote control transmitter (RC transmitter) 326.

The antenna terminal 304 is a terminal that is configured to input a television broadcast signal received through a reception antenna (not illustrated). The digital tuner 305 processes the television broadcast signal input to the antenna terminal 304, and outputs a transport stream TS (bit stream data) corresponding to a channel selected by a user.

Based on the transport stream TS, the bit stream processing unit 306 outputs audio data and output stereoscopic image data on which a subtitle is superimposed. Although not described in detail, for example, the bit stream processing unit 201 has the same configuration as the 3D-compatible bit stream processing unit 201 (see Fig. 44) of the set-top box 200 described above. With respect to stereoscopic image data, the bit stream processing unit 306 synthesizes display data of a left-eye subtitle and a right-eye subtitle, and generates and outputs output stereoscopic image data superimposed with a subtitle.

Also, for example, when a transmission format of the stereoscopic image data is a Side By Side scheme, a Top & Bottom scheme, or the like, the bit stream processing unit 306 performs scaling processing to output full-resolution left-eye image data and right-eye image data. Also, the bit stream processing unit 306 outputs audio data corresponding to the image data.

The HDMI receiving unit 303 receives uncompressed image data and audio data supplied through the HDMI cable 400 to the HDMI terminal 302, by HDMI-based communication. The HDMI receiving unit 303 has a version of, for example, HDMI 1.4a, and thus can process stereoscopic image data.

The 3D signal processing unit 301 performs decoding processing on the stereoscopic image data received by the HDMI receiving unit 303, to generate full-resolution left-eye image data and right-eye image data. The 3D signal processing unit 301 performs the decoding processing corresponding to a TMDS transmission data format. Also, the 3D signal processing unit 301 does not perform any processing on the full-resolution left-eye image data and right-eye image data obtained by the bit stream processing unit 306.

The video/graphic processing circuit 307 generates image data for displaying a stereoscopic image, based on the left-eye image data and right-eye image data generated by the 3D signal processing unit 301. Also, the video/graphic processing circuit 307 performs image quality adjustment processing on the image data as necessary.

Also, with respect to the image data, the video/graphic processing circuit 307 synthesizes superimposition information data such as a menu or a program as necessary. The panel driving circuit 308 drives the display panel 309 based on the image data output from the video/graphic processing circuit 307. The display panel 309 includes, for example, an LCD (Liquid Crystal Display), a PDP (Plasma Display Panel), or the like.

The audio signal processing circuit 310 performs necessary processing such as D/A conversion on the audio data that is received by the HDMI receiving unit 303 or is obtained by the bit stream processing unit 306. The audio amplifying circuit 311 amplifies an audio signal output from the audio signal processing circuit 310, and supplies the amplified audio signal to the speaker 312.

The CPU 321 controls an operation of each unit of the television receiver 300. The flash ROM 322 stores control software and data. The DRAM 323 constitutes a work area of the CPU 321. The CPU 321 deploys the software or data read from the flash ROM 322 on the DRAM 323 and activates the software to control each unit of the television receiver 300.

The RC receiving unit 325 receives a remote control signal (remote control code) transmitted from the RC transmitter 326, and supplies the received remote control signal to the CPU 321. The CPU 321 controls each unit of the television receiver 300 based on the remote control code. The CPU 321, the flash ROM 322, and the DRAM 323 are connected to the internal bus 324.

An operation of the television receiver 300 illustrated in Fig. 46 will be described briefly. The HDMI receiving unit 303 receives stereoscopic image data and audio data transmitted from the set-top box 200 connected through the HDMI cable 400 to the HDMI terminal 302. The stereoscopic image data received by the HDMI receiving unit 303 is supplied to the 3D signal processing unit 301. Also, the audio data received by the HDMI receiving unit 303 is supplied to the audio signal processing circuit 310.

The television broadcast signal input to the antenna terminal 304 is supplied to the digital tuner 305. The digital tuner 305 processes the television broadcast signal and outputs a transport stream TS (bit stream data) corresponding to a channel selected by the user. The transport stream TS is supplied to the bit stream processing unit 306.

Based on the video data stream, the audio data stream, the 2D stream, and the subtitle data stream, the bit stream processing unit 306 obtains audio data and output stereoscopic image data superimposed with the subtitle. In this case, with respect to the stereoscopic image data, display data of the left-eye subtitle and the right-eye subtitle are synthesized to generate output stereoscopic image data superimposed with the subtitle (full-resolution left-eye image data and right-eye image data). The output stereoscopic image data is supplied through the 3D signal processing unit 301 to the video/graphic processing circuit 307.

The 3D signal processing unit 301 performs decoding processing on the stereoscopic image data received by the HDMI receiving unit 303, to generate full-resolution left-eye image data and right-eye image data. The left-eye image data and the right-eye image data are supplied to the video/graphic processing circuit 307. The video/graphic processing circuit 307 generates image data for displaying a stereoscopic image based on the left-eye image data and the right-eye image data, and also performs superimposition information data synthesizing processing such as image quality adjustment processing and OSD (On Screen Display) processing as necessary.

The image data obtained by the video/graphic processing circuit 307 is supplied to the panel driving circuit 308. Therefore, a stereoscopic image is displayed by the display panel 309. For example, the display panel 309 alternately displays a left-eye image corresponding to the left-eye image data and a right-eye image corresponding to the right-eye image data in a time-division manner. By wearing, for example, shutter glasses having a left-eye shutter and a right-eye shutter that are opened alternately in synchronization with the display of the display panel 309, a viewer can view only a left-eye image with a left eye and can view only a right-eye image with a right eye, thus recognizing a stereoscopic image.

Also, the audio data obtained by the bit stream processing unit 306 is supplied to the audio signal processing circuit 310. The audio signal processing circuit 310 performs necessary processing such as D/A conversion on the audio data that is received by the HDMI receiving unit 303 or is obtained by the bit stream processing unit 306. The audio data is amplified by the audio amplifying circuit 311, and the amplified audio data is supplied to the speaker 312. Therefore, a sound corresponding to the display image of the display panel 309 is output from the speaker 312.

In addition, Fig. 46 illustrates the 3D-compatible television receiver 300 as described above. Although not described in detail, the legacy 2D-compatible television receiver has substantially the same configuration. However, in the case of the legacy 2D-compatible television receiver, the bit stream processing unit 306 has the same configuration and operation as the 2D-compatible bit stream processing unit 201 illustrated in Fig. 45 described above. Also, in the case of the legacy 2D-compatible television receiver, the 3D signal processing unit 301 is unnecessary.

Also, in the case of the 3D-compatible television receiver 300, the user may select a 2D display mode or a 3D display mode. In this case, when the 3D display mode is selected, the bit stream processing unit 306 has the same configuration and operation as described above. On the other hand, when the 2D display mode is selected, the bit stream processing unit 306 has the same configuration and operation as the 2D-compatible bit stream processing unit 201 illustrated in Fig. 44 described above.

<2. Modification>

Also, in the above-described embodiment, an example of the case where only one language service of English "eng" is present has been illustrated (see Fig. 19). However, needless to say, the present technology may also be similarly applied to a multiple language service.

[Non-sharing of DSS Segment between Multiple PES, Language Services]

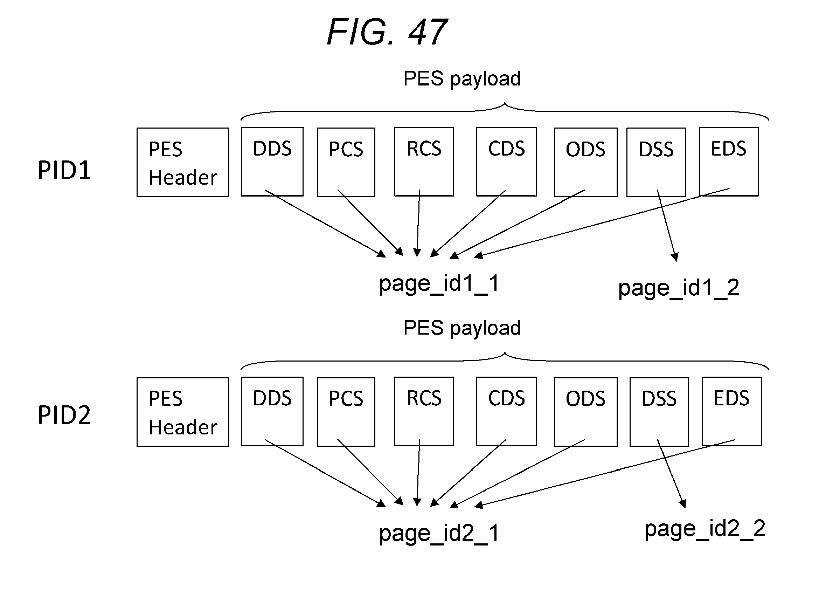

Fig. 47 illustrates an example of a configuration of the subtitle data stream included in the transport stream TS in the case where there is a two-language service. In this example, there are two language services that are a first language service of English "eng" and a second language service of German "ger".

In this configuration example, a transport stream TS includes a subtitle data stream PID1 corresponding to the first language service and a subtitle data stream PID2 corresponding to the second language service. Each of the respective subtitle data streams has the same configuration as the subtitle data stream illustrated in Fig. 11 described above.

That is, in the subtitle data stream PID1, a PES header is disposed at the beginning, followed by a PES payload including the respective segments of DDS, PCS, RCS, CDS, ODS, DSS, and EDS.

Herein, the respective segments of DDS, PCS, RCS, CDS, ODS, and EDS constitute a first segment including English "eng" subtitle (caption) data. Also, the DSS segment constitutes a second segment including disparity information.

The page ID constitutes service identification information. The page ID allocated to the first segment is set to be different from the page ID allocated to the second segment. That is, the page ID (= page_id1_1) allocated to the first segment and the page ID (= page_id1_2) allocated to the second segment are set to be different, so that they can be identified. Accordingly, the first segment and the second segment are indicated as being separate services, so that they can be identified.

Also, herein, a value of the page ID (= page_id1_2) allocated to the second segment is set to be equal to a value of the page ID (= page_id1_1) allocated to the first segment plus a predetermined value. Accordingly, the DSS segment being the second segment is associated with the respective segments of DDS, PCS, RCS, CDS, ODS, and EDS being the first segments by the page IDs.

Also, in the subtitle data stream PID2, a PES header is disposed at the beginning, followed by a PES payload including the respective segments of DDS, PCS, RCS, CDS, ODS, DSS, and EDS. Herein, the respective segments of DDS, PCS, RCS, CDS, ODS, and EDS constitute a first segment including German "ger" subtitle (caption) data. Also, the DSS segment constitutes a second segment including disparity information.

The page ID constitutes service identification information. The page ID allocated to the first segment is set to be different from the page ID allocated to the second segment. That is, the page ID (= page_id2_1) allocated to the first segment and the page ID (= page_id2_2) allocated to the second segment are set to be different, so that they can be identified. Accordingly, the first segment and the second segment are indicated as being separate services, so that they can be identified.

Also, herein, a value of the page ID (= page_id2_2) allocated to the second segment is set to be equal to a value of the page ID (= page_id2_1) allocated to the first segment plus a predetermined value. Accordingly, the DSS segment being the second segment is associated with the respective segments of DDS, PCS, RCS, CDS, ODS, and EDS being the first segments by the page IDs.

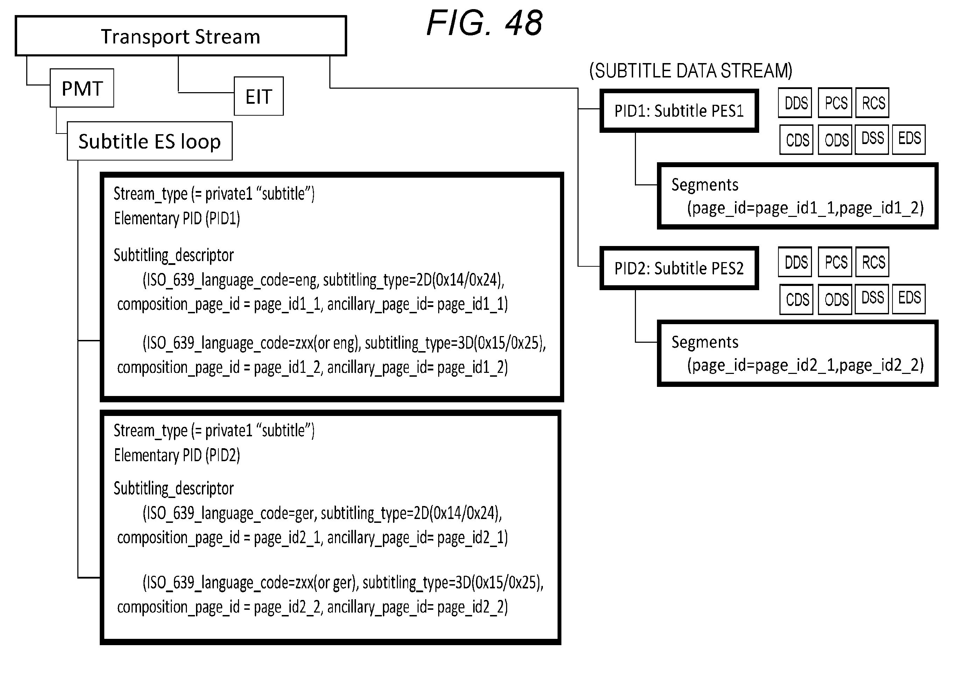

Fig. 48 illustrates an example of a configuration of the transport stream TS in the case where there is a two-language service as described above. Also, as in Fig. 12 described above, in this drawing, the illustration of video and audio-related portions is omitted for simplicity of illustration.

In this configuration example, a PES packet "Subtitle PES1" of the subtitle data stream PID1 is included. The respective segments of DDS, PCS, RCS, CDS, ODS, DSS, and EDS are included in the subtitle data stream PID1. The respective segments of DDS, PCS, RCS, CDS, ODS, and EDS as the first segments are allocated a page ID "page_id1_1" and the DSS segment as the second segment is allocated a page ID "page_id1_2", so that they can be identified.

Also, in this configuration example, a PES packet "Subtitle PES2" of the subtitle data stream PID2 is included. The respective segments of DDS, PCS, RCS, CDS, ODS, DSS, and EDS are included in the subtitle data stream PID2. The respective segments of DDS, PCS, RCS, CDS, ODS, and EDS as the first segments are allocated a page ID "page_id2_1" and the DSS segment as the second segment is allocated a page ID "page_id2_2", so that they can be identified.

The PMT includes a subtitle elementary loop having information related to the subtitle data stream. Information such as a packet identifier (PID) corresponding to the subtitle data stream PID1 is disposed in the subtitle elementary loop. Also, information such as a packet identifier (PID) corresponding to the subtitle data stream PID2 is disposed in the subtitle elementary loop.

The subtitle descriptor corresponding to the subtitle data stream PID1 describes an ISO language code (ISO_639_language_code), a subtitling type (subtitling_type), and a composition page ID (composition_page_id) in association with the respective segments of DDS, PCS, RCS, CDS, ODS, and EDS as the first segments. The value (page_id1_1) of the page ID allocated to the respective segments of DDS, PCS, RCS, CDS, ODS, and EDS of the subtitle data stream PID1 is set to be equal to the value (page_id1_1) of the composition page ID.

Also, the subtitling type (subtitling_type) corresponding to the first segment is a value representing a 2D subtitle, for example, "0x14" or "0x24" (see "component_type" in Fig. 15). In addition, an ISO language code corresponding to the first segment is set to represent the language of a subtitle (caption). In the illustrated example, the ISO language code is set to "eng" representing English.

Also, the subtitle descriptor corresponding to the subtitle data stream PID1 describes an ISO language code (ISO_639_language_code), a subtitling type (subtitling_type), and a composition page ID (composition_page_id) in association with the DSS segment as the second segment. The value (page_id1_2) of the page ID allocated to the DSS segment of the subtitle data stream PID1 is set to be equal to the value (page_id1_2) of the composition page ID.

Also, the subtitling type (subtitling_type) corresponding to the second segment is a value representing a 3D subtitle, for example, "0x15" or "0x25" (see "component_type" in Fig. 15). In addition, an ISO language code corresponding to the second segment is set to, for example, "zxx" representing a non-language or "eng" representing English.

Also, the subtitle descriptor corresponding to the subtitle data stream PID2 describes an ISO language code (ISO_639_language_code), a subtitling type (subtitling_type), and a composition page ID (composition_page_id) in association with the respective segments of DDS, PCS, RCS, CDS, ODS, and EDS as the first segments. The value (page_id2_1) of the page ID allocated to the respective segments of DDS, PCS, RCS, CDS, ODS, and EDS of the subtitle data stream PID2 is set to be equal to the value (page_id2_1) of the composition page ID.

Also, the subtitling type (subtitling_type) corresponding to the first segment is a value representing a 2D subtitle, for example, "0x14" or "0x24" (see "component_type" in Fig. 15). In addition, an ISO language code corresponding to the first segment is set to represent the language of a subtitle (caption). In the illustrated example, the ISO language code is set to "ger" representing German.

Also, the subtitle descriptor corresponding to the subtitle data stream PID2 describes an ISO language code (ISO_639_language_code), a subtitling type (subtitling_type), and a composition page ID (composition_page_id) in association with the DSS segment as the second segment. The value (page_id2_2) of the page ID allocated to the DSS segment of the subtitle data stream PID2 is set to be equal to the value (page_id2_2) of the composition page ID.

Also, the subtitling type (subtitling_type) corresponding to the second segment is a value representing a 3D subtitle, for example, "0x15" or "0x25" (see "component_type" in Fig. 15). In addition, an ISO language code corresponding to the second segment is set to, for example, "zxx" representing a non-language or "ger" representing German.

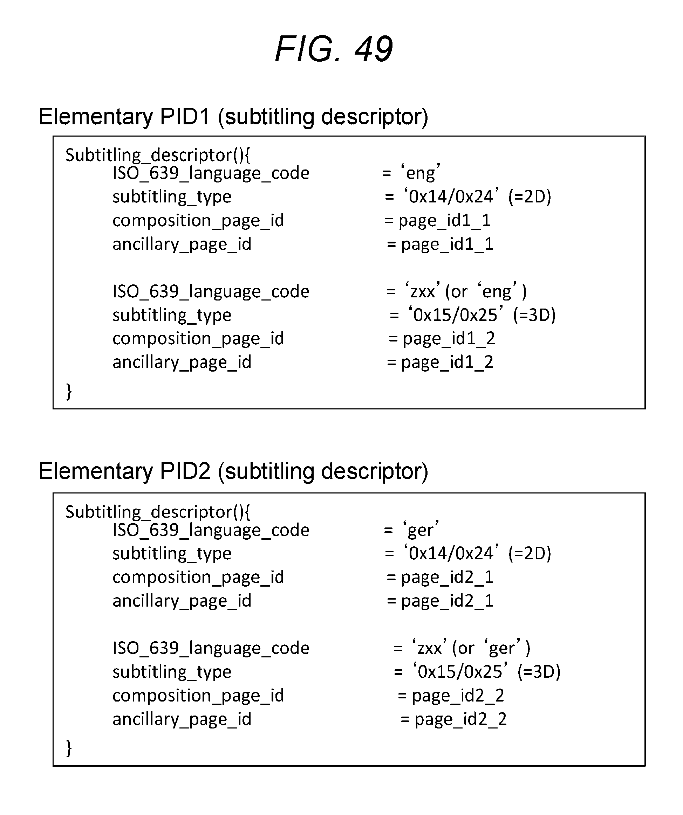

Fig. 49 illustrates the extraction of the subtitle descriptor (Subtitling_descriptor) and the like corresponding to the respective subtitle data streams illustrated in Fig. 48. Also, it can be considered that any one of language codes included in a space from "qaa" to "qrz" of the ISO language code, or a language code "mis" or "und" is used as the ISO language code representing a non-language (see Fig. 18).

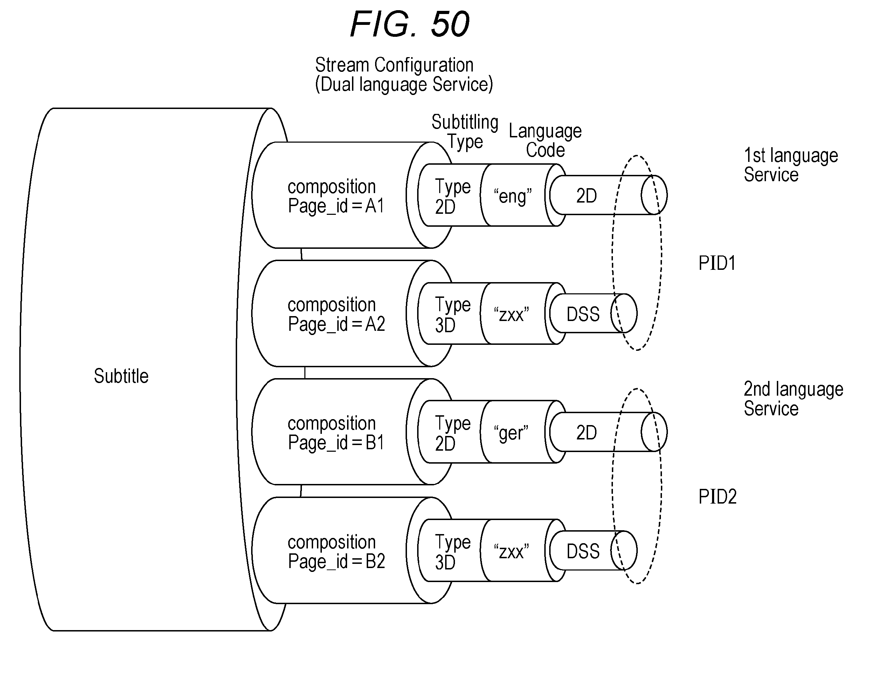

Fig. 50 illustrates an example of a stream configuration of the subtitle data stream PID1 according to the first language service and an example of a stream configuration of the subtitle data stream PID2 according to the second language service.

First, the subtitle data stream PID1 will be described. The composition page ID (composition_page_id) described in the subtitle descriptor in association with the respective segments of DDS, PCS, RCS, CDS, ODS, and EDS as the first segments (represented as "2D") is set to "A1". Therefore, it can be seen that the value of the page ID allocated to the respective segments of DDS, PCS, RCS, CDS, ODS, and EDS is "A1".

Also, the subtitling type (subtitling_type) described in the subtitle descriptor in association with the composition page ID = page ID = A1 is set to a value representing a 2D subtitle. In addition, the ISO language code described in the subtitle descriptor in association with the composition page ID = page ID = A1 is set to "eng" representing English.

Also, the composition page ID (composition_page_id) described in the subtitle descriptor in association with the DSS segment as the second segment is set to "A2". Therefore, it can be seen that the value of the page ID allocated to the DSS segment is "A2".

Also, the subtitling type (subtitling_type) described in the subtitle descriptor in association with the composition page ID = page ID = A2 is set to a value representing a 3D subtitle. In addition, the ISO language code described in the subtitle descriptor in association with the composition page ID = page ID = A2 is set to "zxx" representing a non-language.

Next, the subtitle data stream PID2 will be described. The composition page ID (composition_page_id) described in the subtitle descriptor in association with the respective segments of DDS, PCS, RCS, CDS, ODS, and EDS as the first segments (represented as "2D") is set to "B1". Therefore, it can be seen that the value of the page ID allocated to the respective segments of DDS, PCS, RCS, CDS, ODS, and EDS is "B1".

Also, the subtitling type (subtitling_type) described in the subtitle descriptor in association with the composition page ID = page ID = B1 is set to a value representing a 2D subtitle. In addition, the ISO language code described in the subtitle descriptor in association with the composition page ID = page ID = B1 is set to "ger" representing German.

Also, the composition page ID (composition_page_id) described in the subtitle descriptor in association with the DSS segment as the second segment is set to "B2". Therefore, it can be seen that the value of the page ID allocated to the DSS segment is "B2".

Also, the subtitling type (subtitling_type) described in the subtitle descriptor in association with the composition page ID = page ID = B2 is set to a value representing a 3D subtitle. In addition, the ISO language code described in the subtitle descriptor in association with the composition page ID = page ID = B2 is set to "zxx" representing a non-language.

When the transport stream TS includes the subtitle data streams according to a multiple language as described above, the receiving apparatus extracts and decodes the subtitle data stream according to the language service selected by the user or automatically selected. In this case, based on the page ID, the legacy 2D-compatible receiving apparatus reads only the respective segments of DDS, PCS, RCS, CDS, ODS, and EDS included in the subtitle data stream and skips the DSS segment. In this case, the language information described in the subtitle descriptor in association with the page ID allocated to the DSS segment is set to represent a non-language. Accordingly, the DSS segment is recognized as not corresponding to the selected language, so that the DSS segment can be more securely skipped.

[Sharing of DSS Segment between Multiple PES, Language Services]

In the configuration example of the subtitle data stream illustrated in Fig. 47 described above, the case where the DSS segment is not shared between the language services has been illustrated. That is, in the configuration example of the subtitle data stream illustrated in Fig. 47, the DSS segment is operated as the composition page (composition_page). However, it can also be considered that the DSS segment is shared between the language services. In this case, the DSS segment is operated as the ancillary page (ancillary_page).

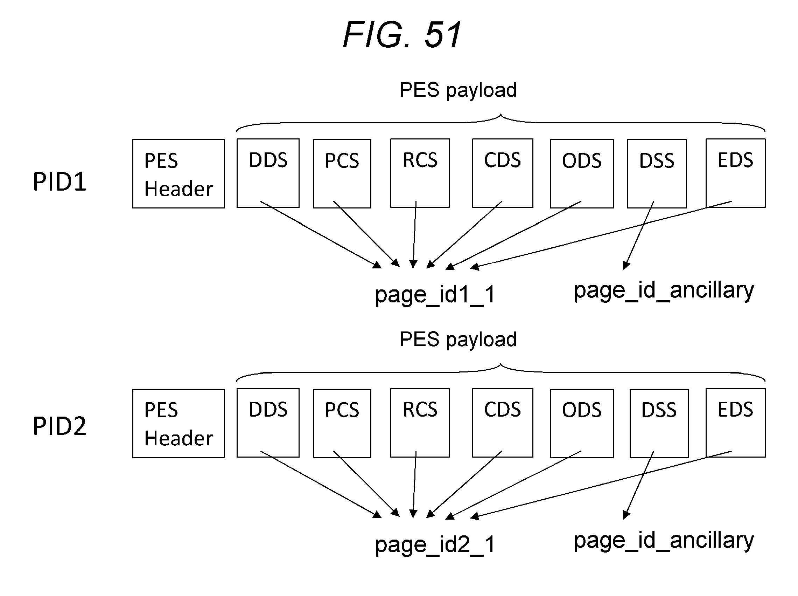

Fig. 51 illustrates another example of a configuration of the subtitle data stream included in the transport stream TS in the case where there is a two-language service. As in the example illustrated in Fig. 46, in this example, there are two language services that are a first language service of English "eng" and a second language service of German "ger".

In this configuration example, a transport stream TS includes a subtitle data stream PID1 corresponding to the first language service and a subtitle data stream PID2 corresponding to the second language service. Each of the subtitle data streams have the same configuration as the subtitle data stream illustrated in Fig. 47 described above, with the exception that the page ID allocated to the DSS segment is set to the same value as the ancillary page ID (ancillary_page_id) described in the subtitle descriptor.

That is, with respect to the subtitle data stream PID1, the page ID "page_id1_1" having the same value as the composition page ID "composition_page_id" is allocated to the respective segments of DDS, PCS, RCS, CDS, ODS, and EDS. On the other hand, the page ID "page_id_ancillary" having the same value as the ancillary page ID "ancillary_page_id" is allocated to the DSS segment.

Likewise, with respect to the subtitle data stream PID2, the page ID "page_id2_1" having the same value as the composition page ID "composition_page_id" is allocated to the respective segments of DDS, PCS, RCS, CDS, ODS, and EDS. On the other hand, the page ID "page_id_ancillary" having the same value as the ancillary page ID "ancillary_page_id" is allocated to the DSS segment.

Also, in the configuration example of the subtitle data stream illustrated in Fig. 51, the page ID having the same value as the ancillary page ID "ancillary_page_id" is allocated to the DSS segment included in each subtitle data stream, and can be operated as the ancillary page "ancillary_page". However, in this configuration example, since it is divided into two subtitle data streams (PES streams), a copied DSS segment is physically present in each subtitle data stream.

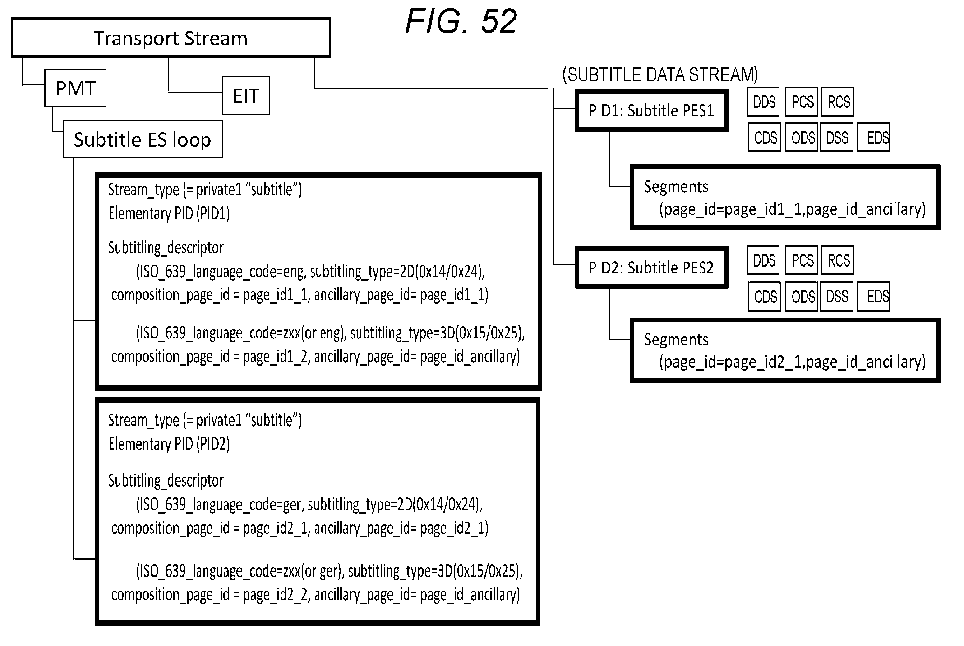

Fig. 52 illustrates an example of a configuration of the transport stream TS in the case where the DSS segment is shared between the language services as described above. Also, as in Fig. 48 described above, in this drawing, the illustration of video and audio-related portions is omitted for simplicity of illustration.

In this configuration example, a PES packet "Subtitle PES1" of the subtitle data stream PID1 is included. The respective segments of DDS, PCS, RCS, CDS, ODS, DSS, and EDS are included in the subtitle data stream PID1. The page ID "page_id1_1" is allocated to the respective segments of DDS, PCS, RCS, CDS, ODS, and EDS as the first segments. Also, the DSS segment as the second segment is allocated the page ID "page_id_ancillary", so that it can be identified from the respective segments of DDS, PCS, RCS, CDS, ODS, and EDS and is operated as the ancillary page.

Also, in this configuration example, a PES packet "Subtitle PES2" of the subtitle data stream PID2 is included. The respective segments of DDS, PCS, RCS, CDS, ODS, DSS, and EDS are included in the subtitle data stream PID2. The page ID "page_id2_1" is allocated to the respective segments of DDS, PCS, RCS, CDS, ODS, and EDS as the first segments. Also, the DSS segment as the second segment is allocated the page ID "page_id_ancillary", so that it can be identified from the respective segments of DDS, PCS, RCS, CDS, ODS, and EDS and is operated as the ancillary page.

In the subtitle descriptor corresponding to the subtitle data stream PID1, the composition page ID "composition_page_id" and the ancillary page ID "ancillary_page_id" are set in the following manner. That is, the composition page ID and the ancillary page ID are set to the same value "page_id1_1" in association with the respective segments of DDS, PCS, RCS, CDS, ODS, and EDS as the first segments. On the other hand, the composition page ID and the ancillary page ID are set to different values in association with the DSS segment as the second segment. That is, the composition page ID is set to "page_id1_2', and the ancillary page ID is set to "page_id_ancillary".

Likewise, in the subtitle descriptor corresponding to the subtitle data stream PID2, the composition page ID "composition_page_id" and the ancillary page ID "ancillary_page_id" are set in the following manner. That is, the composition page ID and the ancillary page ID are set to the same value "page_id2_1" in association with the respective segments of DDS, PCS, RCS, CDS, ODS, and EDS as the first segments. On the other hand, the composition page ID and the ancillary page ID are set to different values in association with the DSS segment as the second segment. That is, the composition page ID is set to "page_id2_2', and the ancillary page ID is set to "page_id_ancillary".

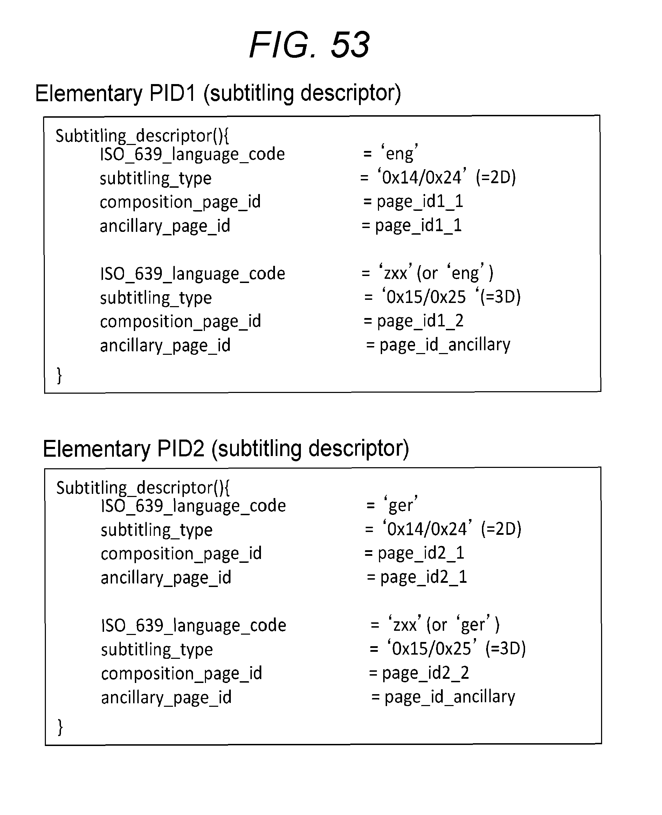

Also, although not described in detail, the other features of the configuration example of the transport stream TS illustrated in Fig. 52 are the same as those of the configuration example illustrated in Fig. 48. Fig. 53 illustrates the extraction of the subtitle descriptor (Subtitling_descriptor) and the like corresponding to the respective subtitle data streams illustrated in Fig. 52. Also, it can be considered that any one of language codes included in a space from "qaa" to "qrz" of the ISO language code, or a language code "mis" or "und" is used as the ISO language code representing a non-language (see Fig. 18).

[Non-sharing of DSS Segment between 1PES, Language Services]

In the configuration example of the subtitle data stream illustrated in Fig. 47 described above, the case where there are two subtitle data streams including the respective segments of DDS, PCS, RCS, CDS, ODS, and EDS and the DSS segment corresponding to a single language service has been illustrated. However, it can also be considered that the respective segments of DDS, PCS, RCS, CDS, ODS, and EDS and the DSS segment corresponding to the respective language services are included in one subtitle data stream.

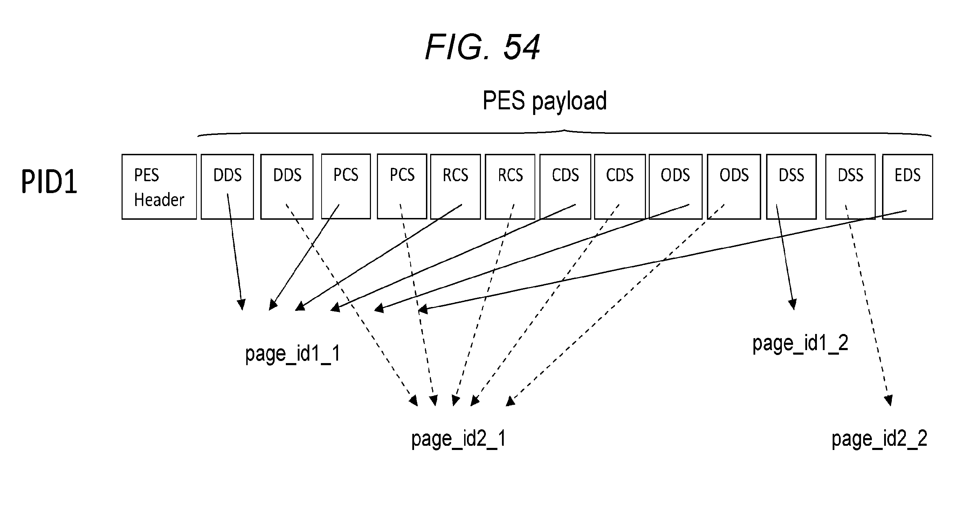

Fig. 54 illustrates an example of a configuration of a subtitle data stream included in the transport stream TS in the case where respective segments according to a two-language service are present in one subtitle data stream. As in the example illustrated in Fig. 47, in this example, there are two language services that are a first language service of English "eng" and a second language service of German "ger". In this configuration example, the transport stream TS includes one subtitle data stream PID1. The subtitle data stream PID1 have the same configuration as the subtitle data stream illustrated in Fig. 11 described above.

That is, in the subtitle data stream PID1, a PES header is disposed at the beginning, followed by a PES payload including the respective segments of DDS, PCS, RCS, CDS, ODS, DSS, and EDS. In this case, each of the respective segments of DDS, PCS, RCS, CDS, ODS, DSS, and EDS is two in number. For example, among the two subsequent segments, the first one is a segment according to a first language service and the subsequent one is a segment according to a second language service.

The page ID (= page_id1_1) allocated to the respective segments of DDS, PCS, RCS, CDS, ODS, and DSS according to the first language service is set to be different from the page ID (= page_id1_2) allocated to the DSS segment according to the first language service, so that they can be identified. Also, the value of "page_id1_2" is equal to the value of "page_id1_1" plus a predetermined value. Accordingly, in the first language service, the DSS segment is associated with the respective segments of DDS, PCS, RCS, CDS, and ODS by the page IDs.

Likewise, the page ID (= page_id2_1) allocated to the respective segments of DDS, PCS, RCS, CDS, ODS, and DSS according to the second language service is set to be different from the page ID (= page_id2_2) allocated to the DSS segment according to the second language service, so that they can be identified. Also, the value of "page_id2_2" is equal to the value of "page_id2_1" plus a predetermined value. Accordingly, in the second language service, the DSS segment is associated with the respective segments of DDS, PCS, RCS, CDS, and ODS by the page IDs.

Also, in this case, the value of the page ID allocated to the respective segments according to the first language service is set to be different from the value of the page ID allocated to the respective segments according to the second language service. Accordingly, based on the page IDs, the segments according to the first language service or the second language service can be selectively extracted and decoded.

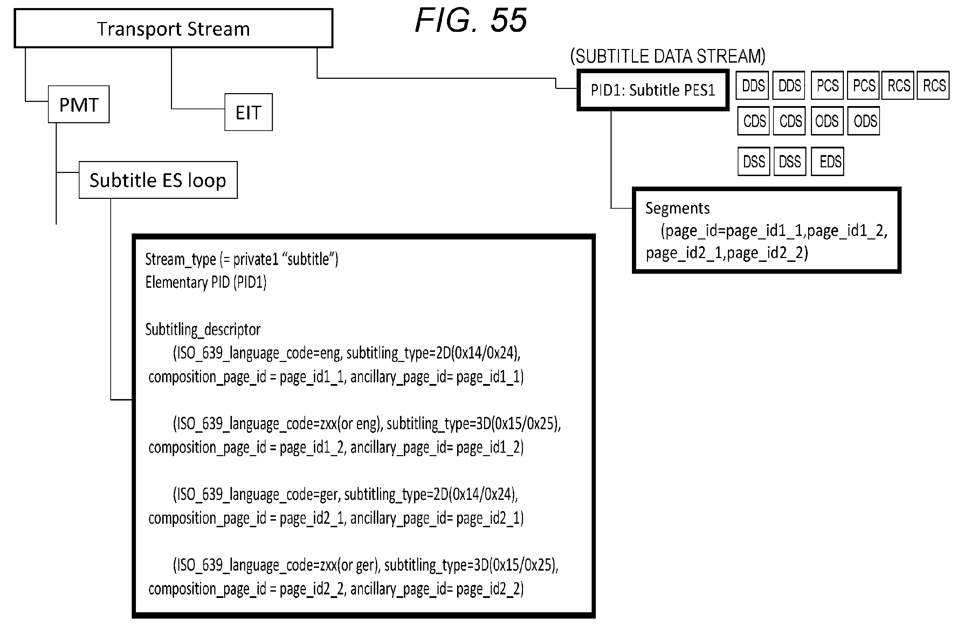

Fig. 55 illustrates an example of a configuration of the transport stream TS in the case where respective segments according to a two-language service are present in one subtitle data stream as described above. Also, as in Fig. 48 described above, in this drawing, the illustration of video and audio-related portions is omitted for simplicity of illustration.

In this configuration example, a PES packet "Subtitle PES1" of the subtitle data stream PID1 is included. The respective segments of DDS, PCS, RCS, CDS, ODS, and DSS (two in number respectively) are included in the subtitle data stream PID1.

The respective segments of DDS, PCS, RCS, CDS, and ODS according to the first language service and the EDS segment are allocated a page ID "page_id1_1" and the DSS segment according to the first language service is allocated a page ID "page_id1_2", so that they can be identified. Likewise, the respective segments of DDS, PCS, RCS, CDS, and ODS according to the second language service are allocated a page ID "page_id2_1" and the DSS segment according to the second language service is allocated a page ID "page_id2_2", so that they can be identified.

The PMT includes a subtitle elementary loop having information related to the subtitle data stream. Information such as a packet identifier (PID) corresponding to the subtitle data stream PID1 is disposed in the subtitle elementary loop.

The subtitle descriptor corresponding to the subtitle data stream PID1 describes the following information in association with the respective segments of the first language service. That is, an ISO language code (ISO_639_language_code), a subtitling type (subtitling_type), and a composition page ID (composition_page_id) are described in association with the respective segments of DDS, PCS, RCS, CDS, and ODS according to the first language service. The value (page_id1_1) of the page ID allocated to the respective segments of DDS, PCS, RCS, CDS, ODS, and EDS according to the first language service is set to be equal to the value (page_id1_1) of the composition page ID.

Also, the subtitling type (subtitling_type) corresponding to the respective segments of DDS, PCS, RCS, CDS, and ODS according to the first language service is set to a value representing a 2D subtitle, for example, "0x14" or "0x24" (see "component_type" in Fig. 15). In addition, the ISO language code corresponding to the respective segments of DDS, PCS, RCS, CDS, and ODS according to the first language service is set to represent the language of a subtitle (caption). In the illustrated example, the ISO language code is set to "eng" representing English.

Also, the subtitle descriptor corresponding to the subtitle data stream PID1 describes an ISO language code (ISO_639_language_code), a subtitling type (subtitling_type), and a composition page ID (composition_page_id) in association with the DSS segment according to the first language service. The value (page_id1_2) of the page ID allocated to the DSS segment according to the first language service is set to be equal to the value (page_id1_2) of the composition page ID.

Also, the subtitling type (subtitling_type) corresponding to the DSS segment according to the first language service is set to a value representing a 3D subtitle, for example, "0x15" or "0x25" (see "component_type" in Fig. 15). In addition, the ISO language code corresponding to the DSS segment according to the first language service is set to, for example, "zxx" representing a non-language or "eng" representing English.

Likewise, the subtitle descriptor corresponding to the subtitle data stream PID1 describes the following information in association with the respective segments of the second language service. That is, an ISO language code (ISO_639_language_code), a subtitling type (subtitling_type), and a composition page ID (composition_page_id) are described in association with the respective segments of DDS, PCS, RCS, CDS, and ODS according to the second language service. The value (page_id2_1) of the page ID allocated to the respective segments of DDS, PCS, RCS, CDS, ODS, and EDS according to the second language service is set to be equal to the value (page_id2_1) of the composition page ID.

Also, the subtitling type (subtitling_type) corresponding to the respective segments of DDS, PCS, RCS, CDS, and ODS according to the second language service is set to a value representing a 2D subtitle, for example, "0x14" or "0x24" (see "component_type" in Fig. 15). In addition, the ISO language code corresponding to the respective segments of DDS, PCS, RCS, CDS, and ODS according to the second language service is set to represent the language of a subtitle (caption). In the illustrated example, the ISO language code is set to "ger" representing German.

Also, the subtitle descriptor corresponding to the subtitle data stream PID1 describes an ISO language code (ISO_639_language_code), a subtitling type (subtitling_type), and a composition page ID (composition_page_id) in association with the DSS segment according to the second language service. The value (page_id2_2) of the page ID allocated to the DSS segment according to the second language service is set to be equal to the value (page_id2_2) of the composition page ID.

Also, the subtitling type (subtitling_type) corresponding to the DSS segment according to the second language service is set to a value representing a 3D subtitle, for example, "0x15" or "0x25" (see "component_type" in Fig. 15). In addition, the ISO language code corresponding to the DSS segment according to the second language service is set to, for example, "zxx" representing a non-language or "ger" representing German.

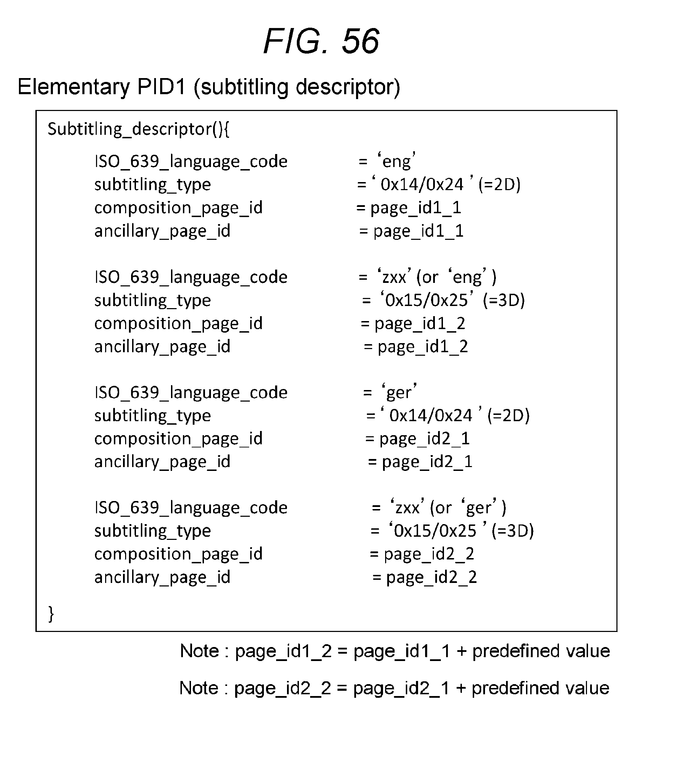

Fig. 56 illustrates the extraction of the subtitle descriptor (Subtitling_descriptor) and the like corresponding to the subtitle data stream PID1 illustrated in Fig. 55. Also, it can be considered that any one of language codes included in a space from "qaa" to "qrz" of an ISO language code is used as an ISO language code representing a non-language.

When the transport stream TS includes the subtitle data streams including the respective segments according to a multiple language service as described above, the receiving apparatus extracts and decodes the segment according to the language service selected by the user or automatically selected. In this case, based on the page ID, the legacy 2D-compatible receiving apparatus reads only the respective segments of DDS, PCS, RCS, CDS, ODS, and EDS included in the subtitle data stream and skips the DSS segment. In this case, the language information described in the subtitle descriptor in association with the page ID allocated to the DSS segment is set to represent a non-language. Accordingly, the DSS segment is recognized as not corresponding to the selected language, so that the DSS segment can be more securely skipped.

[Sharing of DSS Segment between 1PES, Language Services]

In the configuration example of the subtitle data stream illustrated in Fig. 54 described above, the case where the DSS segment is not shared between the language services has been illustrated. That is, in the configuration example of the subtitle data stream illustrated in Fig. 54, the DSS segment according to each language service is operated as the composition page (composition_page). However, it can also be considered that the DSS segment is shared between the language services. In this case, the DSS segment is operated as the ancillary page (ancillary_page).

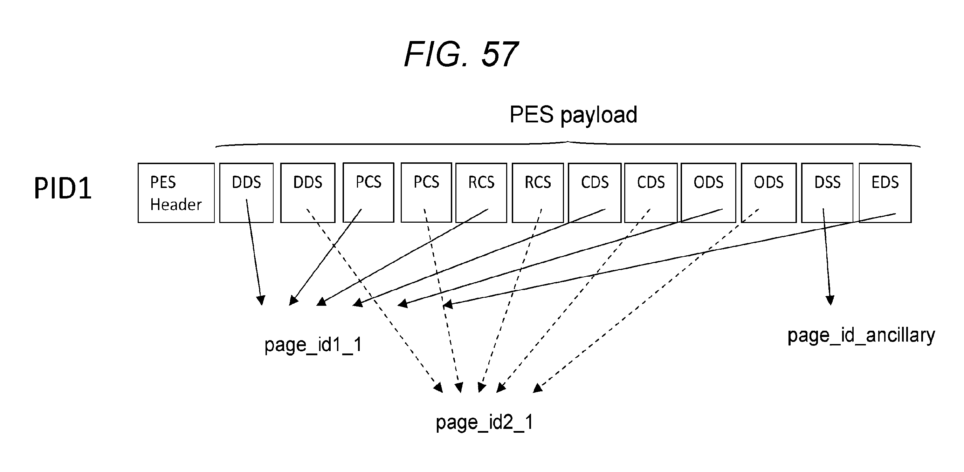

Fig. 57 illustrates another example of a configuration of a subtitle data stream included in the transport stream TS in the case where respective segments according to a two-language service are present in one subtitle data stream. As in the example illustrated in Fig. 54, in this example, there are two language services that are a first language service of English "eng" and a second language service of German "ger".

In this configuration example, the transport stream TS includes one subtitle data stream PID1. The subtitle data stream PID1 has the same configuration as the subtitle data stream illustrated in Fig. 47 described above, with the exception that the page ID allocated to the DSS segment is set to the same value as the ancillary page ID (anci11ary_ page_id) described in the subtitle descriptor. Also, in this case, since the DSS segment is shared between two languages, the DSS segment is only one in number.

That is, in the subtitle data stream PID1, a PES header is disposed at the beginning, followed by a PES payload including the respective segments of DDS, PCS, RCS, CDS, ODS, DSS, and EDS. In this case, each of the respective segments of DDS, PCS, RCS, CDS, and ODS is two in number. For example, among the two subsequent segments, the first one is a segment according to a first language service and the subsequent one is a segment according to a second language service.

The page ID "page_id1_1" is allocated to the respective segments of DDS, PCS, RCS, CDS, ODS, and EDS according to the first language service. Also, the page ID "page_id2_1" is allocated to the respective segments of DDS, PCS, RCS, CDS, and ODS according to the second language service. In addition, the page ID "page_id_ancillary" having the same value as the ancillary page ID "ancillary_page_id" is allocated to the DSS segment shared between the language services.

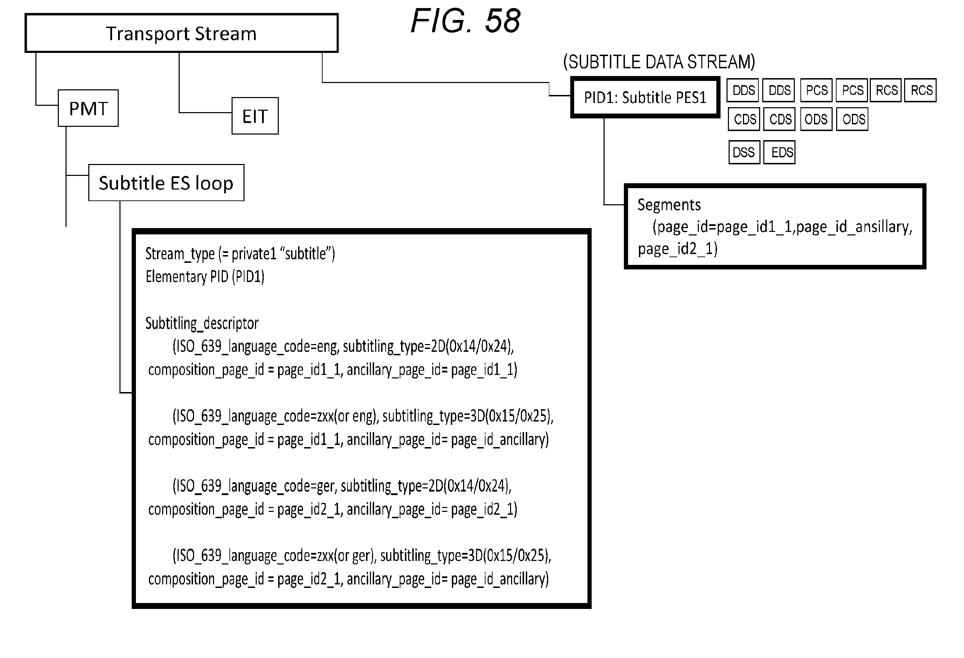

Fig. 58 illustrates an example of a configuration of the transport stream TS in the case where respective segments according to a two-language service are present in one subtitle data stream as described above. Also, as in Fig. 55 described above, in this drawing, the illustration of video and audio-related portions is omitted for simplicity of illustration.

In this configuration example, a PES packet "Subtitle PES1" of the subtitle data stream PID1 is included. The respective segments of DDS, PCS, RCS, CDS, and ODS (two in number respectively) are included in the subtitle data stream PID1. Since the DSS segment is shared between two language services, the DSS segment is only one in number.

The respective segments of DDS, PCS, RCS, CDS, and ODS according to the first language service and the EDS segment are allocated a page ID "page_id1_1", and the respective segments of DSS, PCS, RCS, CDS, and ODS segment according to the second language service are allocated a page ID "page_id2_1". Also, the DSS segment shared is allocated the page ID "page_id_ancillary", so that it can be identified from the respective segments of DDS, PCS, RCS, CDS, ODS, and EDS and is operated as the ancillary page.

The PMT includes a subtitle elementary loop having information related to the subtitle data stream. Information such as a packet identifier (PID) corresponding to the subtitle data stream PID1 is disposed in the subtitle elementary loop.

In the subtitle descriptor corresponding to the subtitle data stream PID1, the composition page ID "composition_ page_id" and the ancillary page ID "ancillary_page_id" are set in association with the respective segments of the first language service in the following manner. That is, the composition page ID and the ancillary page ID are set to the same value "page_id1_1" in association with the respective segments of DDS, PCS, RCS, CDS, ODS, and EDS. On the other hand, the composition page ID and the ancillary page ID are set to different values in association with the DSS segment. That is, the composition page ID is set to "page_id1_1', and the ancillary page ID is set to "page_id_ancillary".

Likewise, in the subtitle descriptor corresponding to the subtitle data stream PID1, the composition page ID "composition_page_id" and the ancillary page ID "ancillary_page_id" are set in association with the respective segments of the second language service in the following manner. That is, the composition page ID and the ancillary page ID are set to the same value "page_id2_1" in association with the respective segments of DDS, PCS, RCS, CDS, ODS, and EDS. On the other hand, the composition page ID and the ancillary page ID are set to different values in association with the DSS segment. That is, the composition page ID is set to "page_id2_1', and the ancillary page ID is set to "page_ id_ancillary".

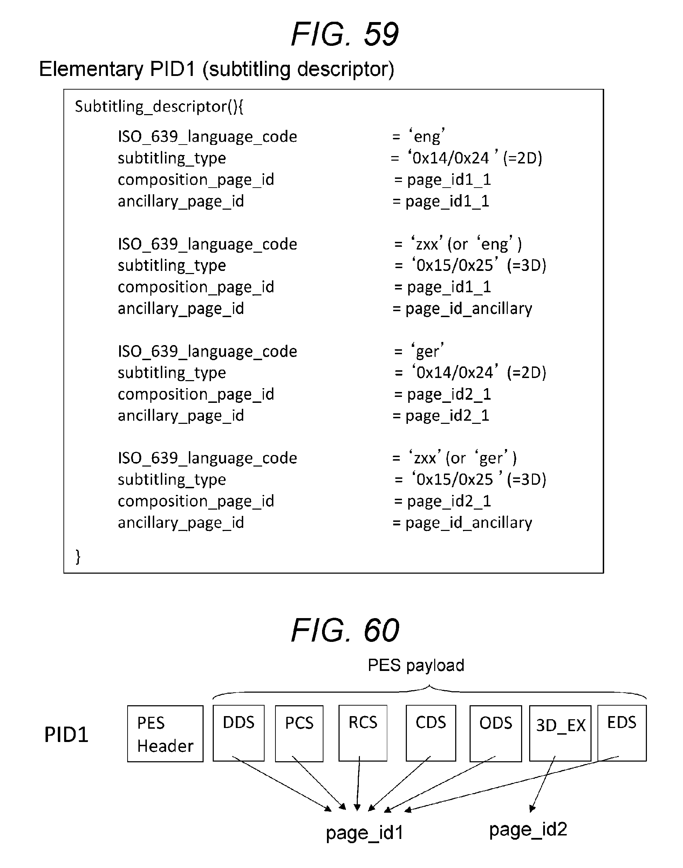

Also, although not described in detail, the other features of the configuration example of the transport stream TS illustrated in Fig. 58 are the same as those of the configuration example illustrated in Fig. 55. Fig. 59 illustrates the extraction of the subtitle descriptor (Subtitling_descriptor) and the like corresponding to the respective subtitle data streams illustrated in Fig. 58. Also, it can be considered that any one of language codes included in a space from "qaa" to "qrz" of the ISO language code, or a language code "mis" or "und" is used as the ISO language code representing a non-language (see Fig. 18).

As described above, the DSS segment is shared between the respective language services, so that the bandwidth of the PES stream can be effectively used.

[Configuration Including 3D_EX Portion]

Also, it has been described above that the subtitle data stream includes the DSS segment in addition to the respective segments of DDS, PCS, RCS, CDS, ODS, and EDS (see Figs. 11, 47, 51, 54 and 57). However, it can also be considered that the DSS segment portion includes not only the DSS segment but also other segments according to the 3D extension of a subtitle (caption) display.

Fig. 60 illustrates an example of a configuration of the subtitle data stream PID1 included in the transport stream TS in this case. A PES header is disposed at the beginning, followed by a PES payload including the respective segments of DDS, PCS, RCS, CDS, ODS, and EDS and a 3D_EX portion. The 3D_EX portion includes all segments according to the 3D extension. The 3D_EX portion may include, for example, only the DSS segment, or up to the respective segments of DDS, PCS, RCS, CDS, ODS, DSS, and EDS, including the respective segments of DDS, PCS, DSS, and EDS.

Herein, a page ID (= page_id1) allocated to the respective segments of DDS, PCS, RCS, CDS, ODS, and EDS except the 3D_EX portion (hereinafter referred to as "2D segments" appropriately) is different from a page ID (= page_id2) allocated to the respective segments included in the 3D_EX portion (hereinafter referred to as "3D extension segments" appropriately). The 2D segment constitutes a first segment including superimposition information data (subtitle data). Also, the 3D extension (3D_EX) segment constitutes a second segment including disparity information. Since the page ID allocated to the 2D segment and the page ID allocated to the 3D extension segment are set to be different from each other, the 2D segment and the 3D extension segment are indicated as being separate services and thus can be identified.

In this case, a value of the page ID (= page_id2) allocated to the 3D extension segment (second segment) is equal to a value of the page ID (= page_id1) allocated to the 2D segment (first segment) plus a predetermined value. Accordingly, it can be seen that the 3D extension segment is associated with the 2D segment by the page ID.

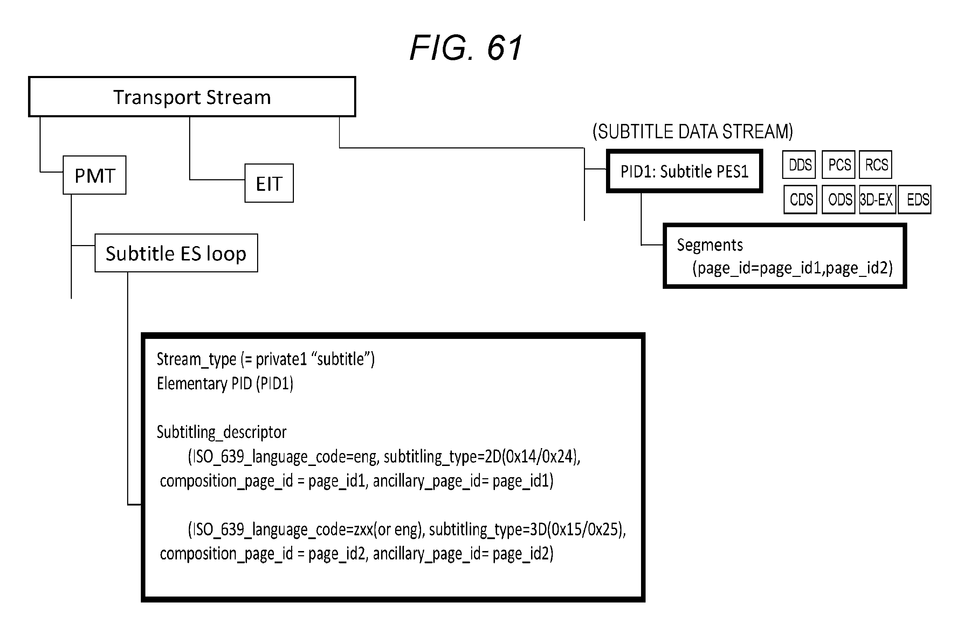

Fig. 61 illustrates an example of a configuration of the transport stream TS in the case where a 3D_EX portion including a 3D extension segment is present in a PES payload of the subtitle data stream PID1. The transport stream TS includes a PES packet that is obtained by packetizing each elementary stream. In addition, in Fig. 61, the illustration of video and audio-related portions is omitted for simplicity of illustration.

In this configuration example, a PES packet "Subtitle PES1" of the subtitle data stream PID1 is included. The page ID "page_id1" is allocated to the respective segments of DDS, PCS, RCS, CDS, ODS, and EDS except the 3D_EX portion, that is, the 2D segment (first segment). Also, the page ID "page_id2" is allocated to the 3D extension segment (second segment) included in the 3D_EX portion.

The PMT includes a subtitle elementary loop having information related to the subtitle data stream. Information such as a packet identifier (PID) of the subtitle data stream is disposed in the subtitle elementary loop. In addition, a descriptor describing the information related to the subtitle data stream is also disposed in the subtitle elementary loop.

A subtitle descriptor (Subtitling_Descriptor) is present as the descriptor. The subtitle descriptor describes an ISO language code (ISO_639_language_code), a subtitling type (subtitling_type), and a composition page ID (composition_page_id) in association with the 2D segment (first segment). The value (page_id1) of the page ID allocated to the 2D segment is equal to the value (page_id1) of the composition page ID.

Also, the subtitling type (subtitling_type) corresponding to the 2D segment is a value representing a 2D subtitle, for example, "0x14" or "0x24" (see "component_type" in Fig. 15). In addition, the ISO language code corresponding to the 2D segment is set to represent the language of a subtitle (caption). In the illustrated example, the ISO language code is set to "eng" representing English.

Also, the subtitle descriptor describes an ISO language code (ISO_639_language_code), a subtitling type (subtitling_type), and a composition page ID (composition_page_id) in association with the 3D segment (second segment). The value (page_id2) of the page ID allocated to the 3D segment is equal to the value (page_id2) of the composition page ID.

Also, the subtitling type (subtitling_type) corresponding to the 3D extension segment is a value representing a 3D subtitle, for example, "0x15" or "0x25" (see "component_type" in Fig. 15). In addition, the ISO language code corresponding to the 3D extension segment is set to, for example, "zxx" representing a non-language or "eng" representing English. Also, it can be considered that any one of language codes included in a space from "qaa" to "qrz" of the ISO language code, or a language code "mis" or "und" is used as the ISO language code representing a non-language (see Fig. 18).

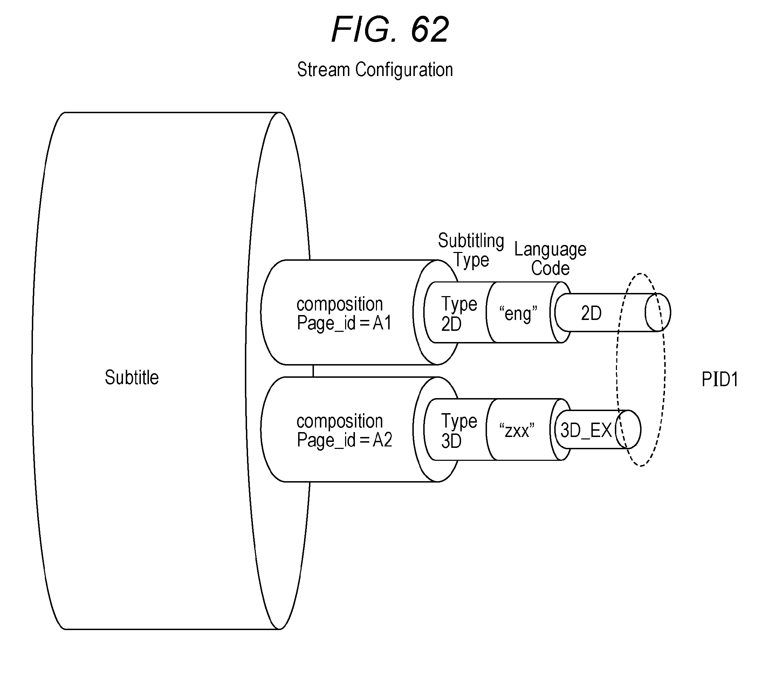

Fig. 62 illustrates an example of a stream configuration of the subtitle data stream. The composition page ID (composition_page_id) described in the subtitle descriptor in association with the 2D segment (first segment) represented as "2D" is set to "A1". It can be seen that the value of the page ID allocated to the 2D segment is "A1". Also, the subtitling type (subtitling_type) described in the subtitle descriptor in association with the composition page ID = page ID = A1 is set to a value representing a 2D subtitle. In addition, the ISO language code described in the subtitle descriptor in association with the composition page ID = page ID = A1 is set to "eng" representing English.

On the other hand, the composition page ID (composition_page_id) described in the subtitle descriptor in association with the 3D extension segment (second segment) represented as "3D_EX" is set to "A2". Therefore, it can be seen that the value of the page ID allocated to the 3D extension segment is "A2". Also, the subtitling type (subtitling_type) described in the subtitle descriptor in association with the composition page ID = page ID = A2 is set to a value representing a 3D subtitle. In addition, the ISO language code described in the subtitle descriptor in association with the composition page ID = page ID = A2 is set to "zxx" representing a non-language.

The example of Figs. 60 to 62 described above corresponds to the example of Fig. 11 described above. Although not described in detail, it may also be considered that the DSS segment is replaced with the 3D_EX portion in the respective examples of Figs. 47, 51, 54 and 57. Also, the segments included in the 3D_EX portion need not be always constant, and may be changed, for example, at an arbitrary timing.

[Registration of Only Composition Page ID of 2D Segment (Single Language Service)]

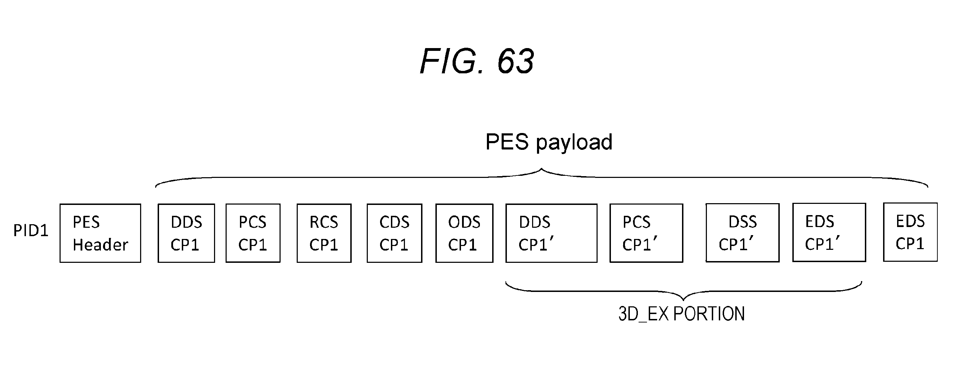

Fig. 63 illustrates another example of a configuration of the subtitle data stream included in the transport stream TS. A PES header is disposed at the beginning, followed by a PES payload including the respective segments of DDS, PCS, RCS, CDS, ODS, and EDS and a 3D_EX portion. As in the configuration example of Fig. 60 described above, the 3D_EX portion may include, for example, only the DSS segment, or up to the respective segments of DDS, PCS, RCS, CDS, ODS, DSS, and EDS, including the respective segments of DDS, PCS, DSS, and EDS. In this example, the respective segments of DDS, PCS, DSS, and EDS are included.

Herein, a page ID (= CP1) allocated to the respective segments of DDS, PCS, RCS, CDS, ODS, and EDS except the 3D_EX portion (hereinafter referred to as "2D segments" appropriately) is different from a page ID (= CP1') allocated to the respective segments included in the 3D_EX portion (hereinafter referred to as "3D extension segments" appropriately). The 2D segment constitutes a first segment including superimposition information data (subtitle data). Also, the 3D extension (3D_EX) segment constitutes a second segment including disparity information. Since the page ID allocated to the 2D segment and the page ID allocated to the 3D extension segment are set to be different from each other, the 2D segment and the 3D extension segment are indicated as being separate services and thus can be identified.

Also, herein, CP1 and CP1' are set to have a unique relation therebetween. That is, based on the unique relation, CP1' can be uniquely obtained from the composition page ID (composition_page_id) corresponding to CP1. As an example of the unique relation, CP1' is equal to CP1 plus a fixed value (offset value). For example, when CP1 = 0x0XXX and the fixed value = 0x8000, CP1' = 0x8XXX. In this manner, since CP1 and CP1' have a unique relation, the 3D extension segment is associated with the 2D segment by the page ID.

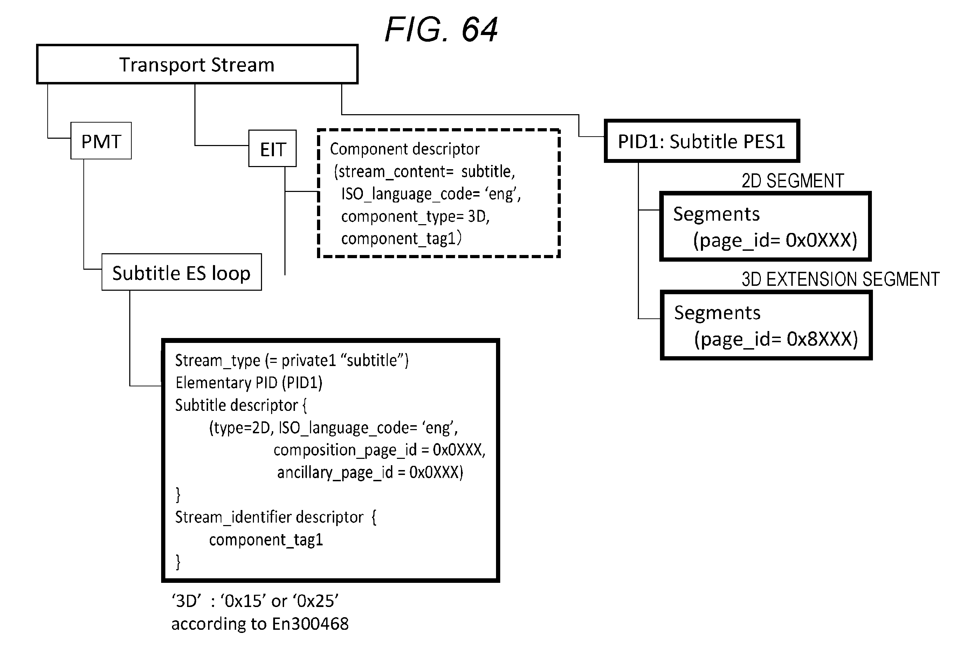

Fig. 64 illustrates an example of a configuration of the transport stream TS including the subtitle data stream PID1 of Fig. 63 described above. The transport stream TS includes a PES packet that is obtained by packetizing each elementary stream. In addition, in Fig. 64, the illustration of video and audio-related portions is omitted for simplicity of illustration.

In this configuration example, a PES packet "Subtitle PES1" of the subtitle data stream PID1 is included. The page ID "CP1=0x0XXX" is allocated to the respective segments of DDS, PCS, RCS, CDS, ODS, and EDS except the 3D_EX portion, that is, the 2D segment (first segment). Also, the page ID "CP1'=0x8XXX" is allocated to the 3D extension segment (second segment) included in the 3D_EX portion.

The transport stream TS includes a PMT (Program Map Table) as PSI (Program Specific Information). The PSI is information describing to which program each elementary stream included in the transport stream belongs. Also, the transport stream includes an EIT (Event Information Table) as SI (Serviced Information) for performing management on each event. The EIT describes metadata for each program.

The PMT includes a subtitle elementary loop having information related to the subtitle data stream. Information such as a packet identifier (PID) of the subtitle data stream is disposed in the subtitle elementary loop. In addition, a descriptor describing the information related to the subtitle data stream is also disposed in the subtitle elementary loop.

A subtitle descriptor (Subtitling_Descriptor) corresponding to the subtitle data stream PID1 is present as the descriptor. The subtitle descriptor describes an ISO language code (ISO_639_language_code), a subtitling type (subtitling_type), and a composition page ID (composition_page_id) in association with the 2D segment (first segment). The value (0x0XXX) of the page ID allocated to the 2D segment is equal to the value (0x0XXX) of the composition page ID.

Also, the subtitling type (subtitling_type) corresponding to the 2D segment is a value representing a 2D subtitle, for example, "0x14" or "0x24" (see "component_type" in Fig. 15). In addition, the ISO language code corresponding to the 2D segment is set to represent the language of a subtitle (caption). In the illustrated example, the ISO language code is set to "eng" representing English.

Also, unlike the configuration example of the transport stream TS illustrated in Fig. 12, the subtitle descriptor does not describe the composition page ID (composition_page_id) and the like corresponding to the 3D segment (second segment).

When the subtitle data stream PID1 is configured as illustrated in Fig. 63 and the corresponding subtitle descriptor describes only the composition page ID or the like corresponding to the 2D segment as illustrated in Fig. 64, the following effects are achieved.

That is, based on the composition page ID described in the subtitle descriptor, the legacy 2D-compatible receiving apparatus can read and decode only the 2D segment from the subtitle data stream PID1 to obtain the subtitle data. That is, since the legacy 2D-compatible receiving apparatus has no composition page ID corresponding to the 3D extension segment in the descriptor, the legacy 2D-compatible receiving apparatus skips the 3D extension segment included in the subtitle data stream PID1. Accordingly, the reception processing of the legacy 2D-compatible receiving apparatus can be prevented from being interrupted by the transmission of the 3D extension segment including the disparity information.

Also, based on the unique relation and the composition page ID described in the subtitle descriptor, the 3D-compatible receiving apparatus can read and decode both the 2D segment and the 3D extension segment from the subtitle data stream PID1 to efficiently obtain the subtitle data and the disparity information. That is, the 3D-compatible receiving apparatus can know the page ID of the 2D segment from the composition page ID described in the subtitle descriptor, and can read the 2D segment from the subtitle data stream PID1. In addition, the 3D-compatible receiving apparatus can know the page ID of the 3D extension segment from the composition page ID based on the unique relation, and can read the 3D extension segment from the subtitle data stream PID1.

[Registration of Only Composition Page ID of 2D Segment (Multiple Language Service)]

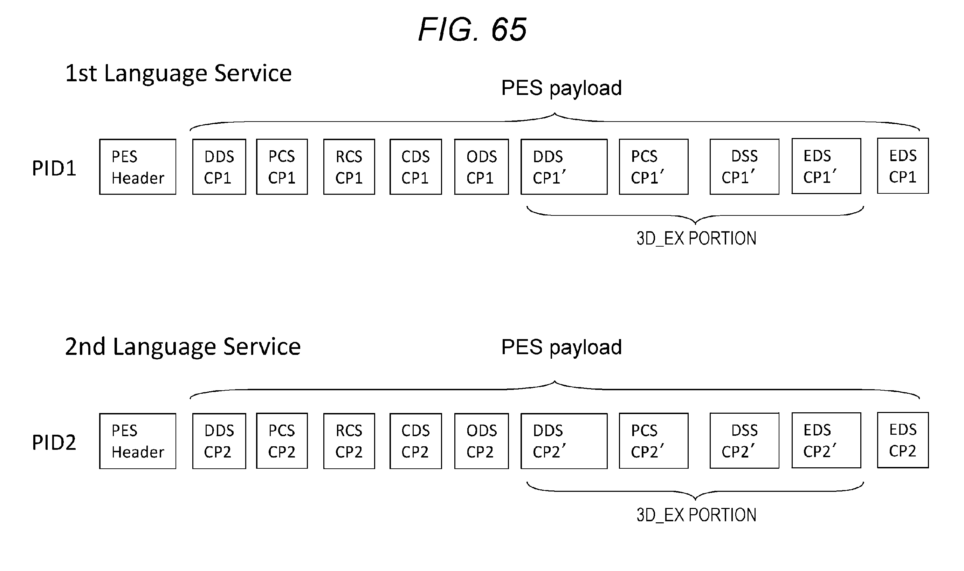

In the configuration example illustrated in Fig. 63 described above, an example of the case where only one language service of English "eng" is present has been illustrated. The same configuration can also be applied in the case of a multiple language service. Fig. 65 illustrates an example of a configuration of the subtitle data stream included in the transport stream TS in the case where there is a two-language service. In this example, there are two language services that are a first language service of English "eng" and a second language service of German "ger".

In this configuration example, the transport stream TS includes a subtitle data stream PID1 corresponding to the first language service and a subtitle data stream PID2 corresponding to the second language service. Each of the respective subtitle data streams has the same configuration as the subtitle data stream illustrated in Fig. 63 described above.

That is, in the subtitle data stream PID1, a PES header is disposed at the beginning, followed by a PES payload including the respective segments of DDS, PCS, RCS, CDS, ODS, and EDS and the 3D_EX portion. The 3D_EX portion includes the respective segments of DDS, PCS, DSS, and EDS (3D extension segments). Herein, the page ID (= CP1) allocated to the 2D segment is set to be different from the page ID (= CP1') allocated to the 3D extension segment. Since the page ID allocated to the 2D segment and the page ID allocated to the 3D extension segment are set to be different from each other, the 2D segment and the 3D extension segment are indicated as being separate services and thus can be identified.

Also, herein, CP1 and CP1' are set to have a unique relation therebetween. That is, based on the unique relation, CP1' can be uniquely obtained from the composition page ID (composition_page_id) corresponding to CP1. As an example of the unique relation, in this example, CP1' is equal to CP1 plus a fixed value (offset value). For example, when CP1 = 0x0XXX and the fixed value = 0x8000, CP1' = 0x8XXX. In this manner, since CP1 and CP1' have a unique relation, the 3D extension segment is associated with the 2D segment by the page ID.

Also, in the subtitle data stream PID2, a PES header is disposed at the beginning, followed by a PES payload including the respective segments of DDS, PCS, RCS, CDS, ODS, and EDS and the 3D_EX portion. The 3D_EX portion includes the respective segments of DDS, PCS, DSS, and EDS (3D extension segments). Herein, the page ID (= CP2) allocated to the 2D segment is set to be different from the page ID (= CP2') allocated to the 3D extension segment. Since the page ID allocated to the 2D segment and the page ID allocated to the 3D extension segment are set to be different from each other, the 2D segment and the 3D extension segment are indicated as being separate services and thus can be identified.

Also, herein, CP2 and CP2' are set to have a unique relation therebetween. That is, based on the unique relation, CP2' can be uniquely obtained from the composition page ID (composition_page_id) corresponding to CP2. As an example of the unique relation, in this example, CP2' is equal to CP2 plus a fixed value (offset value). For example, when CP2 = 0x0YYY and the fixed value = 0x8000, CP1' = 0x8YYY. In this manner, since CP2 and CP2' have a unique relation, the 3D extension segment is associated with the 2D segment by the page ID.

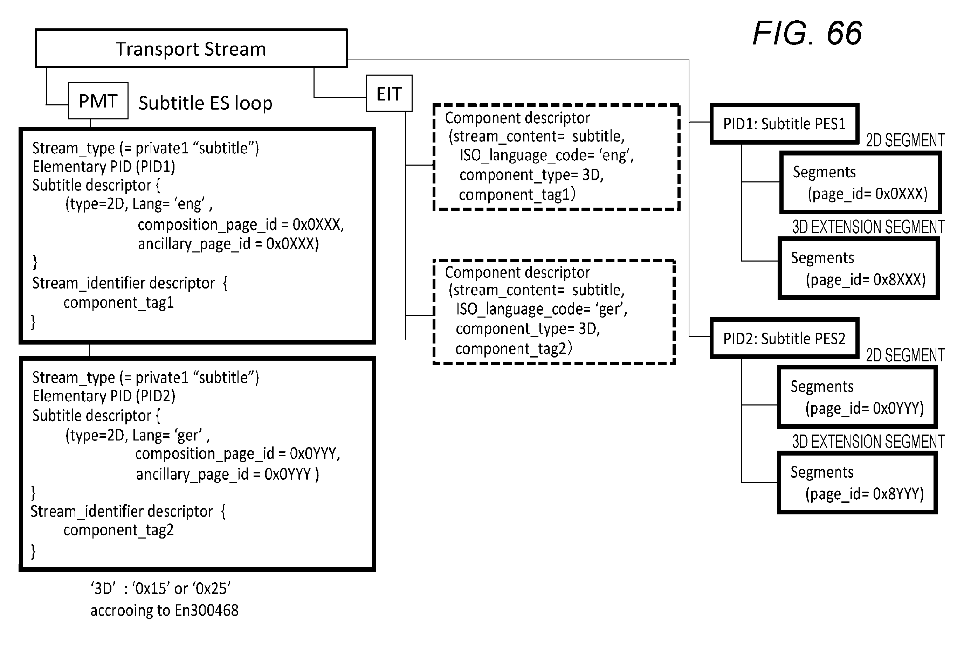

Fig. 66 illustrates an example of a configuration of the transport stream TS including the subtitle data streams PID1 and PID2 of Fig. 65 described above. The transport stream TS includes a PES packet that is obtained by packetizing each elementary stream. In addition, in Fig. 66, the illustration of video and audio-related portions is omitted for simplicity of illustration.

In this configuration example, a PES packet "Subtitle PES1" of the subtitle data stream PID1 is included. The page ID "CP1=0x0XXX" is allocated to the respective segments of DDS, PCS, RCS, CDS, ODS, and EDS except the 3D_EX portion, that is, the 2D segment. Also, the page ID "CP1'=0x8XXX" is allocated to the 3D extension segment included in the 3D_EX portion. Accordingly, in the subtitle data stream PID1, the 2D segment and the 3D extension segment can be identified by the page IDs.

Also, in this configuration example, a PES packet "Subtitle PES2" of the subtitle data stream PID2 is included. The page ID "CP2=0x0YYY" is allocated to the respective segments of DDS, PCS, RCS, CDS, ODS, and EDS except the 3D_EX portion, that is, the 2D segment. Also, the page ID "CP2'=0x8YYY" is allocated to the 3D extension segment included in the 3D_EX portion. Accordingly, in the subtitle data stream PID2, the 2D segment and the 3D extension segment can be identified by the page IDs.

The transport stream TS includes a PMT (Program Map Table) as PSI (Program Specific Information). The PSI is information describing to which program each elementary stream included in the transport stream belongs. Also, the transport stream includes an EIT (Event Information Table) as SI (Serviced Information) for performing management on each event. The EIT describes metadata for each program.

The PMT includes a subtitle elementary loop having information related to the subtitle data stream. Information such as a packet identifier (PID) of the subtitle data stream is disposed in the subtitle elementary loop. In addition, a descriptor describing the information related to the subtitle data stream is also disposed in the subtitle elementary loop.

A subtitle descriptor (Subtitling_Descriptor) corresponding to the subtitle data stream PID1 is present as the descriptor. The subtitle descriptor describes an ISO language code (ISO_639_language_code), a subtitling type (subtitling_type), and a composition page ID (composition_page_id) in association with the 2D segment. The value (0x0XXX) of the page ID allocated to the 2D segment is equal to the value (0x0XXX) of the composition page ID.

Also, the subtitling type (subtitling_type) corresponding to the 2D segment is a value representing a 2D subtitle, for example, "0x14" or "0x24" (see "component_type" in Fig. 15). In addition, the ISO language code corresponding to the 2D segment is set to represent the language of a subtitle (caption). In the illustrated example, the ISO language code is set to "eng" representing English. Also, the subtitle descriptor does not describe the composition page ID or the like corresponding to the 3D extension segment.

A subtitle descriptor (Subtitling_Descriptor) corresponding to the subtitle data stream PID2 is present as the descriptor. The subtitle descriptor describes an ISO language code (ISO_639_language_code), a subtitling type (subtitling_type), and a composition page ID (composition_page_id) in association with the 2D segment. The value (0x0YYY) of the page ID allocated to the 2D segment is equal to the value (0x0YYY) of the composition page ID.

Also, the subtitling type (subtitling_type) corresponding to the 2D segment is a value representing a 2D subtitle, for example, "0x14" or "0x24" (see "component_type" in Fig. 15). In addition, the ISO language code corresponding to the 2D segment is set to represent the language of a subtitle (caption). In the illustrated example, the ISO language code is set to "ger" representing German. Also, the subtitle descriptor does not describe the composition page ID or the like corresponding to the 3D extension segment.

When the transport stream TS includes the subtitle data streams according to a multiple language as described above, the receiving apparatus extracts and decodes the subtitle data stream according to the language service selected by the user or automatically selected. In this case, as described in the example of the single language service described above (see Figs. 63 and 64), predetermined effects can be achieved in the legacy 2D-compatible receiving apparatus and the 3D-compatible receiving apparatus.

[Identification of 3D Extension Segment by Ancillary Page ID (2PES)]

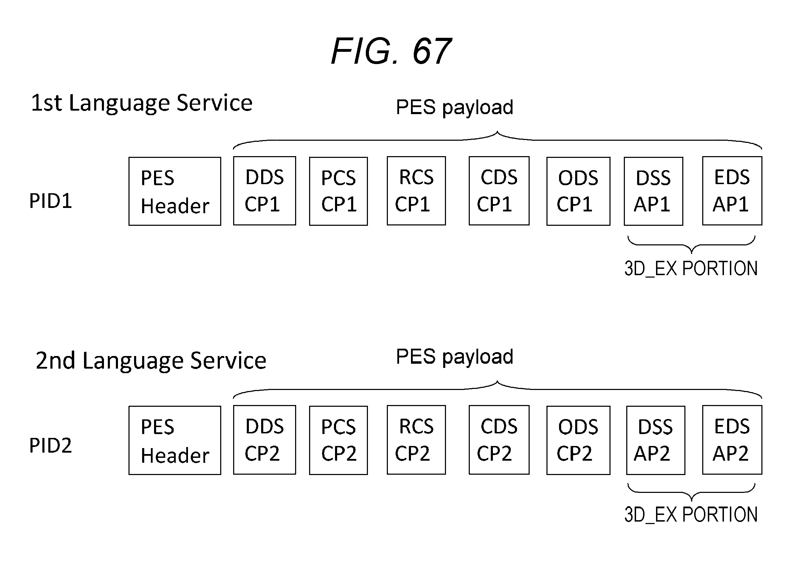

Fig. 67 illustrates yet another example of a configuration of the subtitle data stream included in the transport stream TS. In this example, there are two language services that are a first language service of English "eng" and a second language service of German "ger". In this configuration example, the transport stream TS includes a subtitle data stream PID1 corresponding to the first language service and a subtitle data stream PID2 corresponding to the second language service.

That is, in the subtitle data stream PID1, a PES header is disposed at the beginning, followed by a PES payload including the respective segments of DDS, PCS, RCS, CDS, and ODS and the 3D_EX portion. The 3D_EX portion includes the respective segments of DSS and EDS (3D extension segments). Herein, the page ID (= CP1) allocated to the 2D segment is set to be different from the page ID (= AP1) allocated to the 3D extension segment. Since the page ID allocated to the 2D segment and the page ID allocated to the 3D extension segment are set to be different from each other, the 2D segment and the 3D extension segment are indicated as being separate services and thus can be identified. Herein, the 2D segment is operated as the composition page, and the 3D segment is operated as the ancillary page.

Also, in the subtitle data stream PID2, a PES header is disposed at the beginning, followed by a PES payload including the respective segments of DDS, PCS, RCS, CDS, and ODS and the 3D_EX portion. The 3D_EX portion includes the respective segments of DSS and EDS (3D extension segments). Herein, the page ID (= CP2) allocated to the 2D segment is set to be different from the page ID (= AP2) allocated to the 3D extension segment. Since the page ID allocated to the 2D segment and the page ID allocated to the 3D extension segment are set to be different from each other, the 2D segment and the 3D extension segment are indicated as being separate services and thus can be identified. Herein, the 2D segment is operated as the composition page, and the 3D segment is operated as the ancillary page.

Also, in this example, two segments of DSS and EDS are included in the 3D_EX portion. However, a combination of segments included in the 3D_EX portion is not limited thereto. For example, the 3D_EX portion may include, for example, three segments of ODS, DSS, and EDS, or four segments of CDS, ODS, DSS, and EDS.

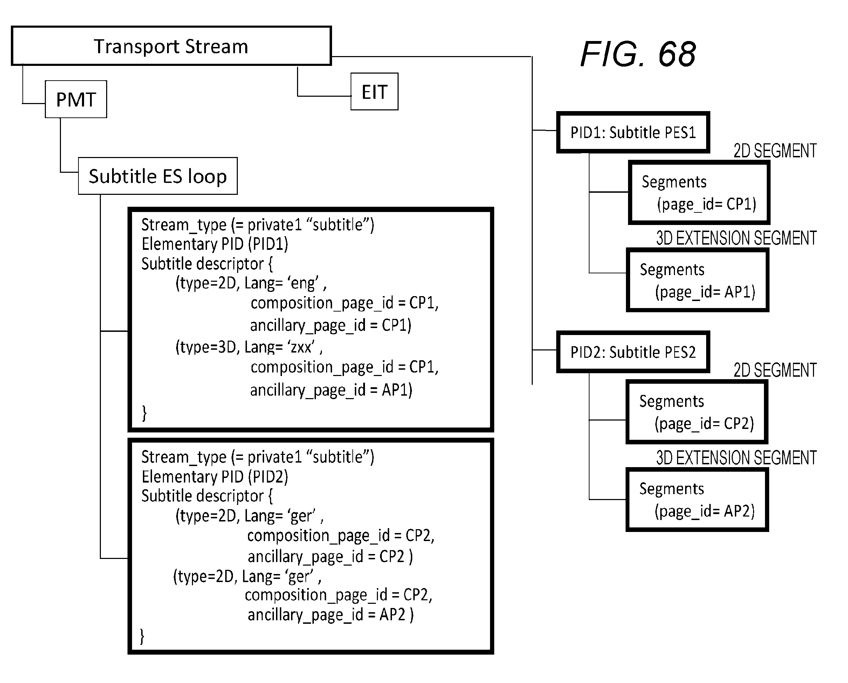

Fig. 68 illustrates an example of a configuration of the transport stream TS including the subtitle data streams PID1 and PID2 of Fig. 67 described above. The transport stream TS includes a PES packet that is obtained by packetizing each elementary stream. In addition, in Fig. 68, the illustration of video and audio-related portions is omitted for simplicity of illustration.

In this configuration example, a PES packet "Subtitle PES1" of the subtitle data stream PID1 is included. The page ID "CP1" is allocated to the respective segments of DDS, PCS, RCS, CDS, and ODS except the 3D_EX portion, that is, the 2D segment. Also, the page ID "AP1" is allocated to the 3D extension segment included in the 3D_EX portion. Accordingly, in the subtitle data stream PID1, the 2D segment and the 3D extension segment can be identified by the page IDs.

Also, in this configuration example, a PES packet "Subtitle PES2" of the subtitle data stream PID2 is included. The page ID "CP2" is allocated to the respective segments of DDS, PCS, RCS, CDS, and ODS except the 3D_EX portion, that is, the 2D segment. Also, the page ID "AP2" is allocated to the 3D extension segment included in the 3D_EX portion. Accordingly, in the subtitle data stream PID2, the 2D segment and the 3D extension segment can be identified by the page IDs.

The PMT includes a subtitle elementary loop having information related to the subtitle data stream. Information such as a packet identifier (PID) of the subtitle data stream is disposed in the subtitle elementary loop. In addition, a descriptor describing the information related to the subtitle data stream is also disposed in the subtitle elementary loop.

A subtitle descriptor (Subtitling_Descriptor) corresponding to the subtitle data stream PID1 is present as the descriptor. In the subtitle descriptor, the composition page ID "composition_page_id" and the ancillary page ID "ancillary_page_id" are set in the following manner.

That is, the composition page ID and the ancillary page ID are set to the same value "CP1" in association with the 2D segment. Accordingly, the 2D segment is operated as the composition page, and the page ID allocated to the 2D segment is set to the same value "CP1" as the composition page ID. On the other hand, the composition page ID and the ancillary page ID are set to different values in association with the 3D extension segment. That is, the composition page ID is set to "CP1'", and the ancillary page ID is set to "AP1". Accordingly, the 3D extension segment is operated as the ancillary page, and the page ID allocated to the 3D extension segment is set to the same value "AP1" as the ancillary page ID.

A subtitle descriptor (Subtitling_Descriptor) corresponding to the subtitle data stream PID2 is present as the descriptor. In the subtitle descriptor, the composition page ID "composition_page_id" and the ancillary page ID "ancillary_page_id" are set in the following manner.

That is, the composition page ID and the ancillary page ID are set to the same value "CP2" in association with the 2D segment. Accordingly, the 2D segment is operated as the composition page, and the page ID allocated to the 2D segment is set to the same value "CP2" as the composition page ID. On the other hand, the composition page ID and the ancillary page ID are set to different values in association with the 3D extension segment. That is, the composition page ID is set to "CP2'", and the ancillary page ID is set to "AP2". Accordingly, the 3D extension segment is operated as the ancillary page, and the page ID allocated to the 3D extension segment is set to the same value "AP2" as the ancillary page ID.

When the subtitle data streams PID1 and PID2 are configured as illustrated in Fig. 67 and the corresponding subtitle descriptor describes the composition page ID, the ancillary page ID or the like as illustrated in Fig. 68, the following effects are achieved.

That is, based on the composition page ID described in the subtitle descriptor, the legacy 2D-compatible receiving apparatus can read and decode only the 2D segment from the subtitle data streams PID1 and PID2 to obtain the subtitle data. That is, the legacy 2D-compatible receiving apparatus can skip the 3D extension segment included in the subtitle data streams PID1 and PID2. Accordingly, the reception processing of the legacy 2D-compatible receiving apparatus can be prevented from being interrupted by the transmission of the 3D extension segment including the disparity information.

Also, based on the composition page ID and the ancillary page ID described in the subtitle descriptor, the 3D-compatible receiving apparatus can read and decode both the 2D segment and the 3D extension segment from the subtitle data streams PID1 and PID2 to efficiently obtain the subtitle data and the disparity information. That is, the 3D-compatible receiving apparatus can know the page ID of the 2D segment from the composition page ID described in the subtitle descriptor, and can read the 2D segment from the subtitle data stream. In addition, the 3D-compatible receiving apparatus can know the page ID of the 3D extension segment from the ancillary page ID described in the subtitle descriptor, and can read the 3D extension segment from the subtitle data stream.

Also, in the configuration example illustrated in Figs. 67 and 68, an example of the two-language service as one of the multiple language services has been illustrated. Although not described in detail, the same configuration can also be applied in the case of a single language service (see the subtitle data stream PID1 or the subtitle data stream PID2 portion in Figs. 67 and 68).

[Identification of 3D Extension Segment by Ancillary Page ID (1PES)]

In the configuration example of Figs. 67 and 68, the transport stream TS includes a subtitle data stream PID1 corresponding to the first language service and a subtitle data stream PID2 corresponding to the second language service. However, it can also be considered that the respective segments corresponding to the two-language service are included in one subtitle data stream.

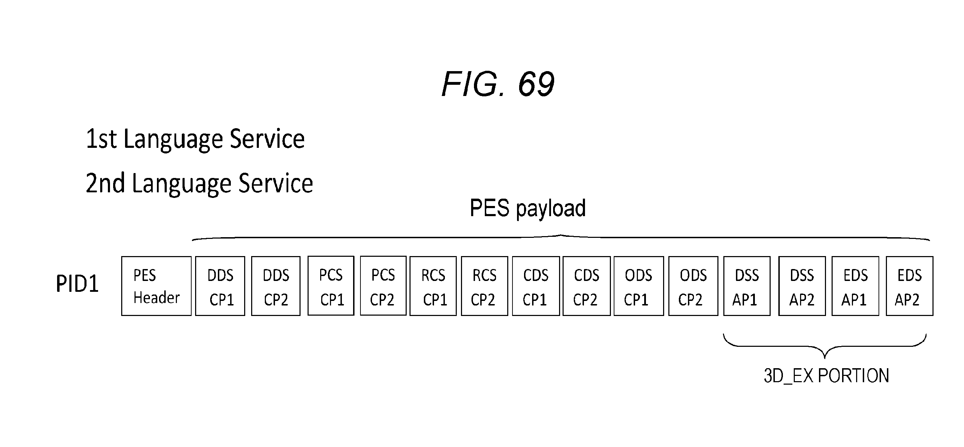

Fig. 69 illustrates an example of a configuration of the subtitle data stream included in the transport stream TS in this case. As in the example illustrated in Fig. 67, in this example, there are two language services that are a first language service of English "eng" and a second language service of German "ger". In this configuration example, the transport stream TS includes one subtitle data stream PID1.

That is, in the subtitle data stream PID1, a PES header is disposed at the beginning, followed by a PES payload including the respective segments (2D segments) of DDS, PCS, RCS, CDS, and ODS and the 3D_EX portion. The 3D_EX portion includes the respective segments of DDS and EDS (3D extension segments).

In this case, each of the respective segments constituting the 2D segment is two in number. For example, among the two subsequent segments, the first one is a segment according to a first language service and the subsequent one is a segment according to a second language service. Also, each of the respective segments constituting the 3D extension segment is two in number. For example, among the two subsequent segments, the first one is a segment according to a first language service and the subsequent one is a segment according to a second language service.

Herein, the page ID (= CP1) allocated to the 2D segment according to the first language service is set to be different from the page ID (= AP1) allocated to the 3D extension segment according to the first language service. Since the page ID allocated to the 2D segment and the page ID allocated to the 3D extension segment are set to be different from each other, the 2D segment and the 3D extension segment are indicated as being separate services and thus can be identified. Herein, the 2D segment is operated as the composition page, and the 3D segment is operated as the ancillary page.

Likewise, the page ID (= CP2) allocated to the 2D segment according to the second language service is set to be different from the page ID (= AP2) allocated to the 3D extension segment according to the second language service. Since the page ID allocated to the 2D segment and the page ID allocated to the 3D extension segment are set to be different from each other, the 2D segment and the 3D extension segment are indicated as being separate services and thus can be identified. Herein, the 2D segment is operated as the composition page, and the 3D segment is operated as the ancillary page.

Also, in this example, two segments of DSS and EDS are included in the 3D_EX portion. However, a combination of segments included in the 3D_EX portion is not limited thereto. For example, the 3D_EX portion may include, for example, three segments of ODS, DSS, and EDS, or four segments of CDS, ODS, DSS, and EDS.

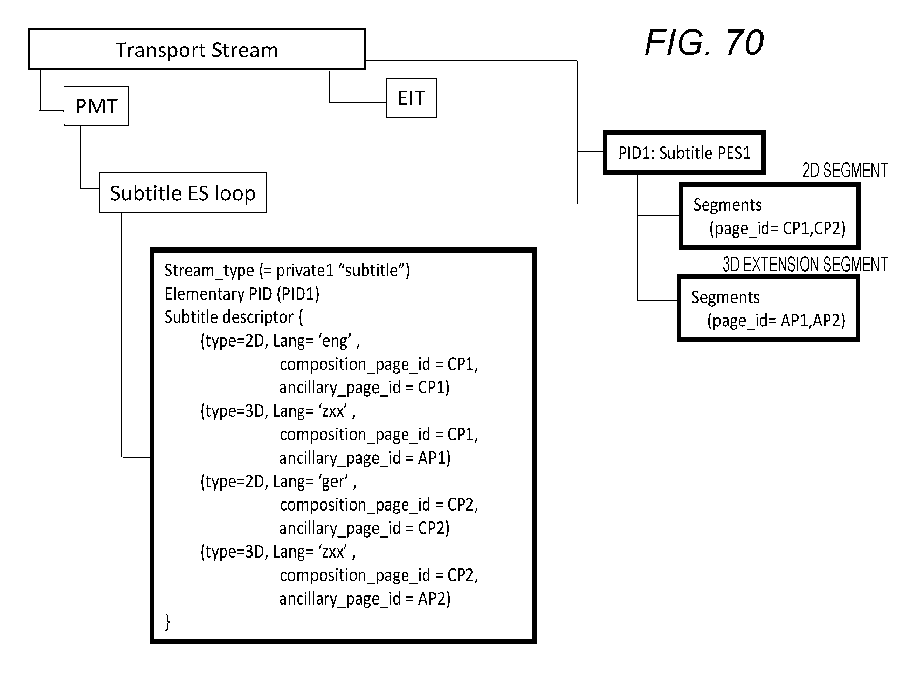

Fig. 70 illustrates an example of a configuration of the transport stream TS including the subtitle data stream PID1 of Fig. 69 described above. The transport stream TS includes a PES packet that is obtained by packetizing each elementary stream. In addition, in Fig. 70, the illustration of video and audio-related portions is omitted for simplicity of illustration.

In this configuration example, a PES packet "Subtitle PES1" of the subtitle data stream PID1 is included. The page ID "CP1" is allocated to the respective segments of DDS, PCS, RCS, CDS, and ODS except the 3D_EX portion according to the first language service, that is, the 2D segment. Also, the page ID "AP1" is allocated to the 3D extension segment included in the 3D_EX portion according to the first language service. Likewise, the page ID "CP2" is allocated to the respective segments of DDS, PCS, RCS, CDS, and ODS except the 3D_EX portion according to the second language service, that is, the 2D segment. Also, the page ID "AP2" is allocated to the 3D extension segment included in the 3D_EX portion according to the second language service.

Accordingly, in the subtitle data stream PID1, the respective segments according to the first language service and the respective segments according to the second language service can be identified by the page IDs. Also, in the subtitle data stream PID1, the 2D segment and the 3D extension segment according to the first language service can be identified by the page IDs. Also, in the subtitle data stream PID1, the 2D segment and the 3D extension segment according to the second language service can be identified by the page IDs.

The PMT includes a subtitle elementary loop having information related to the subtitle data stream. Information such as a packet identifier (PID) of the subtitle data stream is disposed in the subtitle elementary loop. In addition, a descriptor describing the information related to the subtitle data stream is also disposed in the subtitle elementary loop.

In the subtitle descriptor corresponding to the subtitle data stream PID1, the composition page ID "composition_page_id" and the ancillary page ID "ancillary_page_id" are set in association with the respective segments of the first language service in the following manner. That is, the composition page ID and the ancillary page ID are set to the same value "CP1" in association with the 2D segment. On the other hand, the composition page ID and the ancillary page ID are set to different values in association with the 3D extension segment. That is, the composition page ID is set to "CP1', and the ancillary page ID is set to "AP1".

Likewise, in the subtitle descriptor corresponding to the subtitle data stream PID1, the composition page ID "composition_page_id" and the ancillary page ID "ancillary_page_id" are set in association with the respective segments of the second language service in the following manner. That is, the composition page ID and the ancillary page ID are set to the same value "CP2" in association with the 2D segment. On the other hand, the composition page ID and the ancillary page ID are set to different values in association with the 3D extension segment. That is, the composition page ID is set to "CP2', and the ancillary page ID is set to "AP2".

As described above in Figs. 67 and 68, when the subtitle data stream PID1 is configured as illustrated in Fig. 69 and the corresponding subtitle descriptor describes the composition page ID, the ancillary page ID or the like as illustrated in Fig. 70, predetermined effects are achieved in the legacy 2D-compatible receiving apparatus and the 3D-compatible receiving apparatus.

[Identification of 3D Extension Segment (Sharing) by Ancillary Page ID (1PES)]

In the configuration example of the subtitle data stream illustrated in Fig. 69 described above, the case where the 3D extension segment coexists in the respective language services has been illustrated. However, it can also be considered that the 3D extension segment is shared between the language services.

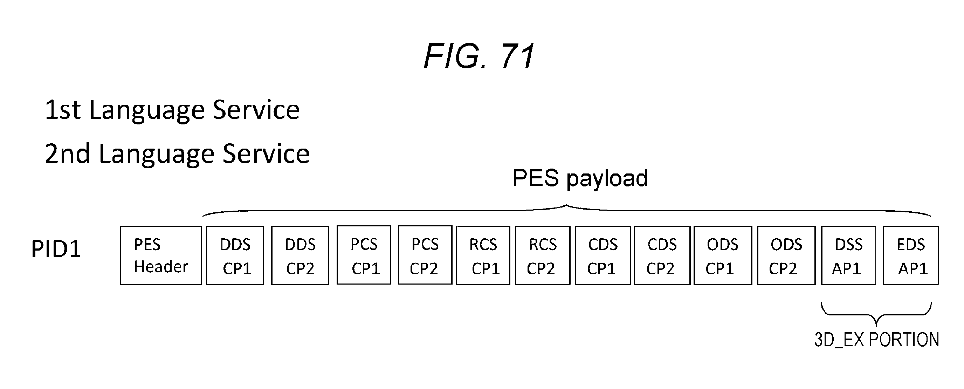

Fig. 71 illustrates an example of a configuration of the subtitle data stream included in the transport stream TS in the case where the 3D extension segment is shared. As in the example illustrated in Fig. 69, in this example, there are two language services that are a first language service of English "eng" and a second language service of German "ger". In this configuration example, the transport stream TS includes one subtitle data stream PID1.

That is, in the subtitle data stream PID1, a PES header is disposed at the beginning, followed by a PES payload including the respective segments (2D segments) of DDS, PCS, RCS, CDS, and ODS and the 3D_EX portion. The 3D_EX portion includes the respective segments of DSS and EDS (3D extension segments).

In this case, each of the respective segments constituting the 2D segment is two in number. For example, among the two subsequent segments, the first one is a segment according to a first language service and the subsequent one is a segment according to a second language service. Also, each of the respective segments constituting the 3D extension segment is only one in number because it is shared between the respective language services.

Herein, the page ID (= CP1) allocated to the 2D segment according to the first language service is set to be different from the page ID (= AP1) allocated to the 3D extension segment. Likewise, the page ID (= CP2) allocated to the 2D segment according to the second language service is set to be different from the page ID (= AP1) allocated to the 3D extension segment. Herein, the 2D segment of each language service is operated as the composition page, and the 3D segment shared is operated as the ancillary page.

Also, in this example, two segments of DSS and EDS are included in the 3D_EX portion. However, a combination of segments included in the 3D_EX portion is not limited thereto. For example, the 3D_EX portion may include, for example, three segments of ODS, DSS, and EDS, or four segments of CDS, ODS, DSS, and EDS.

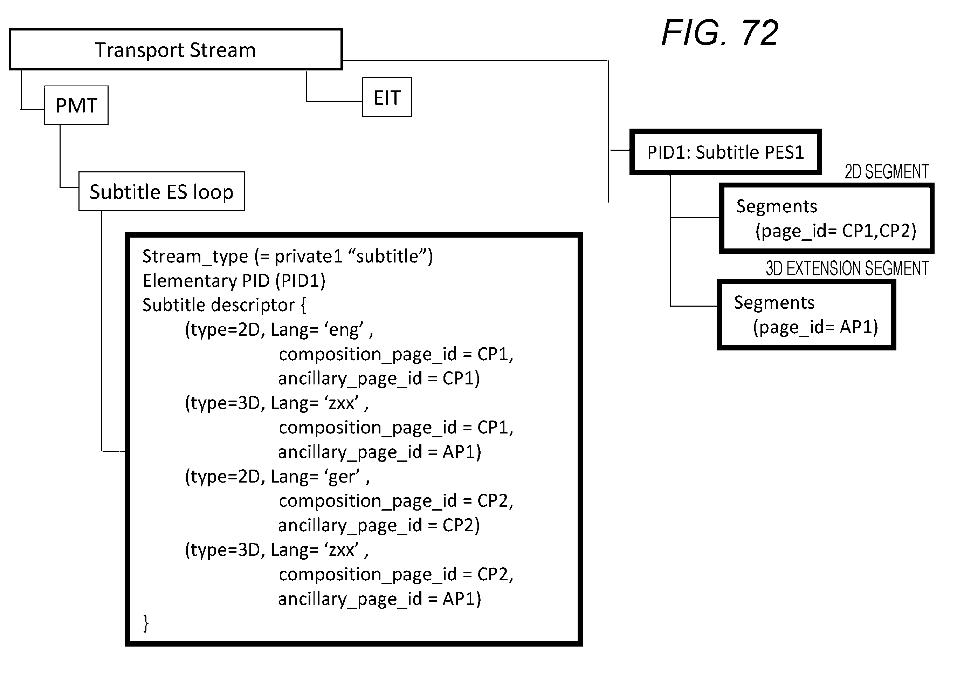

Fig. 72 illustrates an example of a configuration of the transport stream TS including the subtitle data stream PID1 of Fig. 71 described above. The transport stream TS includes a PES packet that is obtained by packetizing each elementary stream. In addition, in Fig. 72, the illustration of video and audio-related portions is omitted for simplicity of illustration.

In this configuration example, a PES packet "Subtitle PES1" of the subtitle data stream PID1 is included. The page ID "CP1" is allocated to the respective segments of DDS, PCS, RCS, CDS, and ODS except the 3D_EX portion according to the first language service, that is, the 2D segment. Also, the page ID "CP2" is allocated to the respective segments of DDS, PCS, RCS, CDS, and ODS except the 3D_EX portion according to the second language service, that is, the 2D segment. Also, the page ID "AP1" is allocated to the 3D extension segment included in the 3D_EX portion shared.

Accordingly, in the subtitle data stream PID1, the respective segments according to the first language service and the respective segments according to the second language service can be identified by the page IDs. Also, in the subtitle data stream PID1, the 2D segment and the 3D extension segment according to the first language service can be identified by the page IDs. Also, in the subtitle data stream PID1, the 2D segment and the 3D extension segment according to the second language service can be identified by the page IDs.

The PMT includes a subtitle elementary loop having information related to the subtitle data stream. Information such as a packet identifier (PID) of the subtitle data stream is disposed in the subtitle elementary loop. In addition, a descriptor describing the information related to the subtitle data stream is also disposed in the subtitle elementary loop.

In the subtitle descriptor corresponding to the subtitle data stream PID1, the composition page ID "composition_page_id" and the ancillary page ID "ancillary_page_id" are set in association with the respective segments of the first language service in the following manner. That is, the composition page ID and the ancillary page ID are set to the same value "CP1" in association with the 2D segment. On the other hand, the composition page ID and the ancillary page ID are set to different values in association with the 3D extension segment. That is, the composition page ID is set to "CP1', and the ancillary page ID is set to "AP1".

Likewise, in the subtitle descriptor corresponding to the subtitle data stream PID1, the composition page ID "composition_page_id" and the ancillary page ID "ancillary_page_id" are set in association with the respective segments of the second language service in the following manner. That is, the composition page ID and the ancillary page ID are set to the same value "CP2" in association with the 2D segment. On the other hand, the composition page ID and the ancillary page ID are set to different values in association with the 3D extension segment. That is, the composition page ID is set to "CP2', and the ancillary page ID is set to "AP1".

As described above in Figs. 67 and 68, when the subtitle data stream PID1 is configured as illustrated in Fig. 71 and the corresponding subtitle descriptor describes the composition page ID, the ancillary page ID or the like as illustrated in Fig. 72, predetermined effects are achieved in the legacy 2D-compatible receiving apparatus and the 3D-compatible receiving apparatus.

In addition, Fig. 43 illustrates that the set-top box 200 is provided with the antenna input terminal 203 connected to the digital tuner 204. However, a set-top box receiving an RF signal transmitted through a cable may also be configured in the same manner. In this case, a cable terminal is provided instead of the antenna terminal 203.

Also, a set-top box, to which the internet and a home network are connected directly or through a router, may also be configured in the same manner. In this case, the above-described transport stream TS is transmitted from the internet and the home network to the set-top box directly or through the router.

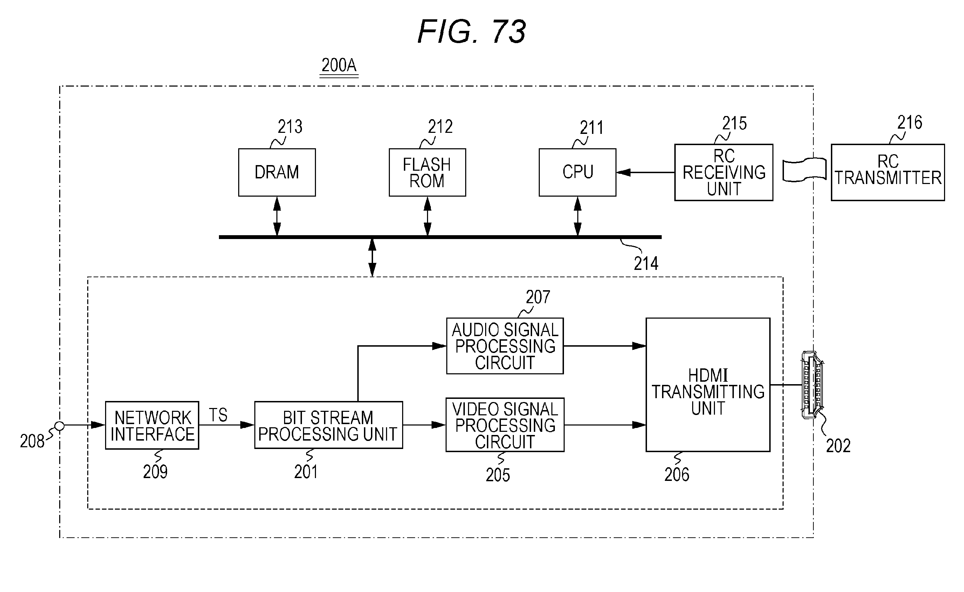

Fig. 73 illustrates an example of the configuration of a set-top box 200A in that case. In Fig. 73, the units corresponding to those of Fig. 43 are denoted by like reference numerals. The set-top box 200A includes a network terminal 208 connected to a network interface 209. A transport stream TS is output from the network interface 209 and then supplied to the bit stream processing unit 201. Although not described in detail, the other units of the set-top box 200A have the same configurations and operations as the corresponding units of the set-top box 200 illustrated in Fig. 43.

Also, Fig. 46 illustrates that the television receiver 300 is provided with the antenna input terminal 304 connected to the digital tuner 204. However, a television receiver receiving an RF signal transmitted through a cable may also be configured in the same manner. In this case, a cable terminal is provided instead of the antenna terminal 304.

Also, a television receiver, to which the internet and a home network are connected directly or through a router, may also be configured in the same manner. In this case, the above-described transport stream TS is transmitted from the Internet and the home network to the television receiver directly or through the router.

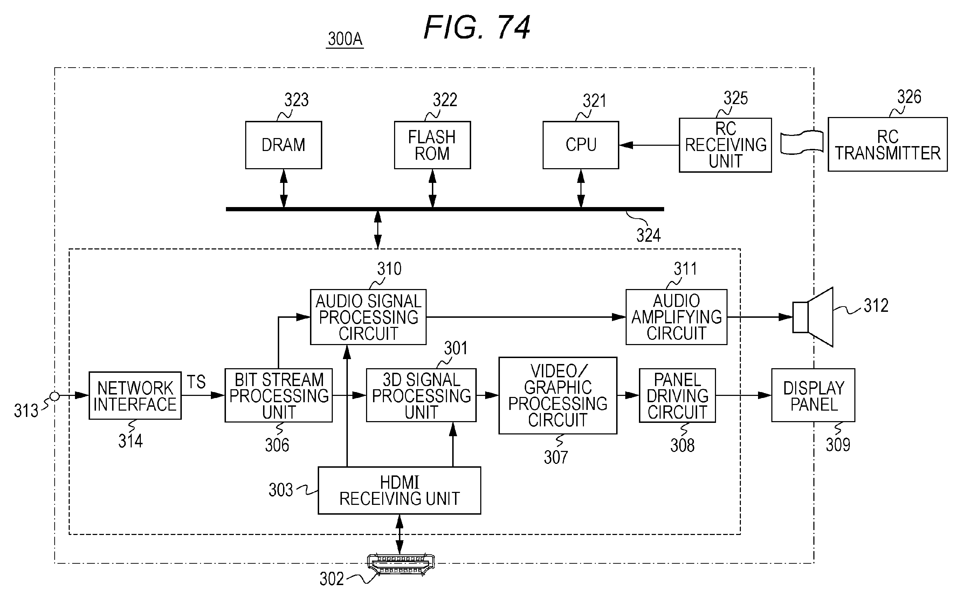

Fig. 74 illustrates an example of the configuration of a television receiver 300A in that case. In Fig. 74, the units corresponding to those of Fig. 46 are denoted by like reference numerals. The television receiver 300A includes a network terminal 313 connected to a network interface 314. A transport stream TS is output from the network interface 314 and then supplied to the bit stream processing unit 306. Although not described in detail, the other units of the television receiver 300A have the same configurations and operations as the corresponding units of the television receiver 300 illustrated in Fig. 46.

Also, in the above-described embodiment, the image transmitting/receiving system 10 is illustrated as including the broadcasting station 100, the set-top box 200, and the television receiver 300. However, as illustrated in Fig. 46, the television receiver 300 includes the bit stream processing unit 306 that functions in the same way as the bit stream processing unit 201 in the set-top box 200. Therefore, as illustrated in Fig. 75, an image transmitting/receiving system 10A may be designed to include the broadcasting station 100 and the television receiver 300.

Also, in the above-described embodiment, the set-top box 200 and the television receiver 300 are illustrated as being connected through an HDMI digital interface. However, the present technology can be similarly applied even when the set-top box 200 and the television receiver 300 are connected through any other digital interface (including a wireless interface as well as a wired interface) that is equivalent to the HDMI digital interface.

Also, in the above-described embodiment, the subtitle (caption) is treated as the superimposition information. However, the present technology can be similarly applied even when other types of information such as graphics information and text information are treated as the superimposition information, and even when those divided into an elementary stream and an additional stream and encoded so as to be output in an associated manner are treated in relation to an audio stream.

Also, the present technology may have the following configurations.

(1) A transmitting apparatus including:

an image data output unit configured to output left-eye image data and right-eye image data constituting a stereoscopic image;
a superimposition information data output unit configured to output superimposition information data to be superimposed on an image by the left-eye image data and the right-eye image data;
a disparity information output unit configured to output disparity information for providing a disparity by shifting the superimposition information to be superimposed on the image by the left-eye image data and the right-eye image data; and
a data transmitting unit configured to transmit a multiplexed data stream including a video data stream including the image data and a private data stream including the superimposition information data and the disparity information,

wherein service identification information indicating a separate service is added to each of the superimposition information data and the disparity information in the private data stream.

(2) The transmitting apparatus according to the (1), wherein

the first service identification information added to the superimposition information data and the second service identification information added to the disparity information have a unique relation therebetween, a descriptor corresponding to the private data stream is inserted into the multiplexed data stream, and the descriptor describes identification information corresponding to the first service identification information and does not describe identification information corresponding to the second service identification information.

(3) The transmitting apparatus according to the (2), wherein

the superimposition information data is DVB subtitle data, the descriptor is a subtitle descriptor, and the identification information corresponding to the first service identification information is a composition page ID.

(4) The transmitting apparatus according to the (1), wherein

a descriptor corresponding to the private data stream is inserted into the multiplexed data stream, and the descriptor describes first identification information corresponding to the first service identification information added to the superimposition information data, and describes second identification information corresponding to the second service identification information added to the disparity information, in distinction from the first identification information.

(5) The transmitting apparatus according to the (4), wherein

the superimposition information data is DVB subtitle data, the descriptor is a subtitle descriptor, and the first identification information is a composition page ID and the second identification information is an ancillary page ID.

(6) The transmitting apparatus according to the (4), wherein

the superimposition information data is DVB subtitle data, the descriptor is a subtitle descriptor, and the first identification information and the second identification information are composition page IDs.

(7) The transmitting apparatus according to any one of the (1) and (4) to (6), wherein

a descriptor corresponding to the private data stream is inserted into the multiplexed data stream, and the descriptor describes first type information indicating that information type of the superimposition information data is a first type in association with first service identification information added to the superimposition information data in the private data stream, and describes type information indicating that information type of the disparity information is a second type different from the first type, in association with second service identification information added to the disparity information in the private data stream.

(8) The transmitting apparatus according to any one of the (1) and (4) to (7), wherein

a descriptor corresponding to the private data stream is inserted into the multiplexed data stream, and the descriptor describes first language information indicating a predetermined language in association with first service identification information added to the superimposition information data in the private data stream, and describes second language information indicating a non-language in association with second service identification information added to the disparity information in the private data stream.

(9) The transmitting apparatus according to any one of the (1) to (8), wherein

the superimposition information data is DVB subtitle data,

a first page ID is allocated as the service identification information to a first segment including the superimposition information data in the private data stream, and

a second page ID is allocated as the service identification information to a second segment including the disparity information in the private data stream.

(10) The transmitting apparatus according to the (9), wherein a value of the second page ID is equal to a value of the first page ID plus a predetermined value.

(11) The transmitting apparatus according to the (9) or (10), wherein

a subtitle descriptor corresponding to the private data stream is inserted into the multiplexed data stream, and the subtitle descriptor describes first subtitle type information indicating a first type in association with the first page ID, and describes second subtitle type information indicating a second type different from the first type in association with the second page ID.

(12) The transmitting apparatus according to any one of the (9) to (11), wherein

a subtitle descriptor corresponding to the private data stream is inserted into the multiplexed data stream, and the subtitle descriptor describes first language information indicating a predetermined language in association with the first page ID, and describes second language information indicating a non-language in association with the second page ID.

(13) The transmitting apparatus according to any one of the (1) to (12), wherein the multiplexed data stream includes a plurality of the private data streams including the disparity information and the superimposition information data corresponding to a single language service.

(14) The transmitting apparatus according to any one of the (1) to (12), wherein the multiplexed data stream includes a private data stream including the disparity information and the superimposition information data corresponding respectively to a plurality of language services.

(15) The transmitting apparatus according to the (14), wherein the disparity information corresponding to the plurality of language services is shared.

(16) The transmitting apparatus according to the (15), wherein

the superimposition information data is DVB subtitle data, and

the disparity information corresponding to the plurality of language services is operated as an ancillary page.

(17) A transmitting method including the steps of:

outputting left-eye image data and right-eye image data constituting a stereoscopic image;

outputting superimposition information data to be superimposed on an image by the left-eye image data and the right-eye image data;

outputting disparity information for providing a disparity by shifting the superimposition information to be superimposed on the image by the left-eye image data and the right-eye image data; and

transmitting a multiplexed data stream including a video data stream including the image data and a private data stream including the superimposition information data and the disparity information,

wherein service identification information representing a separate service is added to each of the superimposition information data and the disparity information in the private data stream.

(18) A receiving apparatus including:

a data receiving unit configured to receive a multiplexed data stream including a video data stream including left-eye image data and right-eye image data constituting a stereoscopic image, and a private data stream including superimposition information data to be superimposed on an image by the left-eye image data and the right-eye image data and disparity information for providing a disparity by shifting the superimposition information to be superimposed on the image by the left-eye image data and the right-eye image data;

a first decoding unit configured to extract the video data stream from the multiplexed data stream and decode the video data stream extracted; and

a second decoding unit configured to extract the private data stream from the multiplexed data stream and decode the private data stream extracted,

wherein service identification information indicating a separate service is added to each of the superimposition information data and the disparity information in the private data stream, and

the second decoding unit acquires the superimposition information data or the superimposition information data and the disparity information from the private data stream based on the service identification information.

(19) The receiving apparatus according to the (18), wherein

a descriptor corresponding to the private data stream is inserted into the multiplexed data stream,

the descriptor describes first type information indicating that information type of the superimposition information data is a first type in association with first service identification information added to the superimposition information data in the private data stream, and describes type information indicating that information type of the disparity information is a second type different from the first type, in association with second service identification information added to the disparity information in the private data stream, and

the second decoding unit acquires the superimposition information data or the superimposition information data and the disparity information from the private data stream based on the type information in addition to the service identification information.

(20) The receiving apparatus according to the (18) or (19), wherein

a descriptor corresponding to the private data stream is inserted into the multiplexed data stream,

the descriptor describes first language information indicating a predetermined language in association with first service identification information added to the superimposition information data in the private data stream, and describes second language information indicating a non-language in association with second service identification information added to the disparity information in the private data stream, and

the second decoding unit acquires the superimposition information data or the superimposition information data and the disparity information from the private data stream based on the language information in addition to the service identification information.

(21) A receiving apparatus including:

a data receiving unit configured to receive a multiplexed data stream including a video data stream including left-eye image data and right-eye image data constituting a stereoscopic image, and a private data stream including superimposition information data to be superimposed on an image by the left-eye image data and the right-eye image data and disparity information for providing a disparity by shifting the superimposition information to be superimposed on the image by the left-eye image data and the right-eye image data;

a first decoding unit configured to extract the video data stream from the multiplexed data stream and decode the video data stream extracted; and

a second decoding unit configured to extract the private data stream from the multiplexed data stream and decode the private data stream extracted,

wherein service identification information indicating a separate service is added to each of the superimposition information data and the disparity information in the private data stream,

the first service identification information added to the superimposition information data and the second service identification information added to the disparity information have a unique relation therebetween,

a descriptor corresponding to the private data stream is inserted into the multiplexed data stream,

the descriptor describes identification information corresponding to the first service identification information and does not describe identification information corresponding to the second service identification information, and

the second decoding unit acquires the superimposition information data and the disparity information from the private data stream based on the unique relation and the identification information corresponding to the first service identification information described in the descriptor.

The main feature of the present technology is to allocate the respective corresponding page IDs to the 2D segments (DDS, PCS, RCS, CDS, ODS, EDS, and the like) and the 3D extension segment (DSS and the like), thereby enabling the transmission of these segments by only one PES stream while maintaining the 2D compatibility (see Figs. 11 and 19). Also, between multiple language services, the page IDs corresponding to the respective segments are allocated, thereby maintaining the compatibility (see Figs. 47 and 50).

Also, the 2D segments and the 3D extension segment are set to have a unique relation therebetween, and the subtitle descriptor is set to describe only the composition page ID added to the 2D segments, so that the reception processing of the legacy 2D-compatible receiving apparatus and the 3D-compatible receiving apparatus can be appropriately performed (see Figs. 63 and 64). Also, the 2D segment is operated as the composition page, and the 3D extension segment is operated as the ancillary page, so that the reception processing of the legacy 2D-compatible receiving apparatus and the 3D-compatible receiving apparatus can be appropriately performed (see Figs. 67 and 68).

REFERENCE SIGNS LIST

| 10, 10A | Image transmitting/receiving system |
| 100 | Broadcasting station |
| 111 | Data extracting unit |
| 112 | Video encoder |
| 113 | Audio encoder |
| 114 | Subtitle generating unit |
| 115 | Disparity information creating unit |
| 116 | Subtitle processing unit |
| 118 | Subtitle encoder |
| 119 | Multiplexer |
| 200, 200A | Set-top box (STB) |
| 201 | Video stream processing unit |
| 202 | HDMI terminal |
| 203 | Antenna terminal |
| 204 | Digital tuner |
| 205 | Video signal processing circuit |
| 206 | HDMI transmitting unit |
| 207 | Audio signal processing circuit |
| 208 | Network terminal |
| 209 | Network interface |
| 211 | CPU |
| 215 | Remote control receiving unit |
| 216 | Remote control transmitting unit |
| 221 | Demultiplexer |
| 222 | Video decoder |

| 223 | Encoded data buffer |
| 224 | Subtitle decoder |
| 225 | Pixel buffer |
| 226 | Disparity information interpolating unit |
| 227 | Position control unit |
| 228 | Video superimposing unit |
| 229 | Audio decoder |
| 300, 300A | Television receiver (TV) |
| 301 | 3D signal processing unit |
| 302 | HDMI terminal |
| 303 | HDMI receiving unit |
| 304 | Antenna terminal |
| 305 | Digital tuner |
| 306 | Video stream processing unit |
| 307 | Video/graphic processing circuit |
| 308 | Panel driving circuit |
| 309 | Display panel |
| 310 | Audio signal processing circuit |
| 311 | Audio amplifying circuit |
| 312 | Speaker |

**Claims**

1. A transmitting apparatus comprising:

an image data output unit configured to output left-eye image data and right-eye image data constituting a stereoscopic image;
a superimposition information data output unit configured to output superimposition information data to be superimposed on an image by the left-eye image data and the right-eye image data;
a disparity information output unit configured to output disparity information for providing a disparity by shifting the superimposition information to be superimposed on the image by the left-eye image data and the right-eye image data; and
a data transmitting unit configured to transmit a multiplexed data stream including a video data stream including the image data and a private data stream including the superimposition information data and the disparity information,
wherein service identification information indicating a separate service is added to each of the superimposition information data and the disparity information in the private data stream.

**2.** The transmitting apparatus according to claim 1, wherein
the first service identification information added to the superimposition information data and the second service identification information added to the disparity information have a unique relation therebetween,
a descriptor corresponding to the private data stream is inserted into the multiplexed data stream, and
the descriptor describes identification information corresponding to the first service identification information and does not describe identification information corresponding to the second service identification information.

**3.** The transmitting apparatus according to claim 2, wherein
the superimposition information data is DVB subtitle data,
the descriptor is a subtitle descriptor, and
the identification information corresponding to the first service identification information is a composition page ID.

**4.** The transmitting apparatus according to claim 1, wherein
a descriptor corresponding to the private data stream is inserted into the multiplexed data stream, and
the descriptor describes first identification information corresponding to the first service identification information added to the superimposition information data, and describes second identification information corresponding to the second service identification information added to the disparity information, in distinction from the first identification information.

**5.** The transmitting apparatus according to claim 4,
wherein
the superimposition information data is DVB subtitle data,
the descriptor is a subtitle descriptor, and
the first identification information is a composition page ID and the second identification information is an ancillary page ID.

**6.** The transmitting apparatus according to claim 4,
wherein
the superimposition information data is DVB subtitle data,
the descriptor is a subtitle descriptor, and
the first identification information and the second identification information are composition page IDs.

**7.** The transmitting apparatus according to claim 1,
wherein
a descriptor corresponding to the private data stream is inserted into the multiplexed data stream, and
the descriptor describes first type information indicating that information type of the superimposition information data is a first type in association with first service identification information added to the superimposition information data in the private data stream, and describes type information indicating that information type of the disparity information is a second type different from the first type, in association with second service identification information added to the disparity information in the private data stream.

**8.** The transmitting apparatus according to claim 1,
wherein
a descriptor corresponding to the private data stream is inserted into the multiplexed data stream, and
the descriptor describes first language information indicating a predetermined language in association with first service identification information added to the superimposition information data in the private data stream, and describes second language information indicating a non-language in association with second service identification information added to the disparity information in the private data stream.

**9.** The transmitting apparatus according to claim 1,
wherein
the superimposition information data is DVB subtitle data,
a first page ID is allocated as the service identification information to a first segment including the superimposition information data in the private data stream, and
a second page ID is allocated as the service identification information to a second segment including the disparity information in the private data stream.

**10.** The transmitting apparatus according to claim 9,

wherein a value of the second page ID is equal to a value of the first page ID plus a predetermined value.

11. The transmitting apparatus according to claim 9,
wherein
a subtitle descriptor corresponding to the private data stream is inserted into the multiplexed data stream, and
the subtitle descriptor describes first subtitle type information indicating a first type in association with the first page ID, and describes second subtitle type information indicating a second type different from the first type in association with the second page ID.

12. The transmitting apparatus according to claim 9,
wherein
a subtitle descriptor corresponding to the private data stream is inserted into the multiplexed data stream, and
the subtitle descriptor describes first language information indicating a predetermined language in association with the first page ID, and describes second language information indicating a non-language in association with the second page ID.

13. The transmitting apparatus according to claim 1,
wherein the multiplexed data stream includes a plurality of the private data streams including the disparity information and the superimposition information data corresponding to a single language service.

14. The transmitting apparatus according to claim 1,
wherein the multiplexed data stream includes a private data stream including the disparity information and the superimposition information data corresponding respectively to a plurality of language services.

15. The transmitting apparatus according to claim 14,
wherein the disparity information corresponding to the plurality of language services is shared.

16. The transmitting apparatus according to claim 15,
wherein
the superimposition information data is DVB subtitle data, and
the disparity information corresponding to the plurality of language services is operated as an ancillary page.

17. A transmitting method comprising the steps of:

outputting left-eye image data and right-eye image data constituting a stereoscopic image;
outputting superimposition information data to be superimposed on an image by the left-eye image data and the right-eye image data;
outputting disparity information for providing a disparity by shifting the superimposition information to be superimposed on the image by the left-eye image data and the right-eye image data; and
transmitting a multiplexed data stream including a video data stream including the image data and a private data stream including the superimposition information data and the disparity information,
wherein service identification information representing a separate service is added to each of the superimposition information data and the disparity information in the private data stream.

18. A receiving apparatus comprising:

a data receiving unit configured to receive a multiplexed data stream including a video data stream including left-eye image data and right-eye image data constituting a stereoscopic image, and a private data stream including superimposition information data to be superimposed on an image by the left-eye image data and the right-eye image data and disparity information for providing a disparity by shifting the superimposition information to be superimposed on the image by the left-eye image data and the right-eye image data;
a first decoding unit configured to extract the video data stream from the multiplexed data stream and decode the video data stream extracted; and
a second decoding unit configured to extract the private data stream from the multiplexed data stream and decode the private data stream extracted,
wherein service identification information indicating a separate service is added to each of the superimposition information data and the disparity information in the private data stream, and
the second decoding unit acquires the superimposition information data or the superimposition information data and the disparity information from the private data stream based on the service identification information.

**19.** The receiving apparatus according to claim 18,
wherein
a descriptor corresponding to the private data stream is inserted into the multiplexed data stream,
the descriptor describes first type information indicating that information type of the superimposition information data is a first type in association with first service identification information added to the superimposition information data in the private data stream, and describes type information indicating that information type of the disparity information is a second type different from the first type, in association with second service identification information added to the disparity information in the private data stream, and
the second decoding unit acquires the superimposition information data or the superimposition information data and the disparity information from the private data stream based on the type information in addition to the service identification information.

**20.** The receiving apparatus according to claim 18,
wherein
a descriptor corresponding to the private data stream is inserted into the multiplexed data stream,
the descriptor describes first language information indicating a predetermined language in association with first service identification information added to the superimposition information data in the private data stream, and describes second language information indicating a non-language in association with second service identification information added to the disparity information in the private data stream, and
the second decoding unit extracts the superimposition information data or the superimposition information data and the disparity information from the private data stream based on the language information in addition to the service identification information.

**21.** A receiving apparatus comprising:

a data receiving unit configured to receive a multiplexed data stream including a video data stream including left-eye image data and right-eye image data constituting a stereoscopic image, and a private data stream including superimposition information data to be superimposed on an image by the left-eye image data and the right-eye image data and disparity information for providing a disparity by shifting the superimposition information to be superimposed on the image by the left-eye image data and the right-eye image data;
a first decoding unit configured to extract the video data stream from the multiplexed data stream and decode the video data stream extracted; and
a second decoding unit configured to extract the private data stream from the multiplexed data stream and decode the private data stream extracted,
wherein service identification information indicating a separate service is added to each of the superimposition information data and the disparity information in the private data stream,
the first service identification information added to the superimposition information data and the second service identification information added to the disparity information have a unique relation therebetween,
a descriptor corresponding to the private data stream is inserted into the multiplexed data stream,
the descriptor describes identification information corresponding to the first service identification information and does not describe identification information corresponding to the second service identification information, and
the second decoding unit acquires the superimposition information data and the disparity information from the private data stream based on the unique relation and the identification information corresponding to the first service identification information described in the descriptor.

## FIG. 1

<u>10</u>

| BROADCASTING STATION | | STB | | | TV |
|---|---|---|---|---|---|

110

TRANSMISSION DATA GENERATING UNIT

TS →

201

BIT STREAM PROCESSING UNIT

400

202    302

301

3D SIGNAL PROCESSING UNIT

100

200

300

## FIG. 2

110: TRANSMISSION DATA GENERATING UNIT

# FIG. 3

EXAMPLE OF STEREOSCOPIC IMAGE DATA

L

R

1920×1080          1920×1080

# FIG. 4

"Top & Bottom" SCHEME

(a)

L

R

1920×1080i/p

"Side By Side" SCHEME

(b)

L     R

1920×1080i/p

"Frame Sequential" SCHEME
or "L/R NO interleaving" SCHEME

(c)

L          R

1920×1080i/p          1920×1080i/p

# FIG. 5

Block Bi          Block Bj

(xi'−xi,yi'−yi)

(xi,yi)

(xj,yj)

(xj'−xj,yj'−yj)

RIGHT-EYE IMAGE
(REFERENCE IMAGE)

LEFT-EYE IMAGE
(DETECTION IMAGE)

# FIG. 6

RIGHT-EYE IMAGE

LEFT-EYE IMAGE

R(x,y)    COMPARISON BLOCK

(xi,yi)

SEARCH RANGE

L(x,y)    Bi

# FIG. 7

DISPARITY VECTOR (FOR EACH PIXEL)

PICTURE

# FIG. 8

DISPARITY VECTOR (FOR EACH BLOCK)

# FIG. 9

DOWNSIZING PROCESSING

(a)

(b)

(c)

(d)

EP 2 621 177 A1

# FIG.10

SubRegion 1
Horizontal
Position
(x = SR1)

Region_
Starting
Position R0

(a)

DSS disparity assignment
To subregion

Region 0

SubRegion 2
Horizontal
Position
(x = SR2)

SubRegion 1
(disparity1)

SubRegion 2
(disparity2)

For Left view

Region_
Starting
Position R0

(b)

SubRegion 1
Horizontal
Position
(x = SR1 − disparity1)

SubRegion 2
Horizontal
Position
(x = SR2 − disparity2)

For Right view

Region_
Starting
Position
R0

(c)

SubRegion 1
Horizontal
Position
(x = SR1 + disparity1)

SubRegion 2
Horizontal
Position
(x = SR2 + disparity2)

EP 2 621 177 A1

# FIG. 11

PES payload

PID1 | PES Header | DDS | PCS | RCS | CDS | ODS | DSS | EDS |

page_id1        page_id2

# FIG. 12

Transport Stream

PMT

EIT

Subtitle ES loop

Stream_type (= private1 "subtitle")
Elementary PID (PID1)

Subtitling_descriptor
      (ISO_639_language_code=eng, subtitling_type=2D(0x14/0x24),
composition_page_id = page_id1, ancillary_page_id= page_id1)

      (ISO_639_language_code=zxx, subtitling_type=3D(0x15/0x25),
composition_page_id = page_id2, ancillary_page_id= page_id2)

(SUBTITLE DATA STREAM)

PID1: Subtitle PES1

DDS  PCS  RCS

CDS  ODS  DSS  EDS

Segments
      (page_id=page_id1,page_id2)

EP 2 621 177 A1

# FIG. 13

DVB subtitles page_composition_segment

| Syntax | No. of Bits | Format |
|---|---|---|
| page_composition_segment() { | | |
| sync_byte | 8 | bslbf |
| segment_type | 8 | bslbf |
| page_id | 16 | bslbf |
| segment_length | 16 | uimsbf |
| page_time_out | 8 | uimsbf |
| page_version_number | 4 | uimsbf |
| page_state | 2 | bslbf |
| reserved | 2 | bslbf |
| while (processed_length < segment_length) { | | |
| region_id | 8 | bslbf |
| reserved | 8 | bslbf |
| region_horizontal_address | 16 | uimsbf |
| region_vertical_address | 16 | uimsbf |
| } | | |
| } | | |

EP 2 621 177 A1

# FIG. 14

DVB subtitles segment_type

| DVB subtitles segment_type | Segment |
|---|---|
| 0x10 | page composition segment |
| 0x11 | region composition segment |
| 0x12 | CLUT definition segment |
| 0x13 | object data segment |
| 0x14 | display definition segment |
| **0x15 (*)** | **disparity signaling segment** |
| 0x41 - 0x7F | reserved for future use |
| 0x80 | end of display set segment |
| 0x81 – 0xEF | private data |
| 0xFF | stuffing (see note) |
| All other values | reserved for future use |

(*) Newly introduced

## FIG. 15

Stream_content

Component_type

Description

| 0x03 | 0x10 | DVB subtitles (normal) with no monitor aspect ratio criticality |
| 0x03 | 0x11 | DVB subtitles (normal) for display on 4:3 aspect ratio monitor |
| 0x03 | 0x12 | DVB subtitles (normal) for display on 16:9 aspect ratio monitor |
| 0x03 | 0x13 | DVB subtitles (normal) for display on 2.21:1 aspect ratio monitor |
| 0x03 | 0x14 | DVB subtitles (normal) for display on a high definition monitor |
| 0x03 | 0x15 | DVB subtitles (normal) for display on a 3D high definition monitor |
| | | |
| 0x03 | 0x20 | DVB subtitles (for the hard of hearing) with no monitor aspect ratio criticality |
| 0x03 | 0x21 | DVB subtitles (for the hard of hearing) for display on 4:3 aspect ratio monitor |
| 0x03 | 0x22 | DVB subtitles (for the hard of hearing) for display on 16:9 aspect ratio monitor |
| 0x03 | 0x23 | DVB subtitles (for the hard of hearing) for display on 2.21:1 aspect ratio monitor |
| 0x03 | 0x24 | DVB subtitles (for the hard of hearing) for display on a high definition monitor |
| 0x03 | 0x25 | DVB subtitles (for the hard of hearing) for display on a 3D high definition monitor |

EP 2 621 177 A1

## FIG. 16

Elementary PID1 (subtitling descriptor)

```
Subtitling_descriptor(){
        ISO_639_language_code          = 'eng'
        subtitling_type                = '0x14/0x24' (=2D)
        composition_page_id            = page_id1
        ancillary_page_id              = page_id1

        ISO_639_language_code          = 'zxx'
        subtitling_type                = '0x15/0x25 '(=3D)
        composition_page_id            = page_id2
        ancillary_page_id              = page_id2

}
```

Note : pa ge_id2 = page_id1 + predefined value

page_id1 and  page_id2 have a certain value difference


## FIG. 17

Elementary PID1 (subtitling descriptor)

```
Subtitling_descriptor(){
        ISO_639_language_code          = 'eng'
        subtitling_type                = '0x14/0x24' (=2D)
        composition_page_id            = page_id1
        ancillary_page_id              = page_id1

        ISO_639_language_code          = 'eng'
        subtitling_type                = '0x15/0x25 '(=3D)
        composition_page_id            = page_id2
        ancillary_page_id              = page_id2
}
```

Note : pa ge_id2 = page_id1 + predefined value

page_id1 and  page_id2 have a certain value difference

# FIG. 18

EXTRACTION OF ISO 639-2 Language Code

| | |
|---|---|
| "eng" | English |
| "ger" | German |
| "jpn" | Japanese |
| : | |
| "qaa" | |
| ≀ | Reserved for local use |
| "qtz" | |
| : | |
| 'mis' | uncoded language |
| 'und' | undetermined (language) |
| "zxx" | No linguistic content |

# FIG. 19

## Stream Configuration

Subtitle

composition Page_id = A1

Subtitling Type

Type 2D

Language Code

"eng"

2D

composition Page_id = A2

Type 3D

"zxx"

DSS

PID1

EP 2 621 177 A1

64

# FIG. 20

Syntax of subtitling_descriptor

```
subtitling_descriptor(){
          descriptor_tag                         8         uimsbf
          descriptor_length                      8         uimsbf
          for (i= 0;i<N;I++){
                    ISO_639_language_code         24        bslbf
                    subtitling_type               8         bslbf
                    composition_page_id           16        bslbf
                    ancillary_page_id             16        bslbf
          }
}
```

# FIG. 21

Disparity Temporal Update sequence in DSS

Interval Period = Vertex Time Distance

## FIG. 22

### Disparity Temporal Update sequence in DSS

Arbitrary Disparity Variant

EP 2 621 177 A1

*FIG. 23*

## FIG. 24

Disparity Temporal Update

Arbitrary Disparity Variant

## FIG. 25

Disparity Temporal Update

Division_Period_n = Interval_Duration *(variable value)

# FIG. 26

Displaying subtitles

(EXAMPLE OF ONE page AREA + TWO region UNITS)

Region1
with subregion

Region2
with subregion

Area for
Page_default

EP 2 621 177 A1

FIG. 27

Disparity Temporal Update

(Example of disparity update applying to page_default+2 regions)

# FIG. 28

## Structure of disparity update sequence overview

```
Page layer
                - page_default_disparity
                - T0_0 : interval_count
                     disparity_page_update
                            :
                  T0_6 : interval_count
                     disparity_page_update
Region layer
                region1 (subregion1)
                - subregion_disparity_integer_part
                  subregion_disparity_fractional_part
                - T1_0 : interval_count
                        disparity_region_update_integer_part
                        disparity_region_update_fractional_part
                            :
                  T1_6 : interval_count
                           disparity_region_update_integer_part
                        disparity_region_update_fractional_part

                region2 (subregion1)
                - subregion_disparity_integer_part
                  subregion_disparity_fractional_part
                - T2_0 : interval_count
                        disparity_region_update_integer_part
                        disparity_region_update_fractional_part
                            :
                  T2_7 : interval_count
                           disparity_region_update_integer_part
                        disparity_region_update_fractional_part
```

# FIG. 29

DSS syntax (1)

| Syntax | Size | Type |
|---|---|---|
| disparity_signalling_segment() { | | |
|   sync_byte | 8 | bslbf |
|   segment_type | 8 | bslbf |
|   page_id | 16 | bslbf |
|   segment_length | 16 | uimbbf |
|   dss_version_number | 4 | uimbdf |
|   disparity_shift_update_sequence_page_flag | 1 | bslbf |
|   reserved | 3 | bslbf |
|   page_default_disparity_shift | 8 | tcimsbf |
|   if (disparity_shift_update_sequence_page_flag ==1) { | | |
|     disparity_shift_update_sequence() | | |
|   } | | |
|   while (processed_length<segment_length) { | | |
|     region_id | 8 | uimsbf |
|     disparity_shift_update_sequence_region_flag | 1 | bslbf |
|     reserved | 5 | bslbf |
|     number_of_subregions_minus_1 | 2 | Uimsdf |
| /* syntax continued to next page */ | | |

EP 2 621 177 A1

## FIG. 30

DSS syntax (2)

| Syntax | Size | Type |
|---|---|---|
| for (n=0; n<= number_of_subregions_minus_1; n++) { | | |
| if (number_of_subregions_minus_1 > 0) { | | |
| subregion_horizontal_position | 16 | uimsbf |
| subregion_width | 16 | uimsbf |
| } | | |
| subregion_disparity_shift_integer_part | 8 | tcimbsf |
| subregion_disparity_shift_fractional_part | 4 | uimbsf |
| reserved | 4 | uimbsf |
| if (disparity_shift_update_sequence_region_flag ==1) { | | |
| disparity_shift_update_sequence() | | |
| } | | |
| } | | |
| } | | |
| } | | |

EP 2 621 177 A1

# FIG. 31

DSS syntax (3)

| Syntax | Size | Type |
|---|---|---|
| disparity_shift_update_sequence() { | | |
|     disparity_shift_update_sequence_length | 8 | bslbf |
|     interval_duration[23..0] | 24 | uimsbf |
|     division_period_count | 8 | uimsbf |
|     for (i= 0; i< division_period_count; i ++) { | | |
|       interval_count | 8 | uimsbf |
|       disparity_shift_update_integer_part | 8 | tcimbsf |
|     } | | |
| } | | |

EP 2 621 177 A1

## FIG. 32

Semantics :
dss_version_number :

indicates the version of this disparity_signalling_segment.
The version number is incremented (modulo 16) if *any of the parameters*
*for this particular disparity_signalling_segment are modified.*

disparity_shift_update_sequence_page_flag :

if „1" then the disparity_shift_update_sequence immediately following is
to be applied to the page_default_disparity_shift.
If „0" then a disparity_shift_update_sequence for page_default_disparity_shift
is not included.

page_default_disparity_shift :

specifies the default disparity value which should be applied to all regions
within the page, and is indicated by a signed integer to range
between + 127 & -128 pixels.

processed_length :

the total number of bytes that have already been processed following
the segment_length field.

# FIG. 33

Semantics :

region_id :

    identifies the region to which the following subregion data refers.
Regions which have been declared in the display set but which are not
referenced in the while-loop shall adopt the page_default_disparity and
its associated disparity_update_sequence where present.

disparity_shift_update_sequence_region_flag :

    if „1" then a disparity_shift_update_sequence is included for all subregions
of this region.
If „0" then a disparity_shift_update_sequence for this region is not included.

number_of_subregions_minus_1 :

    the number of subregions minus one which apply to this region.
If number_of_subregions_minus_1 = 0 then the region has only one subregion
whose dimensions are the same as the region and the signalled disparity
therefore applies to the whole region.
If number_of_subregions_minus_1 > 0 then the subregions are spatially
enclosed by horizontally splitting the region.

subregion_horizontal_position :

    specifies the left-hand most pixel position of this subregion.

subregion_width :

    specifies the horizontal width of this subregion expressed in pixels.
The combination of subregion_horizontal_position and subregion_width
shall always fall within the declared extent of the region to which this refers.
The value of this field shall therefore be in the range 1..4095.

## FIG. 34

Semantics :
subregion_disparity_shift_integer_part :

  specifies the integer part of the disparity shift value which should be applied
  to all subtitle pixel data enclosed within this subregion.
  This allows the disparity to range between + 127 & -128 pixels.

subregion_disparity_shift_fractional_part :

  specifies the fractional part of the disparity shift value which should be applied
  to all subtitle pixel data enclosed within this subregion.
  When used as an extension of the integer part, this allows the signalled
  disparity shift to be defined to 1/16 pixel accuracy.

  Note that this fractional part is unsigned (0b0001 represents 1/16 pixel
  and 0b1111 represents 15/16 pixel) and should be combined with the integer part
  according to the sign of the integer part.

  Note : Any processing (either at the encoder or the decoder) which needs
  to implement only integer values of disparity shift shall ensure values are
  rounded "towards the viewer" (i.e. that positive values of disparity are rounded down
  and negative values rounded up).

disparity_shift_update_sequence_length :

  specifies the number of bytes contained in the disparity_shift_update_sequence
  which follows this field.

EP 2 621 177 A1

## FIG. 35

Semantics :

interval_duration :
>  specifies the unit of interval used to calculate the PTS for the disparity update
>  as a 24-bit field (in 90 kHz STC increments).
>  The value of interval_duration shall correspond to an exact multiple ($\geq 1$)
>  of frame periods. The maximum increment is just over 186 seconds

division_period_count :
>  specifies the number of unique disparity values ($\geq 1$) and hence the number
>  of time intervals within the following disparity_shift_update_sequence
>  „for" loop.

interval_count :
>  specifies the multiplier used to calculate the PTS for this disparity update
>  from the initial PTS value. The calculation for the PTS for this update is
>  PTSnew = PTSprevious + (interval_duration * interval_count)
>  where interval count $\geq 1$, where PTSnew increases with every iteration
>  of the loop and where the initial value of PTSprevious is the PTS signalled
>  in the PES header.

disparity_shift_update_integer_part :
>  specifies the integer part of the disparity update value which should
>  be applied to all subtitle pixel data enclosed within this page or this subregion.
>  This allows the disparity to excurse + 127 to -128 pixel.

## FIG. 36

BROADCAST RECEPTION CONCEPT (3D RECEPTION)

# FIG. 37

BROADCAST RECEPTION CONCEPT (LEGACY 2D RECEPTION)

EP 2 621 177 A1

# FIG. 38

Scope of 3D/2D Compatible Service 1

**Service Target: 3D, 2D receiver**

Video (3D)

SBS

Subtitle (2D)

"A B C"

Subtitle (3D)

Disparity information

**2D Receiver**

2D mode

A B C

**3D Receiver**

3D mode | 2D mode

L

A B C | A B C

D

R

A B C

# FIG. 39

Scope of 3D/2D Compatible Service 2

Service Target: 3D, 2D receiver

Video (3D)

MVC

Subtitle (2D)

"A B C"

Subtitle (3D)

Disparity information

2D Receiver

2D mode

A B C

3D Receiver

3D mode

L

A B C

D

R

A B C

2D mode

A B C

# FIG. 40

(a)

```
SDT
    service descriptor
        (service_type
            = 0x1C, 0x1D, 0x1E; frame compatible
                                    stereo scopic service)
```

(b)

```
EIT
    component descriptor
        (stream_content
            = 0x05; MPEG4-AVC video)
        (component_type
            = 0x80 ~ 0x83 ; frame compatible
                                side-by-side or top-bottom)
```

## FIG. 41

(a)

BACKGROUND

NEAR-VIEW OBJECT

**Image Popped Up !** ← CAPTION

(b)

BACKGROUND

NEAR-VIEW OBJECT

CAPTION

EP 2 621 177 A1

## FIG. 42

(a)

BACKGROUND

NEAR-VIEW OBJECT

**Image Popped Up !** ← CAPTION

LGI

RGI

(b) **Image Popped Up !** **Image Popped Up !**

(c) **Image Popped Up !!**

EP 2 621 177 A1

# FIG. 43

EP 2 621 177 A1

*FIG. 44*

201

## FIG. 45

201

TS → DEMULTIPLEXER (221) → VIDEO DECODER (222) → VIDEO SUPERIMPOSING UNIT (228) → Vout

DEMULTIPLEXER (221) → ENCODED DATA BUFFER (223) → SUBTITLE DECODER (224) → PIXEL BUFFER (225) → VIDEO SUPERIMPOSING UNIT (228)

DEMULTIPLEXER (221) → AUDIO DECODER (229) → Aout

EP 2 621 177 A1

## FIG. 46

EP 2 621 177 A1

## FIG. 47

PES payload

**PID1**

| PES Header | DDS | PCS | RCS | CDS | ODS | DSS | EDS |

page_id1_1          page_id1_2

PES payload

**PID2**

| PES Header | DDS | PCS | RCS | CDS | ODS | DSS | EDS |

page_id2_1          page_id2_2

EP 2 621 177 A1

## FIG. 48

```
┌─────────────────────────────────┐                          (SUBTITLE DATA STREAM)
│        Transport Stream          │
└─────────────────────────────────┘
   │          │                                    ┌──────────────────────┐   ┌─────┐┌─────┐┌─────┐
 ┌─────┐   ┌─────┐                                 │ PID1: Subtitle PES1  │   │ DDS ││ PCS ││ RCS │
 │ PMT │   │ EIT │                                 └──────────────────────┘   └─────┘└─────┘└─────┘
 └─────┘   └─────┘                                                            ┌─────┐┌─────┐┌─────┐┌─────┐
   │                                                                         │ CDS ││ ODS ││ DSS ││ EDS │
 ┌──────────────────────┐                                                    └─────┘└─────┘└─────┘└─────┘
 │   Subtitle ES loop   │                                  ┌──────────────────────────────────────┐
 └──────────────────────┘                                  │ Segments                             │
```

Stream_type (= private1 "subtitle")
Elementary PID (PID1)

Subtitling_descriptor
    (ISO_639_language_code=eng, subtitling_type=2D(0x14/0x24),
composition_page_id = page_id1_1, ancillary_page_id= page_id1_1)

    (ISO_639_language_code=zxx(or eng), subtitling_type=3D(0x15/0x25),
composition_page_id = page_id1_2, ancillary_page_id= page_id1_2)

**Segments** (page_id=page_id1_1,page_id1_2)

**PID2: Subtitle PES2** — DDS PCS RCS CDS ODS DSS EDS

Stream_type (= private1 "subtitle")
Elementary PID (PID2)

Subtitling_descriptor
    (ISO_639_language_code=ger, subtitling_type=2D(0x14/0x24),
composition_page_id = page_id2_1, ancillary_page_id= page_id2_1)

    (ISO_639_language_code=zxx(or ger), subtitling_type=3D(0x15/0x25),
composition_page_id = page_id2_2, ancillary_page_id= page_id2_2)

**Segments** (page_id=page_id2_1,page_id2_2)

EP 2 621 177 A1

# FIG. 49

Elementary PID1 (subtitling descriptor)

```
Subtitling_descriptor(){
        ISO_639_language_code        = 'eng'
        subtitling_type              = '0x14/0x24' (=2D)
        composition_page_id          = page_id1_1
        ancillary_page_id            = page_id1_1

        ISO_639_language_code        = 'zxx' (or 'eng')
        subtitling_type              = '0x15/0x25' (=3D)
        composition_page_id          = page_id1_2
        ancillary_page_id            = page_id1_2

}
```

Elementary PID2 (subtitling descriptor)

```
Subtitling_descriptor(){
        ISO_639_language_code        = 'ger'
        subtitling_type              = '0x14/0x24' (=2D)
        composition_page_id          = page_id2_1
        ancillary_page_id            = page_id2_1

        ISO_639_language_code        = 'zxx' (or 'ger')
        subtitling_type              = '0x15/0x25' (=3D)
        composition_page_id          = page_id2_2
        ancillary_page_id            = page_id2_2

}
```

# FIG. 50

Stream Configuration
(Dual language Service)

Subtitle

Subtitling Type — Language Code

composition Page_id = A1 — Type 2D — "eng" — 2D — 1st language Service

composition Page_id = A2 — Type 3D — "zxx" — DSS

PID1

composition Page_id = B1 — Type 2D — "ger" — 2D — 2nd language Service

composition Page_id = B2 — Type 3D — "zxx" — DSS

PID2

EP 2 621 177 A1

## FIG. 51

PES payload

PID1 | PES Header | DDS | PCS | RCS | CDS | ODS | DSS | EDS

page_id1_1        page_id_ancillary

PES payload

PID2 | PES Header | DDS | PCS | RCS | CDS | ODS | DSS | EDS

page_id2_1        page_id_ancillary

EP 2 621 177 A1

## FIG. 52

**Transport Stream**

- **PMT**
- **EIT**
- **Subtitle ES loop**

(SUBTITLE DATA STREAM)

**PID1: Subtitle PES1** — DDS | PCS | RCS / CDS | ODS | DSS | EDS

Segments
(page_id=page_id1_1,page_id_ancillary)

**PID2: Subtitle PES2** — DDS | PCS | RCS / CDS | ODS | DSS | EDS

Segments
(page_id=page_id2_1,page_id_ancillary)

Stream_type (= private1 "subtitle")
Elementary PID (PID1)

Subtitling_descriptor
 (ISO_639_language_code=eng, subtitling_type=2D(0x14/0x24),
composition_page_id = page_id1_1, ancillary_page_id= page_id1_1)

 (ISO_639_language_code=zxx(or eng), subtitling_type=3D(0x15/0x25),
composition_page_id = page_id1_2, ancillary_page_id= page_id_ancillary)

Stream_type (= private1 "subtitle")
Elementary PID (PID2)

Subtitling_descriptor
 (ISO_639_language_code=ger, subtitling_type=2D(0x14/0x24),
composition_page_id = page_id2_1, ancillary_page_id= page_id2_1)

 (ISO_639_language_code=zxx(or ger), subtitling_type=3D(0x15/0x25),
composition_page_id = page_id2_2, ancillary_page_id= page_id_ancillary)

EP 2 621 177 A1

# FIG. 53

## Elementary PID1 (subtitling descriptor)

```
Subtitling_descriptor(){
        ISO_639_language_code          = 'eng'
        subtitling_type                = '0x14/0x24' (=2D)
        composition_page_id            = page_id1_1
        ancillary_page_id              = page_id1_1

        ISO_639_language_code          = 'zxx' (or 'eng')
        subtitling_type                = '0x15/0x25 '(=3D)
        composition_page_id            = page_id1_2
        ancillary_page_id              = page_id_ancillary

}
```

## Elementary PID2 (subtitling descriptor)

```
Subtitling_descriptor(){
        ISO_639_language_code          = 'ger'
        subtitling_type                = '0x14/0x24' (=2D)
        composition_page_id            = page_id2_1
        ancillary_page_id              = page_id2_1

        ISO_639_language_code          = 'zxx' (or 'ger')
        subtitling_type                = '0x15/0x25' (=3D)
        composition_page_id            = page_id2_2
        ancillary_page_id              = page_id_ancillary

}
```

## FIG. 54

PES payload

PID1 | PES Header | DDS | DDS | PCS | PCS | RCS | RCS | CDS | CDS | ODS | ODS | DSS | DSS | EDS |

page_id1_1

page_id1_2

page_id2_1

page_id2_2

## FIG. 55

Transport Stream

(SUBTITLE DATA STREAM)

PMT

EIT

PID1: Subtitle PES1

DDS  DDS  PCS  PCS  RCS  RCS

CDS  CDS  ODS  ODS

DSS  DSS  EDS

Subtitle ES loop

Segments
(page_id=page_id1_1,page_id1_2,
page_id2_1,page_id2_2)

Stream_type (= private1 "subtitle")
Elementary PID (PID1)

Subtitling_descriptor
    (ISO_639_language_code=eng, subtitling_type=2D(0x14/0x24),
composition_page_id = page_id1_1, ancillary_page_id= page_id1_1)

    (ISO_639_language_code=zxx(or eng), subtitling_type=3D(0x15/0x25),
composition_page_id = page_id1_2, ancillary_page_id= page_id1_2)

    (ISO_639_language_code=ger, subtitling_type=2D(0x14/0x24),
composition_page_id = page_id2_1, ancillary_page_id= page_id2_1)

    (ISO_639_language_code=zxx(or ger), subtitling_type=3D(0x15/0x25),
composition_page_id = page_id2_2, ancillary_page_id= page_id2_2)

EP 2 621 177 A1

# FIG. 56

Elementary PID1 (subtitling descriptor)

```
Subtitling_descriptor(){

        ISO_639_language_code          = 'eng'
        subtitling_type                = ' 0x14/0x24 ' (=2D)
        composition_page_id            = page_id1_1
        ancillary_page_id              = page_id1_1

        ISO_639_language_code          = 'zxx' (or 'eng' )
        subtitling_type                = '0x15/0x25' (=3D)
        composition_page_id            = page_id1_2
        ancillary_page_id              = page_id1_2

        ISO_639_language_code          = 'ger'
        subtitling_type                = ' 0x14/0x24 ' (=2D)
        composition_page_id            = page_id2_1
        ancillary_page_id              = page_id2_1

        ISO_639_language_code          = 'zxx' (or 'ger' )
        subtitling_type                = '0x15/0x25 ' (=3D)
        composition_page_id            = page_id2_2
        ancillary_page_id              = page_id2_2

}
```

Note : page_id1_2 = page_id1_1 + predefined value

Note : page_id2_2 = page_id2_1 + predefined value

## FIG. 57

PES payload

PID1 | PES Header | DDS | DDS | PCS | PCS | RCS | RCS | CDS | CDS | ODS | ODS | DSS | EDS |

page_id1_1

page_id_ancillary

page_id2_1

# FIG. 58

**Transport Stream**

PMT

EIT

(SUBTITLE DATA STREAM)

PID1: Subtitle PES1 | DDS | DDS | PCS | PCS | RCS | RCS |
| CDS | CDS | ODS | ODS |
| DSS | EDS |

Subtitle ES loop

Segments
(page_id=page_id1_1,page_id_ansillary, page_id2_1)

Stream_type (= private1 "subtitle")
Elementary PID (PID1)

Subtitling_descriptor
   (ISO_639_language_code=eng, subtitling_type=2D(0x14/0x24),
composition_page_id = page_id1_1, ancillary_page_id= page_id1_1)

   (ISO_639_language_code=zxx(or eng), subtitling_type=3D(0x15/0x25),
composition_page_id = page_id1_1, ancillary_page_id= page_id_ancillary)

   (ISO_639_language_code=ger, subtitling_type=2D(0x14/0x24),
composition_page_id = page_id2_1, ancillary_page_id= page_id2_1)

   (ISO_639_language_code=zxx(or ger), subtitling_type=3D(0x15/0x25),
composition_page_id = page_id2_1, ancillary_page_id= page_id_ancillary)

## FIG. 59

Elementary PID1 (subtitling descriptor)

```
Subtitling_descriptor(){

    ISO_639_language_code           = 'eng'
    subtitling_type                 = '0x14/0x24 ' (=2D)
    composition_page_id             = page_id1_1
    ancillary_page_id               = page_id1_1

    ISO_639_language_code           = 'zxx' (or 'eng')
    subtitling_type                 = '0x15/0x25' (=3D)
    composition_page_id             = page_id1_1
    ancillary_page_id               = page_id_ancillary

    ISO_639_language_code           = 'ger'
    subtitling_type                 = '0x14/0x24' (=2D)
    composition_page_id             = page_id2_1
    ancillary_page_id               = page_id2_1

    ISO_639_language_code           = 'zxx' (or 'ger')
    subtitling_type                 = '0x15/0x25 ' (=3D)
    composition_page_id             = page_id2_1
    ancillary_page_id               = page_id_ancillary

}
```

## FIG. 60

PES payload

PID1 | PES Header | DDS | PCS | RCS | CDS | ODS | 3D_EX | EDS

page_id1          page_id2

## FIG. 61

**Transport Stream**

PMT

EIT

(SUBTITLE DATA STREAM)

PID1: Subtitle PES1

DDS | PCS | RCS
CDS | ODS | 3D-EX | EDS

Segments
(page_id=page_id1,page_id2)

Subtitle ES loop

Stream_type (= private1 "subtitle")
Elementary PID (PID1)

Subtitling_descriptor
    (ISO_639_language_code=eng, subtitling_type=2D(0x14/0x24),
composition_page_id = page_id1, ancillary_page_id= page_id1)

    (ISO_639_language_code=zxx(or eng), subtitling_type=3D(0x15/0x25),
composition_page_id = page_id2, ancillary_page_id= page_id2)

EP 2 621 177 A1

# FIG. 62

Stream Configuration

Subtitle

composition
Page_id = A1

Subtitling
Type

Type
2D

Language
Code

"eng"

2D

composition
Page_id = A2

Type
3D

"zxx"

3D_EX

PID1

EP 2 621 177 A1

# FIG. 63

PES payload

PID1

| PES Header | DDS CP1 | PCS CP1 | RCS CP1 | CDS CP1 | ODS CP1 | DDS CP1' | PCS CP1' | DSS CP1' | EDS CP1' | EDS CP1 |

3D_EX PORTION

## FIG. 64

Transport Stream

PMT

EIT

Component descriptor
(stream_content= subtitle,
ISO_language_code= 'eng',
component_type= 3D,
component_tag1)

PID1: Subtitle PES1

2D SEGMENT

Segments
(page_id= 0x0XXX)

3D EXTENSION SEGMENT

Segments
(page_id= 0x8XXX)

Subtitle ES loop

Stream_type (= private1 "subtitle")
Elementary PID (PID1)
Subtitle descriptor {
    (type=2D, ISO_language_code= 'eng',
        composition_page_id = 0x0XXX,
        ancillary_page_id = 0x0XXX)
}
Stream_identifier descriptor {
    component_tag1
}

'3D' : '0x15' or '0x25'
according to En300468

EP 2 621 177 A1

108

## FIG. 65

1st Language Service

PES payload

| PID1 | PES Header | DDS CP1 | PCS CP1 | RCS CP1 | CDS CP1 | ODS CP1 | DDS CP1′ | PCS CP1′ | DSS CP1′ | EDS CP1′ | EDS CP1 |
|---|---|---|---|---|---|---|---|---|---|---|---|

3D_EX PORTION

2nd Language Service

PES payload

| PID2 | PES Header | DDS CP2 | PCS CP2 | RCS CP2 | CDS CP2 | ODS CP2 | DDS CP2′ | PCS CP2′ | DSS CP2′ | EDS CP2′ | EDS CP2 |
|---|---|---|---|---|---|---|---|---|---|---|---|

3D_EX PORTION

EP 2 621 177 A1

# FIG. 66

| Transport Stream |
|---|

PMT | Subtitle ES loop

EIT

```
Stream_type (= private1 "subtitle")
Elementary PID (PID1)
Subtitle descriptor {
     (type=2D, Lang= 'eng' ,
              composition_page_id = 0x0XXX,
              ancillary_page_id = 0x0XXX)
}
Stream_identifier descriptor {
     component_tag1
}
```

```
Stream_type (= private1 "subtitle")
Elementary PID (PID2)
Subtitle descriptor {
     (type=2D, Lang= 'ger' ,
              composition_page_id = 0x0YYY,
              ancillary_page_id = 0x0YYY )
}
Stream_identifier descriptor {
     component_tag2
}
```

'3D' : '0x15' or '0x25'
accrooing to En300468

```
Component descriptor
(stream_content= subtitle,
   ISO_language_code= 'eng',
   component_type= 3D,
   component_tag1)
```

```
Component descriptor
(stream_content= subtitle,
   ISO_language_code= 'ger',
   component_type= 3D,
   component_tag2)
```

PID1: Subtitle PES1

2D SEGMENT

Segments
(page_id= 0x0XXX)

3D EXTENSION SEGMENT

Segments
(page_id= 0x8XXX)

PID2: Subtitle PES2

2D SEGMENT

Segments
(page_id= 0x0YYY)

3D EXTENSION SEGMENT

Segments
(page_id= 0x8YYY)

EP 2 621 177 A1

## FIG. 67

1st Language Service  PES payload

PID1 | PES Header | DDS CP1 | PCS CP1 | RCS CP1 | CDS CP1 | ODS CP1 | DSS AP1 | EDS AP1

3D_EX PORTION

2nd Language Service  PES payload

PID2 | PES Header | DDS CP2 | PCS CP2 | RCS CP2 | CDS CP2 | ODS CP2 | DSS AP2 | EDS AP2

3D_EX PORTION

EP 2 621 177 A1

FIG. 68

Transport Stream

PMT

EIT

Subtitle ES loop

Stream_type (= private1 "subtitle")
Elementary PID (PID1)
Subtitle descriptor {
    (type=2D, Lang= 'eng' ,
             composition_page_id = CP1,
             ancillary_page_id = CP1)
    (type=3D, Lang= 'zxx' ,
             composition_page_id = CP1,
             ancillary_page_id = AP1)

}

Stream_type (= private1 "subtitle")
Elementary PID (PID2)
Subtitle descriptor {
    (type=2D, Lang= 'ger' ,
             composition_page_id = CP2,
             ancillary_page_id = CP2 )
    (type=2D, Lang= 'ger' ,
             composition_page_id = CP2,
             ancillary_page_id = AP2 )

}

PID1: Subtitle PES1

2D SEGMENT

Segments
(page_id= CP1)

3D EXTENSION SEGMENT

Segments
(page_id= AP1)

PID2: Subtitle PES2

2D SEGMENT

Segments
(page_id= CP2)

3D EXTENSION SEGMENT

Segments
(page_id= AP2)

EP 2 621 177 A1

# FIG. 69

1st Language Service

2nd Language Service

PES payload

| PID1 | PES Header | DDS CP1 | DDS CP2 | PCS CP1 | PCS CP2 | RCS CP1 | RCS CP2 | CDS CP1 | CDS CP2 | ODS CP1 | ODS CP2 | DSS AP1 | DSS AP2 | EDS AP1 | EDS AP2 |
|------|-----------|---------|---------|---------|---------|---------|---------|---------|---------|---------|---------|---------|---------|---------|---------|

3D_EX PORTION

EP 2 621 177 A1

# FIG. 70

```
┌─────────────────────────────┐
│      Transport Stream       │
└─────────────────────────────┘

        ┌─────┐              ┌─────┐
        │ PMT │              │ EIT │
        └─────┘              └─────┘

        ┌──────────────────┐
        │ Subtitle ES loop │
        └──────────────────┘
```

Stream_type (= private1 "subtitle")
Elementary PID (PID1)
Subtitle descriptor {
    (type=2D, Lang= 'eng' ,
          composition_page_id = CP1,
          ancillary_page_id = CP1)
    (type=3D, Lang= 'zxx' ,
          composition_page_id = CP1,
          ancillary_page_id = AP1)
    (type=2D, Lang= 'ger' ,
          composition_page_id = CP2,
          ancillary_page_id = CP2)
    (type=3D, Lang= 'zxx' ,
          composition_page_id = CP2,
          ancillary_page_id = AP2)

}

```
                    ┌─────────────────────┐
                    │ PID1: Subtitle PES1 │
                    └─────────────────────┘

                              2D SEGMENT
                    ┌──────────────────────────┐
                    │ Segments                 │
                    │    (page_id= CP1,CP2)    │
                    └──────────────────────────┘

                           3D EXTENSION SEGMENT
                    ┌──────────────────────────┐
                    │ Segments                 │
                    │    (page_id= AP1,AP2)    │
                    └──────────────────────────┘
```

EP 2 621 177 A1

## FIG. 71

1st Language Service

2nd Language Service

| PID1 | PES Header | DDS CP1 | DDS CP2 | PCS CP1 | PCS CP2 | RCS CP1 | RCS CP2 | CDS CP1 | CDS CP2 | ODS CP1 | ODS CP2 | DSS AP1 | EDS AP1 |

PES payload

3D_EX PORTION

## FIG. 72

```
Transport Stream
```

```
PMT
```

```
EIT
```

```
Subtitle ES loop
```

```
Stream_type (= private1 "subtitle")
Elementary PID (PID1)
Subtitle descriptor {
        (type=2D, Lang= 'eng' ,
                    composition_page_id = CP1,
                    ancillary_page_id = CP1)
        (type=3D, Lang= 'zxx' ,
                    composition_page_id = CP1,
                    ancillary_page_id = AP1)
        (type=2D, Lang= 'ger' ,
                    composition_page_id = CP2,
                    ancillary_page_id = CP2)
        (type=3D, Lang= 'zxx' ,
                    composition_page_id = CP2,
                    ancillary_page_id = AP1)

}
```

```
PID1: Subtitle PES1
```

2D SEGMENT

```
Segments
(page_id= CP1,CP2)
```

3D EXTENSION SEGMENT

```
Segments
(page_id= AP1)
```

EP 2 621 177 A1

# FIG. 73

EP 2 621 177 A1

# FIG. 74

300A

| 323 DRAM | 322 FLASH ROM | 321 CPU | 325 RC RECEIVING UNIT | 326 RC TRANSMITTER |

324

310 AUDIO SIGNAL PROCESSING CIRCUIT

311 AUDIO AMPLIFYING CIRCUIT — 312

313 — NETWORK INTERFACE — TS — BIT STREAM PROCESSING UNIT — 3D SIGNAL PROCESSING UNIT (301) — VIDEO/ GRAPHIC PROCESSING CIRCUIT — PANEL DRIVING CIRCUIT — DISPLAY PANEL

314    306    307    308    309

303 — HDMI RECEIVING UNIT

302

EP 2 621 177 A1

# FIG. 75

10A

BROADCASTING STATION

110 ~ TRANSMISSION DATA GENERATING UNIT

100

TS →

TV

BIT STREAM PROCESSING UNIT → 3D SIGNAL PROCESSING UNIT

306

301

300

# FIG. 76

C

B(Lb,Rb)

SCREEN

Ra ← La   Lc → Rc

DPa   DPc

A

LEFT EYE   RIGHT EYE

<table>
<tr><td colspan="2" style="text-align:center"><strong>INTERNATIONAL SEARCH REPORT</strong></td><td>International application No.<br>PCT/JP2012/070863</td></tr>
</table>

| A. CLASSIFICATION OF SUBJECT MATTER |
|---|
| *H04N13/00*(2006.01)i, *H04N7/173*(2011.01)i |

According to International Patent Classification (IPC) or to both national classification and IPC

| B. FIELDS SEARCHED |
|---|

Minimum documentation searched (classification system followed by classification symbols)
H04N13/00, H04N7/173

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2011-30193 A  (Sony Corp.),<br>10 February 2011 (10.02.2011),<br>paragraphs [0037] to [0078], [0126] to [0176],<br>[0200] to [0275], [0322] to [0385]; fig. 1 to<br>12, 28 to 50, 62 to 84, 93 to 102<br>& US 2011/0134210 A1    & CN 102165784 A | 1-9,11-21<br>10 |
| A | WO 2011/001852 A1  (Sony Corp.),<br>06 January 2011 (06.01.2011),<br>entire text; all drawings<br>& US 2011/0134210 A1    & CN 102172034 A | 1-21 |
| A | JP 2011-30221 A  (Panasonic Corp.),<br>10 February 2011 (10.02.2011),<br>entire text; all drawings<br>& US 2011/0090305 A1    & CN 101933337 A | 1-21 |

☐ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>25 September, 2012 (25.09.12) | Date of mailing of the international search report<br>09 October, 2012 (09.10.12) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 621 177 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005006114 A